# EUROPEAN PATENT APPLICATION

(11) **EP 4 415 276 A1**
(43) Date of publication of application: **14.08.2024**
(21) Application number: 22889207.1
(22) Date of filing: 28.10.2022
(51) Int. Cl.: H04B 7/06, H04B 7/0413

(54) **ANTENNA CHANNEL DETECTION METHOD AND APPARATUS, AND STORAGE MEDIUM**

(30) Priority: 03.11.2021 CN 202111295867
(71) Applicant: Huawei Technologies Co., Ltd., Shenzhen, Guangdong 518129 (CN)
(72) Inventor: YU, Jian, Shenzhen, Guangdong 518129 (CN); RUAN, Wei, Shenzhen, Guangdong 518129 (CN); GAN, Ming, Shenzhen, Guangdong 518129 (CN)
(74) Representative: Maiwald GmbH
(86) International application number: PCT/CN2022/128386
(87) International publication number: WO 2023/078182

(57) **Abstract**

An antenna channel sounding method, an apparatus, and a storage medium are provided, to perform antenna selection in a large-scale antenna scenario. In this application, a first communication apparatus sends a first frame and a first PPDU to a second communication apparatus. The first frame includes first indication information for indicating the second communication apparatus to perform transmit antenna channel sounding. The first PPDU is an NDP. The first PPDU includes a first identifier field indicating an identifier of a first transmit antenna set. In this way, the second communication apparatus can determine a correspondence between a transmit antenna channel sounding result corresponding to a received PPDU and an identifier of a transmit antenna set, and can determine an identifier of a transmit antenna set selected based on one or more transmit antenna channel sounding results. This can prevent the second communication apparatus from incorrectly matching a selected transmit antenna channel sounding result with a transmit antenna set, and perform antenna selection based on the antenna channel sounding results in the large-scale antenna scenario.

## Description

### CROSS-REFERENCE TO RELATED APPLICATIONS

This application claims priority to Chinese Patent Application No. 202111295867.0, filed with the China National Intellectual Property Administration on November 3, 2021 and entitled "ANTENNA CHANNEL SOUNDING METHOD, APPARATUS, AND STORAGE MEDIUM", which is incorporated herein by reference in its entirety.

### TECHNICAL FIELD

This application relates to the communication field, and in particular, to an antenna channel sounding method, an apparatus, and a storage medium.

### BACKGROUND

A wireless local area network (wireless local area network, WLAN) evolves from 802.11a/b/g, 802.11n, and 802.11ac to 802.11ax. 802.11a/b/g supports only single spatial streams but does not support multiple-input and multiple-output (multiple-input multiple-output, MIMO). 802.11n supports MIMO with a maximum of four space-time streams. 802.11ac and 802.11ax support a maximum of eight space-time streams. A next generation standard 802.11be of 802.11ax is being discussed, and a maximum quantity of space-time streams is further increased to 16. For the space-time streams (space-time streams, STSs), both different spatial streams (spatial streams, SSs) and space-time block coding (space-time block coding, STBC) in a time dimension are considered. When the STBC is not used at a transmit end, the space-time streams may also be referred to as spatial streams. The 802.11be standard specifies that the STBC is not used, and therefore the space-time streams may be uniformly referred to as spatial streams.

To support a plurality of spatial streams, a device needs to include a plurality of radio frequency chains (radio frequency chains, RF chains). In some implementations, the device may be equipped with more antennas (or more accurately, antenna elements (antenna elements)) than radio frequency chains, and select an antenna set (or an antenna pattern (antenna pattern)) according to an antenna selection procedure to perform data transmission, thereby further improving transmission performance. For example, selecting an antenna pattern may reduce a quantity of conditions for equivalent channels at a transmit end and a receive end, improve the equivalent channels, increase transmitted spatial streams, and improve a throughput of a system.

In some antenna selection procedures, the device may perform antenna set selection based on antenna channel sounding results corresponding to different antenna sets (or antenna patterns (antenna patterns)). However, introducing more spatial streams means introducing more antennas, and the conventional technology is applicable to only the standard 802.11n, and supports an antenna selection procedure with a maximum of only four radio frequency chains, eight antennas, and 16 antenna sets. In addition, the 802.11be standard needs to introduce 16 spatial streams, and supports a maximum of 16 radio frequency chains. Further, a MIMO technology introduces more antennas. Therefore, how to make an antenna selection procedure applicable to a large scale of antennas becomes an urgent problem that needs to be resolved.

### SUMMARY

Embodiments of this application provide an antenna channel sounding method, an apparatus, and a storage medium, to perform antenna channel sounding, and are applicable to antenna channel sounding in a large-scale antenna scenario, so that antenna selection can be performed based on an antenna channel sounding result in the large-scale antenna scenario.

According to a first aspect, an embodiment of this application provides an antenna channel sounding method. In the method, a first communication apparatus sends a first frame to a second communication apparatus. The first frame includes first indication information. The first indication information indicates the second communication apparatus to perform transmit antenna channel sounding. The first communication apparatus sends a first physical layer protocol data unit (physical layer protocol data unit, PPDU) to the second communication apparatus. The first PPDU is used by the second communication apparatus to perform transmit antenna channel sounding. The first PPDU includes a first identifier field. The first identifier field indicates an identifier of a first transmit antenna set.

The first PPDU may include a data field, or the first PPDU may not include a data field. For example, the first PPDU may be an NDP that does not include the data field. Because the NDP does not include the data field, overheads can be reduced.

Further, in this application, because the NDP includes the first identifier field indicating the identifier of the first transmit antenna set, the second communication apparatus determines a correspondence between a transmit antenna channel sounding result corresponding to the NDP and an identifier of a transmit antenna set, and the second communication apparatus can determine an identifier of a transmit antenna set selected based on one or more transmit antenna channel sounding results. This can prevent the second communication apparatus from incorrectly matching a selected transmit antenna channel sounding result with a transmit antenna set, and perform antenna selection based on the antenna channel sounding results in a large-scale antenna scenario.

In a possible implementation, the first communication apparatus may send one or more PPDUs to the second communication apparatus. The first PPDU is one of the one or more PPDUs. The second communication apparatus may perform transmit antenna channel sounding based on the received one or more PPDUs, to obtain a transmit antenna channel sounding result. Further, the second communication apparatus may select a transmit antenna set based on the obtained transmit antenna channel sounding result, and indicate an identifier of the selected transmit antenna set to the first communication apparatus, so as to perform antenna selection based on the antenna channel sounding result in the large-scale antenna scenario. For example, the first communication apparatus receives a second frame from the second communication apparatus. The second frame includes a first antenna selection feedback result. The first antenna selection feedback result includes a third identifier field. The third identifier field may be used to carry the identifier of the transmit antenna set selected by the second communication apparatus. For example, if the transmit antenna set selected by the second communication apparatus is the first transmit antenna set, the third identifier field may indicate the identifier of the first transmit antenna set.

In a possible implementation, before a first communication apparatus sends a first frame to a second communication apparatus, the first communication apparatus receives a third frame including third indication information. The third indication information is used to request the first communication apparatus to send information for performing transmit antenna channel sounding. The third indication information is carried in a high-efficiency variant field of the third frame. Because there are a larger quantity of bits that are in the high-efficiency variant field and that are used to carry a related command of an antenna selection procedure, the solution provided in this application can support more PPDUs (for example, can support more than 16 PPDUs), and can support more antenna sets (can support more than 16 antenna sets). Therefore, antenna selection can be implemented based on the antenna channel sounding result in the large-scale antenna scenario.

In a possible implementation, the first communication apparatus and the second communication apparatus may perform negotiation. The second communication apparatus learns, through negotiation, a transmit antenna set supported by the first communication apparatus; and after negotiation, the first communication apparatus and the second communication apparatus set a group identifier for the transmit antenna set supported by the first communication apparatus. For example, before a first communication apparatus sends a first frame to a second communication apparatus, the first communication apparatus sends a fourth frame to the second communication apparatus. The fourth frame includes a fourth identifier field. The fourth identifier field indicates an identifier of at least one transmit antenna set supported by the first communication apparatus. The identifier of the at least one transmit antenna set includes the identifier of the first transmit antenna set.

Further, the first communication apparatus may further indicate, to the second communication apparatus, a transmit antenna set corresponding to an identifier of a transmit antenna set supported by the first communication apparatus. In this way, the first communication apparatus can learn a transmit antenna set identifier of each transmit antenna set, so that the transmit antenna set identifier is carried when a PPDU is sent. In addition, the second communication apparatus can determine, based on the identifier of the first transmit antenna set indicated by the first identifier field in the received first PPDU, antennas specifically included in the identifier of the first transmit antenna set. It can be learned that, the second communication apparatus may obtain more antenna set-related information through negotiation, and may subsequently obtain more link-related information, thereby further providing assistance for another subsequent procedure.

In a possible implementation, before a first communication apparatus sends a first frame to a second communication apparatus, the first communication apparatus sends a ninth frame to the second communication apparatus. The ninth frame includes seventh indication information. The seventh indication information indicates a total quantity of transmit antenna sets supported by the first communication apparatus. In this way, the second communication apparatus can estimate overheads and duration of the transmit antenna selection procedure based on the seventh indication information; and the second communication apparatus can further determine, based on the total quantity of transmit antenna sets supported by the first communication apparatus, whether to establish an association relationship with the first communication apparatus.

According to a second aspect, an embodiment of this application provides an antenna channel sounding method. In the method, a second communication apparatus receives a first frame from a first communication apparatus. The first frame includes first indication information. The first indication information indicates the second communication apparatus to perform transmit antenna channel sounding. The second communication apparatus receives a first physical layer protocol data unit PPDU from the first communication apparatus. The first PPDU is used by the second communication apparatus to perform transmit antenna channel sounding. The first PPDU includes a first identifier field. The first identifier field indicates an identifier of a first transmit antenna set.

The first PPDU may include a data field, or the first PPDU may not include a data field. For example, the first PPDU may be an NDP. Because the NDP does not include the data field, overheads can be reduced.

Further, in this application, because the NDP includes the first identifier field indicating the identifier of the first transmit antenna set, the second communication apparatus determines a correspondence between a transmit antenna channel sounding result corresponding to the NDP and an identifier of a transmit antenna set, and the second communication apparatus can determine an identifier of a transmit antenna set selected based on one or more transmit antenna channel sounding results. This can prevent the second communication apparatus from incorrectly matching a selected transmit antenna channel sounding result with a transmit antenna set, and perform antenna selection based on the antenna channel sounding results in a large-scale antenna scenario.

In a possible implementation, the first communication apparatus may send one or more PPDUs to the second communication apparatus. The first PPDU is one of the one or more PPDUs. The second communication apparatus may perform transmit antenna channel sounding based on the received one or more PPDUs, to obtain a transmit antenna channel sounding result. Further, the second communication apparatus may select a transmit antenna set based on the obtained transmit antenna channel sounding result, and indicate an identifier of the selected transmit antenna set to the first communication apparatus, so as to perform antenna selection based on the antenna channel sounding result in a large-scale antenna scenario. For example, the second communication apparatus sends a second frame to the first communication apparatus. The second frame includes a first antenna selection feedback result. The first antenna selection feedback result includes a third identifier field. The third identifier field may be used to carry the identifier of the transmit antenna set selected by the second communication apparatus. For example, if the transmit antenna set selected by the second communication apparatus is the first transmit antenna set, the third identifier field may indicate the identifier of the first transmit antenna set.

In a possible implementation, before a second communication apparatus receives a first frame, the second communication apparatus sends a third frame including third indication information. The third indication information is used to request the first communication apparatus to send information for performing transmit antenna channel sounding. The third indication information is carried in a high-efficiency variant field of the third frame. Because there are a larger quantity of bits that are in the high-efficiency variant field and that are used to carry a related command of an antenna selection procedure, the solution provided in this application can support more PPDUs (for example, can support more than 16 PPDUs), and can support more antenna sets (can support more than 16 antenna sets). Therefore, antenna selection can be implemented based on the antenna channel sounding result in the large-scale antenna scenario.

In a possible implementation, the first communication apparatus and the second communication apparatus may perform negotiation. The second communication apparatus learns, through negotiation, a transmit antenna set supported by the first communication apparatus; and after negotiation, the first communication apparatus and the second communication apparatus set a group identifier for the transmit antenna set supported by the first communication apparatus.

For example, before a second communication apparatus receives a first frame, the second communication apparatus receives a fourth frame from the first communication apparatus. The fourth frame includes a fourth identifier field. The fourth identifier field indicates an identifier of at least one transmit antenna set supported by the first communication apparatus. The identifier of the at least one transmit antenna set includes the identifier of the first transmit antenna set.

Further, the second communication apparatus may further receive, from the first communication apparatus, a transmit antenna set corresponding to an identifier of a transmit antenna set supported by the first communication apparatus. In this way, the first communication apparatus can learn a transmit antenna set identifier of each transmit antenna set, so that the transmit antenna set identifier is carried when a PPDU is sent. In addition, the second communication apparatus can determine, based on the identifier of the first transmit antenna set indicated by the first identifier field in the received first PPDU, antennas specifically included in the identifier of the first transmit antenna set. It can be learned that, the second communication apparatus may obtain more antenna set-related information through negotiation, and may subsequently obtain more link-related information, thereby further providing assistance for another subsequent procedure.

In a possible implementation, before a second communication apparatus receives a first frame, the second communication apparatus receives a ninth frame from the first communication apparatus. The ninth frame includes seventh indication information. The seventh indication information indicates a total quantity of transmit antenna sets supported by the first communication apparatus. In this way, the second communication apparatus can estimate overheads and duration of the transmit antenna selection procedure based on the seventh indication information; and the second communication apparatus can further determine, based on the total quantity of transmit antenna sets supported by the first communication apparatus, whether to establish an association relationship with the first communication apparatus.

According to any one of the first aspect or the second aspect and the possible implementations of the first aspect or the second aspect, this application further provides a possible implementation in which the first identifier field is located in a preamble of the first PPDU. For example, the first identifier field includes some or all bits in a universal signal field and/or some or all bits in an extremely high throughput signal field in the preamble.

When the first PPDU is the NDP, the existing NDP does not carry the first identifier field, and in this application, a field in a preamble of the existing NDP may be used to carry content of the first identifier field, so that this application can be better compatible with the conventional technology, and the identifier of the first transmit antenna set can also be carried in the NDP.

Further, in the existing protocol, there are some reserved bits in these fields, for example, B20 to B24 and B25 of a first symbol and B2 and B8 of a second symbol in the universal signal field, and B 14 and B 15 in the extremely high throughput signal field, and in embodiments of this application, the first identifier field is added to the NDP by using bits in these fields, so that embodiments of this application can be better compatible with the conventional technology.

Further, to keep consistency with an existing standard, when this application is applicable to a next generation standard, the first identifier field may include some or all bits in the universal signal field, and/or some or all bits in a next generation signal field.

According to any one of the first aspect or the second aspect and the possible implementations of the first aspect or the second aspect, this application further provides a possible implementation in which the PPDU includes a data field and a preamble. The first identifier field may include some or all bits in at least one of the preamble or the data field. For example, information about the identifier of the first transmit antenna set is carried in at least one of the universal signal field, the extremely high throughput signal field, or an aggregated control subfield of the data field. When the first PPDU includes the data field, in addition to the universal signal field and the extremely high throughput signal field, the aggregated control subfield of the data field may also be used as the first identifier field. In this way, more options may be provided for setting a location of the first identifier field. Further, because an existing field may be used to carry the content of the first identifier field, this application can be better compatible with the conventional technology.

Further, to keep consistency with an existing standard, when this application is applicable to a next generation standard, the first identifier field may include some or all bits in at least one of the universal signal field, the next generation signal field, or the aggregated control subfield of the data field.

According to any one of the first aspect or the second aspect and the possible implementations of the first aspect or the second aspect, this application further provides a possible implementation in which the first frame further includes a quantity of NDPs. In this way, the second communication apparatus may determine, based on the first frame, a quantity of NDPs that need to be subsequently received, so as to check whether an NDP is missed.

According to any one of the first aspect or the second aspect and the possible implementations of the first aspect or the second aspect, this application further provides a possible implementation in which the first frame further includes a second identifier field. The second identifier field indicates the identifier of the first transmit antenna set. The second identifier field in the first frame may include identifiers of a plurality of transmit antenna sets, for example, may include a plurality of transmit antenna sets corresponding to a plurality of consecutive PPDUs subsequently sent in the first frame. In this way, the first identifier field in the first PPDU may carry some bits in bits corresponding to the identifier of the first transmit antenna set, to reduce a quantity of bits occupied by the first identifier field in the first PPDU. The second communication apparatus may determine, based on the first identifier field and the second identifier field, all bits corresponding to the identifier of the first transmit antenna set, and all bits of a transmit antenna set selected by the second communication apparatus (for example, the second communication apparatus selects the first transmit antenna set) may be indicated to the first communication apparatus, so that the first communication apparatus determines, based on all bits of a transmit antenna set fed back by the second communication apparatus, the transmit antenna set selected by the second communication apparatus.

According to any one of the first aspect or the second aspect and the possible implementations of the first aspect or the second aspect, this application further provides a possible implementation in which the first indication information and/or the quantity of NDPs are/is carried in at least one station information field that is of the first frame and that includes second indication information. In another possible implementation, the second identifier field includes some or all bits in the at least one station information field that is of the first frame and that includes the second indication information. The second indication information indicates that the station information field includes antenna selection related information. In this way, when the second indication information is identified, the second communication apparatus may determine that the station information field carrying the second indication information carries the antenna selection related information, and then obtain the antenna selection related information from the station information field. The second indication information may distinguish the station information field carrying the antenna selection related information from a station information field corresponding to another conventional station, so that in the solution in which the station information field carries the antenna selection related information, a station information field corresponding to a conventional station is not affected, and compatibility with the existing standard is achieved.

According to any one of the first aspect or the second aspect and the possible implementations of the first aspect or the second aspect, this application further provides a possible implementation in which the second indication information is carried in an association identifier field in the station information field. For example, a value that is not indicated to a specific station in the existing standard may be used as the second indication information. The second indication information includes one of 2008 to 2043 or 2046. In this way, the second communication apparatus may determine, based on the association identifier field, whether the station information field carries the antenna selection related information or station information corresponding to another second communication apparatus. It can be learned that this solution can be better compatible with the conventional technology.

According to any one of the first aspect or the second aspect and the possible implementations of the first aspect or the second aspect, this application further provides a possible implementation in which the second frame includes a multiple-input multiple-output control field, and the third identifier field includes some or all bits in the multiple-input multiple-output control field. In this way, the third identifier field may be added to the second frame by using bits in the existing multiple-input multiple-output control (MIMO Control) field. This solution does not additionally increase a length of the second frame, and can be better compatible with the conventional technology.

According to any one of the first aspect or the second aspect and the possible implementations of the first aspect or the second aspect, this application further provides a possible implementation in which the third indication information is carried in at least one of the following content in the aggregated control subfield: a control identifier field, an antenna selection command field, or an antenna selection data field. Because the antenna selection command field and the antenna selection data field are obtained through division in the existing standard, the antenna selection command field and the antenna selection data field are also obtained by dividing the A-control subfield in the high-efficiency variant field, so that this application can be more compatible with a command form in the existing standard. In addition, the third indication information is further carried in at least one of the control identifier field, the antenna selection command field, or the antenna selection data field in the A-control subfield. Because there are also the antenna selection command field and the antenna selection data field in the conventional technology, this solution can be compatible with the conventional technology.

According to any one of the first aspect or the second aspect and the possible implementations of the first aspect or the second aspect, this application further provides a possible implementation in which a quantity of bits occupied by the antenna selection command field and the antenna selection data field is greater than 7. A quantity of bits occupied by the antenna selection data field is greater than 4. A quantity of bits occupied by the antenna selection command field and the antenna selection data field is not greater than 26.

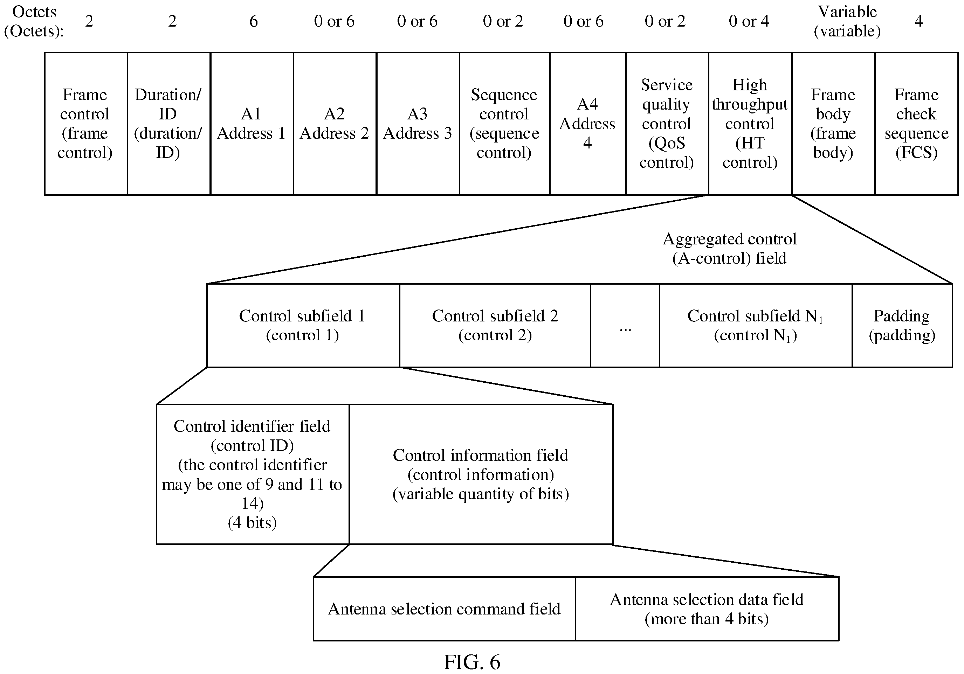

In a design of an antenna selection procedure based on a high throughput control (HTC) field in 802.11n, a maximum of four radio frequency chains, eight antennas, and 16 antenna sets are supported. In embodiments of this application, because a quantity of bits in the control information field is large, an MPDU shown in FIG. 6 may carry more types of antenna selection commands, and the antenna selection data field also has more than 4 bits. Therefore, more PPDUs can be supported (more than 16 PPDUs can be supported), and more antenna sets can be supported (more than 16 antenna sets can be supported).

According to any one of the first aspect or the second aspect and the possible implementations of the first aspect or the second aspect, this application further provides a possible implementation in which the first transmit antenna set is one of k₁ transmit antenna sets of the first communication apparatus, and k₁ is a positive integer. The k₁ transmit antenna sets are in a one-to-one correspondence with identifiers of the k₁ transmit antenna sets. Because the transmit antenna sets are in one-to-one correspondence with the identifiers of the transmit antenna sets, the second communication apparatus receives two PPDUs including a same antenna set identifier at different time points. If a detected channel changes, because antenna set identifiers included in the two PPDUs are the same, the second communication apparatus determines that the antenna set does not change, and thus may determine that the channel itself changes.

According to any one of the first aspect or the second aspect and the possible implementations of the first aspect or the second aspect, this application further provides a possible implementation in which the first identifier field includes all bits corresponding to the identifier of the first transmit antenna set. In this way, the second communication apparatus may uniquely determine an identifier of a transmit antenna set based on a first identifier field carried in a PPDU.

According to any one of the first aspect or the second aspect and the possible implementations of the first aspect or the second aspect, this application further provides a possible implementation in which the first identifier field includes some bits corresponding to the identifier of the first transmit antenna set. In this way, used bits in a preamble of the PPDU can be reduced.

According to any one of the first aspect or the second aspect and the possible implementations of the first aspect or the second aspect, this application further provides a possible implementation in which the third frame sent by the second communication apparatus to the first communication apparatus may further include a quantity of PPDUs. In this way, the first communication apparatus may determine, based on the quantity of PPDUs carried in the third frame, how many PPDUs are to be sent, so that the first communication apparatus determines a quantity of PPDUs to be subsequently sent based on a requirement of the second communication apparatus, and a quantity of PPDUs subsequently sent by the first communication apparatus matches the requirement of the second communication apparatus as much as possible.

According to any one of the first aspect or the second aspect and the possible implementations of the first aspect or the second aspect, this application further provides a possible implementation in which the first identifier field includes a group identifier of the first transmit antenna set and/or a sequence number of the first PPDU. This can improve flexibility of the solution.

According to a third aspect, an embodiment of this application provides an antenna channel sounding method. In the method, a first communication apparatus sends an eleventh frame to a second communication apparatus. The eleventh frame includes first indication information. The first indication information indicates the second communication apparatus to perform transmit antenna channel sounding. The first communication apparatus sends a third physical layer protocol data unit PPDU to the second communication apparatus. The third PPDU is used by the second communication apparatus to perform transmit antenna channel sounding. The third PPDU includes M₁ first information fields corresponding to M₁ transmit antenna sets. M₁ is an integer greater than 1. The first information field is used to perform transmit antenna channel sounding. The first information field includes at least one of an EHT short training field, an EHT long training field, and a packet extension field. The first communication apparatus may aggregate PPDUs corresponding to the M₁ transmit antenna sets that need to be sent into one PPDU, to reduce overheads, improve antenna selection efficiency, and improve a system throughput.

According to a fourth aspect, an embodiment of this application provides an antenna channel sounding method. In the method, a second communication apparatus receives an eleventh frame from a first communication apparatus. The eleventh frame includes first indication information. The first indication information indicates the second communication apparatus to perform transmit antenna channel sounding. The second communication apparatus receives a third PPDU from the first communication apparatus. The third PPDU is used by the second communication apparatus to perform transmit antenna channel sounding. The third PPDU includes M₁ first information fields corresponding to M₁ transmit antenna sets. M₁ is an integer greater than 1. The first information field is used to perform transmit antenna channel sounding. The first information field includes at least one of an EHT short training field, an EHT long training field, and a packet extension field. The first communication apparatus may aggregate PPDUs corresponding to the M₁ transmit antenna sets that need to be sent into one PPDU, to reduce overheads, improve antenna selection efficiency, and improve a system throughput.

According to any one of the third aspect or the fourth aspect and the possible implementations of the third aspect or the fourth aspect, this application further provides a possible implementation in which the third PPDU includes a preamble. The preamble includes at least one of the following fields: a legacy short training field, a legacy long training field, a legacy signal field, a repeated legacy signal field, a universal signal field, or an extremely high throughput signal field. In this way, a part shared by all transmit antenna sets may be sent only once, to reduce overheads.

According to any one of the third aspect or the fourth aspect and the possible implementations of the third aspect or the fourth aspect, this application further provides a possible implementation in which duration of packet extension fields in any two of the M₁ first information fields is the same. In this way, consistency of a receiving procedure can be improved.

According to any one of the third aspect or the fourth aspect and the possible implementations of the third aspect or the fourth aspect, this application further provides a possible implementation in which duration of packet extension fields in at least two of the M₁ first information fields is different. For example, a packet extension field other than a last packet extension field may be shorter than the last packet extension field, and is sufficient for antenna switching by the first communication apparatus. In this way, signaling sending efficiency can be improved.

According to a fifth aspect, an embodiment of this application provides an antenna channel sounding method. In the method, a first communication apparatus sends a fifth frame to a second communication apparatus. The fifth frame includes fourth indication information. The fourth indication information indicates to perform receive antenna channel sounding on the first communication apparatus. The first communication apparatus receives a second PPDU from the second communication apparatus. The second PPDU is used by the first communication apparatus to perform receive antenna channel sounding. The second PPDU includes a fifth identifier field. The fifth identifier field indicates an identifier of a first receive antenna set.

The second PPDU may include a data field, or the second PPDU may not include a data field. For example, the second PPDU may be an NDP. Because the NDP does not include the data field, overheads can be reduced.

Further, the first communication apparatus may perform receive antenna channel sounding on the first receive antenna set based on the second PPDU, to obtain a receive antenna channel sounding result corresponding to the first receive antenna set. Because the NDP includes the fifth identifier field indicating the identifier of the first receive antenna set, the first communication apparatus determines a correspondence between a receive antenna channel sounding result corresponding to the NDP and an identifier of a receive antenna set, and the first communication apparatus may determine an identifier of a receive antenna set selected based on one or more receive antenna channel sounding results. This can prevent the first communication apparatus from incorrectly matching a selected receive antenna channel sounding result with a receive antenna set, and perform antenna selection based on the antenna channel sounding results in a large-scale antenna scenario.

In a possible implementation, the second communication apparatus may send one or more PPDUs to the first communication apparatus. The second PPDU is one of the one or more PPDUs. The first communication apparatus may perform receive antenna channel sounding based on the received one or more PPDUs, to obtain a receive antenna channel sounding result. Further, the first communication apparatus may select a receive antenna set based on the obtained receive antenna channel sounding result, and indicate an identifier of the selected receive antenna set to the second communication apparatus, so as to perform antenna selection based on the antenna channel sounding result in a large-scale antenna scenario. For example, the first communication apparatus sends a sixth frame to the second communication apparatus. The sixth frame includes a second antenna selection feedback result. The second antenna selection feedback result includes a seventh identifier field. The seventh identifier field may be used to carry the identifier of the receive antenna set selected by the first communication apparatus. For example, if the receive antenna set selected by the first communication apparatus is the first receive antenna set, the seventh identifier field may indicate the identifier of the first receive antenna set.

In a possible implementation, before a first communication apparatus sends a fifth frame to a second communication apparatus, the method further includes: The first communication apparatus receives a seventh frame including sixth indication information. The sixth indication information is used to request the first communication apparatus to send information for performing receive antenna channel sounding. The sixth indication information is carried in a high-efficiency variant field of the seventh frame. Because there are a larger quantity of bits that are in the high-efficiency variant field and that are used to carry a related command of an antenna selection procedure, the solution provided in this application can support more PPDUs (for example, can support more than 16 PPDUs), and can support more antenna sets (can support more than 16 antenna sets). Therefore, antenna selection can be implemented based on the antenna channel sounding result in the large-scale antenna scenario.

In a possible implementation, the first communication apparatus and the second communication apparatus may perform negotiation. The second communication apparatus learns, through negotiation, a receive antenna set supported by the first communication apparatus; and after negotiation, the first communication apparatus and the second communication apparatus set a group identifier for the receive antenna set supported by the first communication apparatus.

For example, in a possible implementation, before a first communication apparatus sends a fifth frame to a second communication apparatus, the method further includes: The first communication apparatus sends an eighth frame to the second communication apparatus. The eighth frame includes an eighth identifier field. The eighth identifier field indicates an identifier of at least one receive antenna set supported by the first communication apparatus. The identifier of the at least one receive antenna set includes the identifier of the first receive antenna set.

Further, the first communication apparatus may further indicate, to the second communication apparatus, a receive antenna set corresponding to an identifier of a receive antenna set supported by the first communication apparatus. In this way, the second communication apparatus may carry the identifier of the receive antenna set when sending a PPDU. In addition, the second communication apparatus may determine antennas specifically included in the first receive antenna set. It can be learned that, the second communication apparatus may obtain more antenna set-related information through negotiation, and may subsequently obtain more link-related information, thereby further providing assistance for another subsequent procedure.

For example, in a possible implementation, before a first communication apparatus sends a fifth frame to a second communication apparatus, the method further includes: The first communication apparatus sends a tenth frame to the second communication apparatus. The tenth frame includes eighth indication information. The eighth indication information indicates a total quantity of receive antenna sets supported by the first communication apparatus. In this way, the second communication apparatus can estimate overheads and duration of the receive antenna selection procedure based on the eighth indication information; and the second communication apparatus may further determine, based on the total quantity of receive antenna sets supported by the first communication apparatus, whether to establish an association relationship with the first communication apparatus.

According to a sixth aspect, an embodiment of this application provides an antenna channel sounding method. In the method, a second communication apparatus receives a fifth frame from a first communication apparatus. The fifth frame includes fourth indication information. The fourth indication information indicates to perform receive antenna channel sounding on the first communication apparatus. The second communication apparatus sends a second PPDU to the first communication apparatus. The second PPDU is used by the first communication apparatus to perform receive antenna channel sounding. The second PPDU includes a fifth identifier field. The fifth identifier field indicates an identifier of a first receive antenna set.

The second PPDU may include a data field, or the second PPDU may not include a data field. For example, the second PPDU may be an NDP. Because the NDP does not include the data field, overheads can be reduced.

Further, in this application, because the NDP includes the fifth identifier field indicating the identifier of the first receive antenna set, the first communication apparatus determines a correspondence between a receive antenna channel sounding result corresponding to the NDP and an identifier of a receive antenna set, and the first communication apparatus may determine an identifier of a receive antenna set selected based on one or more receive antenna channel sounding results. This can prevent the first communication apparatus from incorrectly matching a selected receive antenna channel sounding result with a receive antenna set, and perform antenna selection based on the antenna channel sounding results in a large-scale antenna scenario.

In a possible implementation, the second communication apparatus may send one or more PPDUs to the first communication apparatus. The second PPDU is one of the one or more PPDUs. The first communication apparatus may perform receive antenna channel sounding based on the received one or more PPDUs, to obtain a receive antenna channel sounding result. Further, the first communication apparatus may select a receive antenna set based on the obtained receive antenna channel sounding result, and indicate an identifier of the selected receive antenna set to the second communication apparatus, so as to perform antenna selection based on the antenna channel sounding result in a large-scale antenna scenario. For example, the second communication apparatus receives a sixth frame from the first communication apparatus. The sixth frame includes a second antenna selection feedback result. The second antenna selection feedback result includes a seventh identifier field. The seventh identifier field may be used to carry the identifier of the receive antenna set selected by the first communication apparatus. For example, if the receive antenna set selected by the first communication apparatus is the first receive antenna set, the seventh identifier field may indicate the identifier of the first receive antenna set.

In a possible implementation, before a second communication apparatus receives a fifth frame from a first communication apparatus, the method further includes: The second communication apparatus sends a seventh frame including sixth indication information. The sixth indication information is used to request the first communication apparatus to send information for performing receive antenna channel sounding. The sixth indication information is carried in a high-efficiency variant field of the seventh frame. Because there are a larger quantity of bits that are in the high-efficiency variant field and that are used to carry a related command of an antenna selection procedure, the solution provided in this application can support more PPDUs (for example, can support more than 16 PPDUs), and can support more antenna sets (can support more than 16 antenna sets). Therefore, antenna selection can be implemented based on the antenna channel sounding result in the large-scale antenna scenario.

In a possible implementation, the first communication apparatus and the second communication apparatus may perform negotiation. The second communication apparatus learns, through negotiation, a receive antenna set supported by the first communication apparatus; and after negotiation, the first communication apparatus and the second communication apparatus set a group identifier for the receive antenna set supported by the first communication apparatus.

For example, in a possible implementation, before a second communication apparatus receives a fifth frame from a first communication apparatus, the second communication apparatus receives an eighth frame from the first communication apparatus. The eighth frame includes an eighth identifier field. The eighth identifier field indicates an identifier of at least one receive antenna set supported by the first communication apparatus. The identifier of the at least one receive antenna set includes the identifier of the first receive antenna set.

Further, the first communication apparatus may further indicate, to the second communication apparatus, a receive antenna set corresponding to an identifier of a receive antenna set supported by the first communication apparatus. In this way, the second communication apparatus may carry the identifier of the receive antenna set when sending a PPDU. In addition, the second communication apparatus may determine antennas specifically included in the first receive antenna set. It can be learned that, the second communication apparatus may obtain more antenna set-related information through negotiation, and may subsequently obtain more link-related information, thereby further providing assistance for another subsequent procedure.

In a possible implementation, before a first communication apparatus sends a fifth frame to a second communication apparatus, the second communication apparatus receives a tenth frame from the first communication apparatus. The tenth frame includes eighth indication information. The eighth indication information indicates a total quantity of receive antenna sets supported by the first communication apparatus. In this way, the second communication apparatus can estimate overheads and duration of the receive antenna selection procedure based on the eighth indication information; and the second communication apparatus may further determine, based on the total quantity of receive antenna sets supported by the first communication apparatus, whether to establish an association relationship with the first communication apparatus.

According to any one of the fifth aspect or the sixth aspect and the possible implementations of the fifth aspect or the sixth aspect, this application further provides a possible implementation in which the fifth identifier field is located in a preamble of the second PPDU. For example, the fifth identifier field is some or all bits in a universal signal field and/or some or all bits in an extremely high throughput signal field in the preamble. When the second PPDU is the NDP, the existing NDP does not carry the fifth identifier field, and in this application, a field in a preamble of the existing NDP may be used to carry content of the fifth identifier field, so that this application can be better compatible with the conventional technology, and the identifier of the first receive antenna set can also be carried in the NDP.

Further, in the existing protocol, there are some reserved bits in these fields, for example, B20 to B24 and B25 of a first symbol and B2 and B8 of a second symbol in the universal signal field, and B 14 and B 15 in the extremely high throughput signal field, and in embodiments of this application, the first identifier field is added to the NDP by using bits in these fields, so that embodiments of this application can be better compatible with the conventional technology.

Further, to keep consistency with an existing standard, when this application is applicable to a next generation standard, the fifth identifier field may include some or all bits in the universal signal field, and/or some or all bits in a next generation signal field.

According to any one of the fifth aspect or the sixth aspect and the possible implementations of the fifth aspect or the sixth aspect, this application further provides a possible implementation in which the PPDU includes a data field and a preamble. The fifth identifier field includes some or all bits in at least one of the preamble or the data field. For example, information about the identifier of the first receive antenna set is carried in at least one of the universal signal field, the extremely high throughput signal field, or an aggregated control subfield of the data field. When the second PPDU includes the data field, in addition to the universal signal field and the extremely high throughput signal field, the aggregated control subfield of the data field may also be used as the fifth identifier field. In this way, more options may be provided for setting a location of the fifth identifier field. Further, because an existing field may be used to carry the content of the fifth identifier field, this application can be better compatible with the conventional technology.

Further, to keep consistency with an existing standard, when this application is applicable to a next generation standard, information about the identifier of the first receive antenna set is carried in at least one of the universal signal field, the next generation signal field, or the aggregated control subfield of the data field.

According to any one of the fifth aspect or the sixth aspect and the possible implementations of the fifth aspect or the sixth aspect, this application further provides a possible implementation in which the fifth frame further includes a quantity of NDPs. In this way, the second communication apparatus may determine, based on the first frame, a quantity of NDPs that need to be subsequently received, so as to check whether an NDP is missed.

According to any one of the fifth aspect or the sixth aspect and the possible implementations of the fifth aspect or the sixth aspect, this application further provides a possible implementation in which the fifth frame further includes a sixth identifier field. The sixth identifier field indicates the identifier of the first receive antenna set. The sixth identifier field in the fifth frame may include identifiers of a plurality of receive antenna sets, for example, may include a plurality of receive antenna sets corresponding to a plurality of consecutive PPDUs subsequently sent in the fifth frame. In this way, the fifth identifier field in the second PPDU may carry some bits in bits corresponding to the identifier of the first receive antenna set, to reduce a quantity of bits occupied by the fifth identifier field in the second PPDU. The first communication apparatus may determine, based on the fifth identifier field and the sixth identifier field, all bits corresponding to the identifier of the first receive antenna set, and all bits of a transmit antenna set selected by the second communication apparatus (for example, the second communication apparatus selects the first transmit antenna set) may be indicated to the first communication apparatus, so that the first communication apparatus determines, based on all bits of a transmit antenna set fed back by the second communication apparatus, the transmit antenna set selected by the second communication apparatus.

According to any one of the fifth aspect or the sixth aspect and the possible implementations of the fifth aspect or the sixth aspect, this application further provides a possible implementation in which the fourth indication information and/or the quantity of NDPs are/is carried in at least one station information field that is of the fifth frame and that includes fifth indication information. In another possible implementation, the sixth identifier field includes some or all bits in the at least one station information field that is of the fifth frame and that includes the fifth indication information. The fifth indication information indicates that the station information field includes antenna selection related information. In this way, when the fifth indication information is identified, the second communication apparatus may determine that the station information field carrying the fifth indication information carries the antenna selection related information, and then obtain the antenna selection related information from the station information field. The fifth indication information may distinguish the station information field carrying the antenna selection related information from a station information field corresponding to another conventional station, so that in the solution in which the station information field carries the antenna selection related information, a station information field corresponding to a conventional station is not affected, and compatibility with the existing standard is achieved.

According to any one of the fifth aspect or the sixth aspect and the possible implementations of the fifth aspect or the sixth aspect, this application further provides a possible implementation in which the fifth indication information is carried in an association identifier field in the station information field. For example, a value that is not indicated to a specific station in the existing standard may be used as the fifth indication information. The fifth indication information includes one of 2008 to 2043 or 2046. In this way, the second communication apparatus may determine, based on the association identifier field, whether the station information field carries the antenna selection related information or station information corresponding to another second communication apparatus. It can be learned that this solution can be better compatible with the conventional technology.

According to any one of the fifth aspect or the sixth aspect and the possible implementations of the fifth aspect or the sixth aspect, this application further provides a possible implementation in which the fourth indication information is carried in a trigger type field of the fifth frame; and/or the quantity of NDPs and/or the sixth identifier field are/is carried in some or all bits of at least one of the following content: a reserved bit of a common information field, a reserved bit of a user information list field, trigger dependent common information, or trigger dependent user information. Alternatively, the fifth frame may be a second trigger frame. In this solution, a bit in the existing second trigger frame may be used to add antenna selection related information to the second trigger frame. In this way, this solution can be compatible with the conventional technology.

According to any one of the fifth aspect or the sixth aspect and the possible implementations of the fifth aspect or the sixth aspect, this application further provides a possible implementation in which the sixth frame includes a MIMO control field, and the seventh identifier field includes some or all bits in the MIMO control field. In this way, the third identifier field may be added to the second frame by using bits in the existing multiple-input multiple-output control (MIMO Control) field. This solution does not additionally increase a length of the second frame, and can be better compatible with the conventional technology.

According to any one of the fifth aspect or the sixth aspect and the possible implementations of the fifth aspect or the sixth aspect, this application further provides a possible implementation in which the sixth indication information is carried in at least one of the following content in the A-control subfield: a control identifier field, an antenna selection command field, or an antenna selection data field. Because the antenna selection command field and the antenna selection data field are obtained through division in the existing standard, the antenna selection command field and the antenna selection data field are also obtained by dividing the A-control subfield in the high-efficiency variant field, so that this application can be more compatible with a command form in the existing standard. In addition, the sixth indication information is further carried in at least one of the control identifier field, the antenna selection command field, or the antenna selection data field in the A-control subfield. This application can be compatible with the conventional technology.

According to any one of the fifth aspect or the sixth aspect and the possible implementations of the fifth aspect or the sixth aspect, this application further provides a possible implementation in which a quantity of bits occupied by the antenna selection command field and the antenna selection data field is greater than 7. A quantity of bits occupied by the antenna selection data field is greater than 4. A quantity of bits occupied by the antenna selection command field and the antenna selection data field is not greater than 26.

In a design of an antenna selection procedure based on a high throughput control (HTC) field in 802.11n, a maximum of four radio frequency chains, eight antennas, and 16 antenna sets are supported. In embodiments of this application, because a quantity of bits in the control information field is large, an MPDU shown in FIG. 6 may carry more types of antenna selection commands, and the antenna selection data field also has more than 4 bits. Therefore, more PPDUs can be supported (more than 16 PPDUs can be supported), and more antenna sets can be supported (more than 16 antenna sets can be supported).

According to any one of the fifth aspect or the sixth aspect and the possible implementations of the fifth aspect or the sixth aspect, this application further provides a possible implementation in which the first receive antenna set is one of k₂ receive antenna sets of the first communication apparatus, and k₂ is a positive integer. The k₂ receive antenna sets are in a one-to-one correspondence with identifiers of the k₂ receive antenna sets. Because the receive antenna sets are in one-to-one correspondence with the identifiers of the receive antenna sets, the second communication apparatus receives two PPDUs including a same antenna set identifier at different time points. If a detected channel changes, because antenna set identifiers included in the two PPDUs are the same, the second communication apparatus determines that the antenna set does not change, and thus may determine that the channel itself changes.

According to any one of the fifth aspect or the sixth aspect and the possible implementations of the fifth aspect or the sixth aspect, this application further provides a possible implementation in which the fifth identifier field includes all bits corresponding to the identifier of the first receive antenna set. In this way, the second communication apparatus may uniquely determine an identifier of a receive antenna set based on a first identifier field carried in a PPDU.

According to any one of the fifth aspect or the sixth aspect and the possible implementations of the fifth aspect or the sixth aspect, this application further provides a possible implementation in which the fifth identifier field includes some bits corresponding to the identifier of the first receive antenna set. In this way, used bits in a preamble of the PPDU can be reduced.

According to any one of the fifth aspect or the sixth aspect and the possible implementations of the fifth aspect or the sixth aspect, this application further provides a possible implementation in which the seventh frame sent by the second communication apparatus to the first communication apparatus further includes a quantity of PPDUs. In this way, the first communication apparatus may determine, based on the quantity of PPDUs carried in the seventh frame, a quantity of PPDUs that need to be subsequently sent by the second communication apparatus, so that the quantity of PPDUs that need to be subsequently sent by the second communication apparatus and that are determined by the first communication apparatus matches a requirement of the second communication apparatus as much as possible.

According to any one of the fifth aspect or the sixth aspect and the possible implementations of the fifth aspect or the sixth aspect, this application further provides a possible implementation in which the fifth identifier field includes a group identifier of the first receive antenna set and/or a sequence number of the second PPDU. This can improve flexibility of the solution.

According to a seventh aspect, an embodiment of this application provides an antenna channel sounding method. In the method, a first communication apparatus sends a twelfth frame to a second communication apparatus. The twelfth frame includes fourth indication information. The fourth indication information indicates to perform receive antenna channel sounding on the first communication apparatus. The first communication apparatus receives a fourth PPDU from the second communication apparatus. The fourth PPDU is used by the second communication apparatus to perform receive antenna channel sounding. The fourth PPPDU includes M₂ second information fields corresponding to M₂ receive antenna sets. M₂ is an integer greater than 1. The second information field is used to perform receive antenna channel sounding. The second information field includes at least one of an EHT short training field, an EHT long training field, and a packet extension field.

The second communication apparatus may aggregate PPDUs corresponding to the M₂ receive antenna sets that need to be sent into one PPDU, to reduce overheads, improve antenna selection efficiency, and improve a system throughput.

According to an eighth aspect, an embodiment of this application provides an antenna channel sounding method. In the method, a second communication apparatus receives a twelfth frame from a first communication apparatus. The twelfth frame includes fourth indication information. The fourth indication information indicates to perform receive antenna channel sounding on the first communication apparatus. The second communication apparatus sends a fourth PPDU to the first communication apparatus. The fourth PPDU is used by the second communication apparatus to perform receive antenna channel sounding. The fourth PPDU includes M₂ second information fields corresponding to M₂ receive antenna sets. M₂ is an integer greater than 1. The second information field is used to perform receive antenna channel sounding. The second information field includes at least one of an EHT short training field, an EHT long training field, and a packet extension field.

The second communication apparatus may aggregate PPDUs corresponding to the M₂ receive antenna sets that need to be sent into one PPDU, to reduce overheads, improve antenna selection efficiency, and improve a system throughput.

According to any one of the seventh aspect or the eighth aspect and the possible implementations of the seventh aspect or the eighth aspect, this application further provides a possible implementation in which the fourth PPDU includes a preamble. The preamble includes at least one of the following fields: a legacy short training field L-STF, a legacy long training field L-LTF, a legacy signal field L-SIG, a repeated legacy signal field RL-SIG, a universal signal field U-SIG, or an extremely high throughput signal field EHT-SIG. In this way, a part shared by all transmit antenna sets may be sent only once, to reduce overheads.

According to any one of the seventh aspect or the eighth aspect and the possible implementations of the seventh aspect or the eighth aspect, this application further provides a possible implementation in which duration of packet extension fields in any two of the M₂ second information fields is the same. In this way, consistency of a receiving procedure can be improved.

According to any one of the seventh aspect or the eighth aspect and the possible implementations of the seventh aspect or the eighth aspect, this application further provides a possible implementation in which duration of packet extension fields in at least two of the M₂ second information fields is different. For example, a packet extension field other than a last packet extension field may be shorter than the last packet extension field, and is sufficient for antenna switching by the first communication apparatus. In this way, signaling sending efficiency can be improved.

According to a ninth aspect, a communication apparatus is provided, and includes a communication unit and a processing unit. The communication apparatus may be the foregoing first communication apparatus, or may be the foregoing second communication apparatus. The communication apparatus may perform any one of the first aspect to the eighth aspect and any implementations of the first aspect to the eighth aspect. The communication unit is configured to perform functions related to sending and receiving. Optionally, the communication unit includes a receiving unit and a sending unit. In a design, the communication apparatus is a communication chip, the processing unit may be a processing circuit, one or more processors, or processor cores, and the communication unit may be an interface circuit, an input/output circuit, or a port of the communication chip.

In another design, the communication unit may be a transmitter and a receiver, or the communication unit may be a transmitter machine and a receiver machine.

Optionally, the communication apparatus further includes modules that may be configured to perform any one of the first aspect to the eighth aspect and any implementations of the first aspect to the eighth aspect.

According to a tenth aspect, a communication apparatus is provided, including a processor and a transceiver. The communication apparatus may be the foregoing first communication apparatus, or may be the foregoing second communication apparatus. Optionally, the communication apparatus further includes a memory. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect to the eighth aspect and any implementations of the first aspect to the eighth aspect.

Optionally, there are one or more processors, and there are one or more memories.

Optionally, the memory may be integrated with the processor, or the memory and the processor are disposed separately.

Optionally, the transceiver may include a transmitter machine (a transmitter) and a receiver machine (a receiver).

According to an eleventh aspect, a communication apparatus is provided, including a processor. The communication apparatus may be the foregoing first communication apparatus, or may be the foregoing second communication apparatus. The processor is coupled to a memory, and may be configured to perform any one of the first aspect to the eighth aspect and any implementations of the first aspect to the eighth aspect. The communication apparatus may be the foregoing first communication apparatus, or may be the foregoing second communication apparatus. Optionally, the communication apparatus further includes the memory. Optionally, the communication apparatus further includes a communication interface, and the processor is coupled to the communication interface.

In an implementation, when the communication apparatus is the first communication apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system of the first communication apparatus, the communication interface may be an input/output interface, an interface circuit, an output circuit, an input circuit, a pin, a related circuit, or the like on the chip or the chip system. The processor may alternatively be embodied as a processing circuit or a logic circuit.

In an implementation, when the communication apparatus is the second communication apparatus, the communication interface may be a transceiver or an input/output interface. Optionally, the transceiver may be a transceiver circuit. Optionally, the input/output interface may be an input/output circuit.

In another implementation, when the communication apparatus is a chip or a chip system of the second communication apparatus, the communication interface may be an input/output interface, an interface circuit, an output circuit, an input circuit, a pin, a related circuit, or the like on the chip or the chip system. The processor may alternatively be embodied as a processing circuit or a logic circuit.

According to a twelfth aspect, a system is provided, and the system includes the foregoing first communication apparatus and the foregoing second communication apparatus.

According to a thirteenth aspect, a computer program product is provided, and the computer program product includes a computer program (which may also be referred to as code or instructions). When the computer program is run, a computer is enabled to perform any one of the first aspect to the eighth aspect and any implementations of the first aspect to the eighth aspect.

According to a fourteenth aspect, a computer-readable storage medium is provided, and the computer-readable medium stores a computer program (which may also be referred to as code or instructions). When the computer program is run on a computer, the computer is enabled to perform any one of the first aspect to the eighth aspect and any implementations of the first aspect to the eighth aspect.

According to a fifteenth aspect, a chip system is provided. The chip system may include a processing circuit. The processing circuit may be configured to perform any one of the first aspect to the eighth aspect and any implementations of the first aspect to the eighth aspect by using an interface circuit. Optionally, the chip system further includes the memory. The memory is configured to store a computer program (which may also be referred to as code or instructions). The processing circuit may be configured to invoke the computer program from the memory and run the computer program, so that a device on which the chip system is installed performs any one of the first aspect to the eighth aspect and any implementations of the first aspect to the eighth aspect.

According to a sixteenth aspect, a processing apparatus is provided, and includes an interface circuit and a processing circuit. The interface circuit may include an input circuit and an output circuit. The processing circuit is configured to: receive a signal by using the input circuit, and transmit a signal by using the output circuit, so that any one of the first aspect to the eighth aspect and any implementations of the first aspect to the eighth aspect is implemented.

In a specific implementation process, the foregoing processing apparatus may be a chip, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and various circuits are not limited in this application.

In another implementation, the communication apparatus may be some components in the first communication apparatus, for example, an integrated circuit product such as a system chip or a communication chip. The interface circuit may be an input/output interface, an interface circuit, an output circuit, an input circuit, a pin, a related circuit, or the like on the chip or the chip system. The processing circuit may be a logic circuit on the chip.

In another implementation, the communication apparatus may be some components in the second communication apparatus, for example, an integrated circuit product such as a system chip or a communication chip. The interface circuit may be an input/output interface, an interface circuit, an output circuit, an input circuit, a pin, a related circuit, or the like on the chip or the chip system. The processing circuit may be a logic circuit on the chip.

### BRIEF DESCRIPTION OF DRAWINGS

FIG. 1 is a schematic diagram of a system architecture to which an embodiment of this application is applicable;
FIG. 2 is a schematic diagram of another system architecture according to an embodiment of this application;
FIG. 3 is a schematic diagram of a structure of a communication apparatus according to an embodiment of this application;
FIG. 4 is a schematic diagram of signaling interaction of an antenna channel sounding method according to an embodiment of this application;
FIG. 5 is a schematic diagram of signaling interaction of another antenna channel sounding method according to an embodiment of this application;
FIG. 6 is a schematic diagram of a structure of an MPDU that can carry a third frame according to an embodiment of this application;
FIG. 7 is a schematic diagram of a structure of a first frame when the first frame is an NDPA frame according to an embodiment of this application;
FIG. 8a is a schematic diagram of a structure of a first PPDU when the first PPDU is an NDP according to an embodiment of this application;
FIG. 8b is a schematic diagram of a structure of a first PPDU when the first PPDU is an NG sounding NDP according to an embodiment of this application;
FIG. 8c is a schematic diagram of a structure of a first PPDU including a data field according to an embodiment of this application;
FIG. 9 is a schematic diagram of a structure of a MIMO control field in a second frame when the second frame is a beamforming report frame according to an embodiment of this application;
FIG. 10 is a schematic diagram of signaling interaction of another antenna channel sounding method according to an embodiment of this application;
FIG. 11 is a schematic diagram of a frame structure of a third PPDU according to an embodiment of this application;
FIG. 12 is a schematic diagram of signaling interaction of an antenna channel sounding method according to an embodiment of this application;
FIG. 13 is a schematic diagram of signaling interaction of another antenna channel sounding method according to an embodiment of this application;
FIG. 14A and FIG. 14B are a schematic diagram of a structure of a second trigger frame according to an embodiment of this application;
FIG. 15 is a schematic diagram of a structure of a fifth frame when the fifth frame is an NDPA frame according to an embodiment of this application;
FIG. 16a is a schematic diagram of a structure of a second PPDU when the second PPDU is an NDP according to an embodiment of this application;
FIG. 16b is a schematic diagram of a structure of a second PPDU when the second PPDU is an NDP according to an embodiment of this application;
FIG. 16c is a schematic diagram of a structure of a second PPDU including a data field according to an embodiment of this application;
FIG. 17 is a schematic diagram of signaling interaction of another antenna channel sounding method according to an embodiment of this application;
FIG. 18 is a schematic diagram of a frame structure of a fourth PPDU according to an embodiment of this application;
FIG. 19 is a schematic diagram of a frame structure of another fourth PPDU according to an embodiment of this application;
FIG. 20 is a schematic diagram of an architecture of another communication apparatus according to an embodiment of this application;
FIG. 21 is a schematic diagram of an architecture of another communication apparatus according to an embodiment of this application; and
FIG. 22 is a schematic diagram of an architecture of another communication apparatus according to an embodiment of this application.

### DESCRIPTION OF EMBODIMENTS

The following describes technical solutions of this application with reference to accompanying drawings.

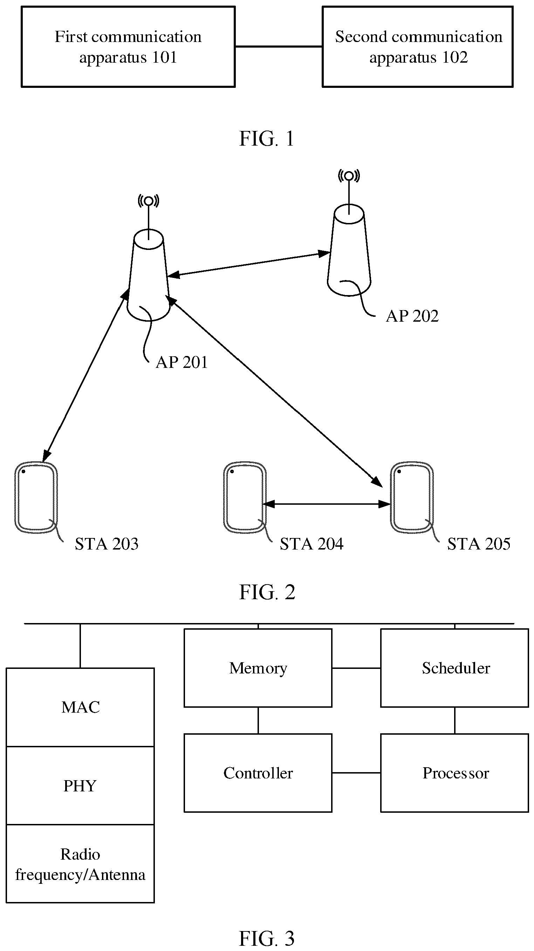

FIG. 1 is a schematic diagram of an example of an architecture of a communication system to which an embodiment of this application is applicable. As shown in FIG. 1, the communication system includes a first communication apparatus 101 and a second communication apparatus 102. This embodiment of this application provides an antenna selection solution, which may be used to perform antenna selection for a device. In this embodiment of this application, an example in which antenna selection is performed on the first communication apparatus 101 is used for description. If antenna selection needs to be performed on the second communication apparatus 102, for an antenna selection procedure of the second communication apparatus 102, refer to an antenna selection procedure of the first communication apparatus 101. Details are not described again.

The first communication apparatus 101 may include a transmit antenna and a receive antenna. This embodiment of this application provides a solution for selecting a transmit antenna for the first communication apparatus 101. In this solution, the first communication apparatus 101 sends a first frame to the second communication apparatus 102. The first frame includes first indication information. The first indication information indicates the second communication apparatus to perform transmit antenna channel sounding. The first communication apparatus 101 sends a first physical layer protocol data unit (physical layer protocol data unit, PPDU) to the second communication apparatus 102. The first PPDU includes a first identifier field. The first identifier field indicates an identifier of a first transmit antenna set.

In a possible implementation, the first PPDU may be a PPDU including a data field.

In another possible implementation, the first PPDU may not include a data field. For example, the first PPDU is a null data packet (null data packet, NDP). In this embodiment of this application, the NDP may also be referred to as a null data packet. The NDP may not include a data field.

When the first PPDU is the NDP, because the NDP does not include the data field, overheads can be reduced. Particularly, in a large-scale antenna scenario, because there are a large quantity of antenna sets, there are also a large quantity of PPDUs for transmit antenna channel sounding, and overheads for transmit antenna selection increase accordingly. However, in this embodiment of this application, more overheads can be reduced in a large-scale antenna scenario in this solution in which the transmit antenna channel sounding is performed based on the NDP.

In addition, in a current possible implementation, because the NDP does not include a data field, the NDP cannot carry sequence number information of a PPDU, and the second communication apparatus can only infer sequence number information of a PPDU corresponding to the NDP based on a sequence of NDPs received by the second communication apparatus. However, once the second communication apparatus misses an NDP, the second communication apparatus cannot correctly infer sequence number information of a PPDU corresponding to a received NDP, and cannot correctly feed back a correspondence between a transmit antenna channel sounding result and the sequence number information of the PPDU to the first communication apparatus. Consequently, a transmit antenna selection failure on the first communication apparatus may be caused. However, in a large-scale antenna scenario, because there are more antenna sets, there is a higher error probability when the second communication apparatus determines the sequence number information of the PPDU corresponding to the NDP.

For the foregoing problem, in this embodiment of this application, the first identifier field indicating the identifier of the first transmit antenna set is added to the NDP, so that the second communication apparatus determines the identifier of the first transmit antenna set corresponding to the received NDP, and the second communication apparatus can determine a transmit antenna channel sounding result obtained based on the NDP as a transmit antenna channel sounding result corresponding to the identifier of the first transmit antenna set. Because the second communication apparatus may determine a correspondence between a transmit antenna channel sounding result corresponding to the NDP and an identifier of a transmit antenna set, and the second communication apparatus may determine an identifier of a transmit antenna set selected based on one or more transmit antenna channel sounding results. This can prevent the second communication apparatus from incorrectly matching a selected transmit antenna channel sounding result with a transmit antenna set, and perform antenna selection based on the antenna channel sounding results in a large-scale antenna scenario. Further, the second communication apparatus and the first communication apparatus may conveniently perform antenna selection error recovery (for example, even if the second communication apparatus makes a mistake in sequence number information of a PPDU, an identifier of a transmit antenna set corresponding to the PPDU may also be correctly determined based on information indicating the identifier of the transmit antenna set in the PPDU).

The foregoing describes an example of an antenna selection procedure of a transmit antenna at the first communication apparatus. This embodiment of this application may further provide a solution for selecting a receive antenna for the first communication apparatus. The following will separately describe the two solutions in detail. Details are not described herein.

The technical solutions of embodiments of this application may be applied to various communication systems, such as a wireless local area network (wireless local area network, WLAN) communication system, a global system for mobile communication (global system of mobile communication, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a subsequent 5th generation (5th generation, 5G) system, or new radio (new radio, NR).

The following describes an application scenario of embodiments of this application and a method in embodiments of this application by using a WLAN system as an example.

Specifically, embodiments of this application may be applied to a wireless local area network (wireless local area network, WLAN), and embodiments of this application may be applied to any protocol in the IEEE 802.11 series protocols currently used in a WLAN, including 802.11be, and is also applicable to a standard later than 802.11be. The WLAN may include one or more basic service sets (basic service sets, BSSs). A network node in the basic service set includes an access point (access point, AP) and a station (station, STA).

FIG. 2 is a schematic diagram of an example of an architecture of another system according to an embodiment of this application. As shown in FIG. 2, the communication system includes one or more APs, and may further include one or more STAs. In FIG. 1, two APs (for example, an AP 201 and an AP 202 in FIG. 2) and three STAs (for example, a STA 203, a STA 204, and a STA 205 in FIG. 2) are used as an example. The first communication apparatus 101 in FIG. 1 may be the AP or the STA in FIG. 2. The second communication apparatus 102 in FIG. 2 may be the AP or the STA in FIG. 2.

The solutions provided in embodiments of this application are applicable to communication between APs, for example, communication between the AP 201 and the AP 202 in FIG. 2. In this case, both the first communication apparatus 101 and the second communication apparatus 102 in FIG. 1 may be APs. For example, the first communication apparatus 101 is the AP 201, and the second communication apparatus 102 is the AP 202.

The solutions provided in embodiments of this application are further applicable to communication between STAs, for example, communication between the STA 204 and the STA 205 in FIG. 2. In this case, both the first communication apparatus 101 and the second communication apparatus 102 in FIG. 1 may be STAs. For example, the first communication apparatus 101 is the STA 204, and the second communication apparatus 102 is the STA 205.

The solutions provided in embodiments of this application are further applicable to communication between one AP and one or more STAs, and are further applicable to communication between a plurality of APs and one or more STAs, for example, communication between the AP 201 and the STA 203 in FIG. 2. In this case, the first communication apparatus 101 and the second communication apparatus 102 in FIG. 1 may be respectively an AP and a STA. For example, the first communication apparatus 101 may be the STA 203, and the second communication apparatus is the AP 201. For another example, the first communication apparatus 101 is the AP 201, and the second communication apparatus 102 is the STA 203.

An application scenario of embodiments of this application and the method in embodiments of this application are described below by using an example in which the first communication apparatus 101 is an AP and the second communication apparatus 102 is a STA.

Further, the STAin embodiments of this application may also be referred to as a system, a subscriber unit, an access terminal, a mobile station, a remote station, a remote terminal, a mobile device, a user terminal, a terminal, a wireless communication apparatus, a user agent, a user apparatus, or user equipment (user equipment, UE). The STA may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless local area network (for example, Wi-Fi) communication function, a wearable device, a computing device, or another processing device connected to a wireless modem.

The station may be a wireless communication chip, a wireless sensor, a wireless communication terminal, or the like. For example, the station may be a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, a computer supporting a Wi-Fi communication function, or the like. Optionally, the station may support the 802.11be standard. Alternatively, the station may support a plurality of wireless local area network (wireless local area network, WLAN) standards of the 802.11 family such as 802.11ax, 802.11ac, 802.11n, 802.11g, 802.11b, 802.11a, and a next generation following 802.11be.

The access point in this application may be an extremely high throughput (extremely high throughput, EHT) STA, or may be a STA to which a specific generation of the Wi-Fi standard in the future is applicable.

The AP in embodiments of this application may be configured to: communicate with an access terminal (for example, a STA) over the wireless local area network, and transmit data from the access terminal to a network side, or transmit data from a network side to the access terminal. The AP is also referred to as a wireless access point, a hotspot, or the like. APs are access points for mobile users to access wired networks, and are mainly deployed in homes, buildings, and campuses, or are deployed outdoors. The AP is equivalent to a bridge that connects a wired network and a wireless network. A main function of the AP is to connect wireless network clients together, and then connect the wireless network to the Ethernet. Specifically, the AP may be a communication server, a router, a switch, a bridge, a computer, a mobile phone, or the like with a wireless fidelity (wireless fidelity, Wi-Fi) chip. Optionally, the AP may be a device that supports a plurality of WLAN standards such as 802.11.

Wireless communication may be performed between the AP and each of the STAs according to various standards. For example, wireless communication between the AP and the STA may be performed by using a single-user multiple-input multiple-output (single-user multiple-input multiple-output, SU-MIMO) technology or a multi-user multiple-input multiple-output (multi-users multiple-input multiple-output, MU-MIMO) technology.

For example, the access point and the station may be devices used in an internet of vehicles; internet of things nodes, sensors, or the like in an internet of things (IoT, internet of things); smart cameras, smart remote controls, smart water meters, or smart power meters in a smart household; sensors in a smart city; or the like.

A communication device provided in embodiments of this application may be a wireless communication device that supports parallel transmission of a plurality of links, for example, referred to as a multi-link device (Multi-link device) or a multi-band device (multi-band device). Compared with a device that supports only single-link transmission, the multi-link device has higher transmission efficiency and a higher throughput.

The multi-link device includes one or more affiliated stations STAs (affiliated STAs). The affiliated STA is a logical station and may operate on one link. The affiliated station may be an access point (Access Point, AP) or a non-access point station (non-Access Point Station, non-AP STA). For ease of description, a multi-link device whose affiliated station is an AP may be referred to as a multi-link AP, a multi-link AP device, or an AP multi-link device (AP multi-link device); and a multi-link device whose affiliated station is a non-AP STA may be referred to as a multi-link STA, a multi-link STA device, or a STA multi-link device (STA multi-link device).

FIG. 3 is a schematic diagram of an example of a structure of a communication apparatus according to an embodiment of this application. The communication apparatus shown in FIG. 3 may be a schematic diagram of an internal structure of the first communication apparatus 101 in FIG. 1, may be a schematic diagram of an internal structure of the second communication apparatus 102 in FIG. 1, may be a schematic diagram of an internal structure of the AP (for example, the AP 201 or the AP 202 in FIG. 2) in FIG. 2, or may be a schematic diagram of an internal structure of the STA (for example, the STA 203, the STA 204, or the STA 205 in FIG. 2) in FIG. 2. The communication apparatus shown in FIG. 3 may include a plurality of antennas, and may be a device with more than two antennas.

As shown in FIG. 3, the communication apparatus includes a physical layer (physical layer, PHY) processing circuit, a media access control (media access control, MAC) processing circuit, a memory, a controller, a scheduler, and a processor.

The physical layer processing circuit may be configured to process a physical layer signal. The MAC layer processing circuit may be configured to process a MAC layer signal. The memory may be configured to store signaling information, and the like. The controller is a component for controlling. The scheduler is a component for scheduling. The processor may be configured to parse the signaling information, processes related data, and the like.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, any regular processor, or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

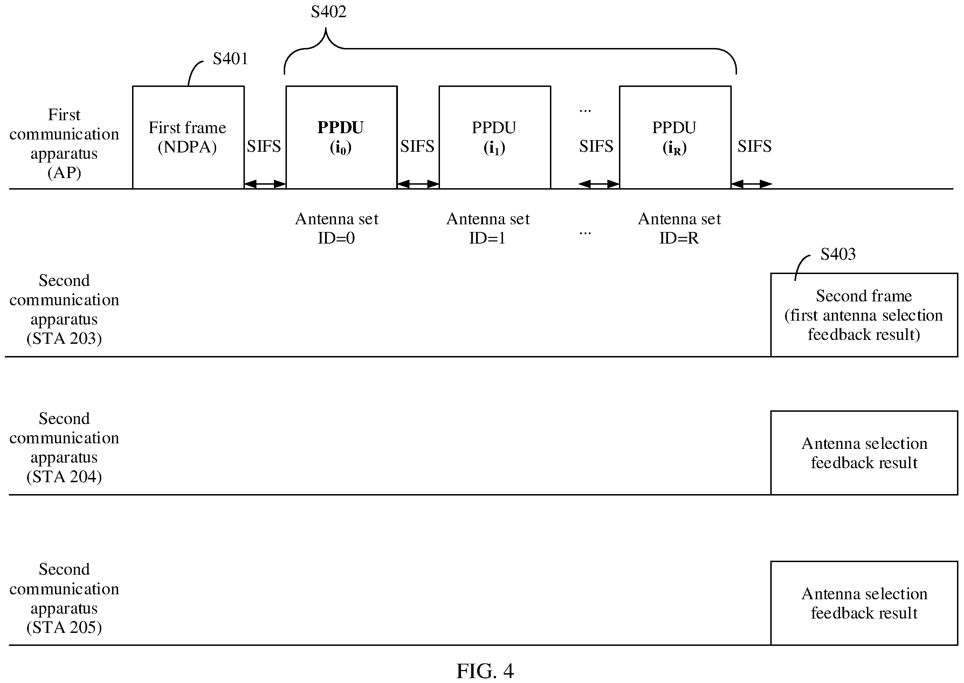

Based on the foregoing content, FIG. 4 is a schematic diagram of an example of signaling interaction of an antenna channel sounding method according to an embodiment of this application.

In FIG. 4, interaction between a first communication apparatus and a second communication apparatus is used as an example for presentation. In this embodiment of this application, the first communication apparatus may also be referred to as an antenna selection transmitter, and the second communication apparatus may also be referred to as an antenna selection responder.

The first communication apparatus in FIG. 4 may be the first communication apparatus in FIG. 1, may be the AP or the STAin FIG. 2, or may be the communication apparatus in FIG. 3. The second communication apparatus in FIG. 4 may be the second communication apparatus in FIG. 1, may be the AP or the STA in FIG. 2, or may be the communication apparatus in FIG. 3. The first communication apparatus and the second communication apparatus in FIG. 4 may be both APs, both STAs, or respectively an AP and a STA. In FIG. 4, an example in which the first communication apparatus is an AP and the second communication apparatus is a STA is used for presentation.

The solution provided in this embodiment of this application is applicable to a transmit antenna channel sounding procedure between an AP and a single STA, or applicable to a transmit antenna channel sounding procedure between an AP and a plurality of STAs. FIG. 4 is a schematic diagram of an example in which a transmit antenna channel sounding procedure is performed between an AP and a plurality of STAs (for example, a STA 203, a STA 204, and a STA 205 in FIG. 4).

As shown in FIG. 4, the method includes the following steps.

**S401:** The first communication apparatus sends a first frame to the second communication apparatus, where the first frame includes first indication information, and the first indication information indicates the second communication apparatus to perform transmit antenna channel sounding.

Correspondingly, the second communication apparatus receives the first frame from the first communication apparatus.

**S402:** The first communication apparatus sends a first physical layer protocol data unit (PHY protocol data unit, PPDU) to the second communication apparatus. The first PPDU is used by the second communication apparatus to perform transmit antenna channel sounding. The first PPDU includes a first identifier field. The first identifier field indicates an identifier of a first transmit antenna set.

Correspondingly, the second communication apparatus receives the first PPDU from the first communication apparatus.

In a possible implementation, in S402, the first communication apparatus may send one or more PPDUs after sending the first frame and after short inter-frame space (short inter-frame space, SIFS), and adjacent PPDUs may also be spaced by SIFS. In the figure, the SIFS is used as an example, and other duration, for example, 25 microseconds, may be used. This is not limited in the solutions of the present invention. The first PPDU is one of one or more PPDUs sent by the first communication apparatus in S402. The PPDU in this embodiment of this application may also be referred to as a physical layer data packet, that is, a physical layer data packet.

In a possible implementation, the first PPDU in S402 may be a PPDU including a data field.

In another possible implementation, the first PPDU in S402 may not include a data field. For example, the first PPDU is a null data packet (null data packet, NDP) that does not include the data field. The NDP does not include the data (data) field, is a special example of the PPDU, and may be usually used for channel sounding (Channel Sounding). Because the NDP does not include the data field, using the NDP as the first PPDU can reduce overheads. Particularly, in a large-scale antenna scenario, because there are a large quantity of antenna sets, there are also a large quantity of first PPDUs for transmit antenna channel sounding, and overheads for transmit antenna selection increase accordingly. However, more overheads can be reduced in a large-scale antenna scenario in this solution in which the transmit antenna channel sounding is performed based on the NDP.

In a possible implementation, the first communication apparatus may send one or more PPDUs to the second communication apparatus. The first PPDU is one of the one or more PPDUs. A PPDU in the one or more PPDUs may include a first identifier field of the PPDU, and the first identifier field of the PPDU in the one or more PPDUs indicates an identifier of a transmit antenna set corresponding to the PPDU. For example, because the first PPDU is used to perform transmit antenna channel sounding on the first transmit antenna set, the first identifier field in the first PPDU indicates the identifier of the first transmit antenna set. For another example, if another PPDU other than the first PPPDU in the one or more PPDUs is a PPDU used to perform transmit antenna channel sounding on a second transmit antenna set, a first identifier field in the PPDU indicates an identifier of the second transmit antenna set.

In this embodiment of this application, the PPDU sent by the first communication apparatus to the second communication apparatus may also be understood as a sounding PPDU used to perform antenna channel sounding. The second communication apparatus may perform transmit antenna channel sounding based on the received one or more PPDUs, to obtain a transmit antenna channel sounding result.

Further, the second communication apparatus may select a transmit antenna set based on the obtained transmit antenna channel sounding result, and indicate an identifier of the selected transmit antenna set to the first communication apparatus. For example, S403 is performed after S402.

**S403:** The second communication apparatus sends a second frame. The second frame includes a first antenna selection feedback result, and the first antenna selection feedback result includes a third identifier field. The third identifier field indicates the identifier of the first transmit antenna set.

It should be noted that the third identifier field in S403 may carry the identifier of the transmit antenna set selected by the second communication apparatus. For example, if the transmit antenna set selected by the second communication apparatus is the first transmit antenna set, the third identifier field may indicate the identifier of the first transmit antenna set. In this embodiment of this application, an example in which the transmit antenna set selected by the second communication apparatus is the first transmit antenna set is used for presentation. During actual application, the second communication apparatus may also select another transmit antenna set (in this case, the third identifier field needs to indicate the another transmit antenna set). This is not limited in this embodiment of this application.

In a possible implementation, in S403, the second communication apparatus performs transmit antenna channel sounding based on the first PPDU to obtain the first antenna selection feedback result, and the first antenna selection feedback result is carried in the second frame for sending.

Correspondingly, the first communication apparatus receives the second frame from the second communication apparatus.

In this embodiment of this application, the second communication apparatus performing transmit antenna channel sounding may be an apparatus having an antenna selection capability (Antenna Selection Capability, ASEL). An antenna selection capability transmit end (for example, the first communication apparatus) may perform ASEL channel sounding by using an NDP sounding PPDU, that is, an "ASEL transmitter uses NDP sounding PPDUs for the ASEL sounding" in English. Alternatively, the second frame may be ASEL feedback (feedback).

In a possible implementation, after S402, one or more second communication apparatuses may perform transmit antenna channel sounding based on the first PPDU to obtain an antenna selection feedback result. In S403, one second communication apparatus is used as an example for description. For differentiation, an antenna selection feedback result of a transmit antenna of the STA 203 (the second communication apparatus) in FIG. 4 is referred to as the first antenna selection feedback result.

It should be noted that antenna selection feedback results fed back by different second communication apparatuses may be different or may be the same. This is not limited in this embodiment of this application. Alternatively, it may be understood that transmit antenna sets of the first communication apparatus selected by different second communication apparatuses may be different or may be the same. This is not limited in this embodiment of this application. For example, in FIG. 4, the STA 203 (the second communication apparatus) selects the first transmit antenna set, and the STA 204 may select the first transmit antenna set, or may select another transmit antenna set.

It can be learned from the foregoing content that, in this embodiment of this application, because the PPDU includes the first identifier field indicating the identifier of the first transmit antenna set, the second communication apparatus determines a correspondence between a transmit antenna channel sounding result corresponding to the PPDU and an identifier of a transmit antenna set, and the second communication apparatus may determine an identifier of a transmit antenna set selected based on one or more transmit antenna channel sounding results. This can prevent the second communication apparatus from incorrectly matching a selected transmit antenna channel sounding result with a transmit antenna set, and perform antenna selection based on the antenna channel sounding results in a large-scale antenna scenario.

With reference to FIG. 4, further description is provided. In S402, the first communication apparatus may send, to the second communication apparatus, one or more PPDUs used by the second communication apparatus to perform transmit antenna channel sounding. Each PPDU may correspond to an antenna set of a group of transmit antennas. An antenna set of each group of transmit antennas corresponds to one antenna set identifier (marked as an antenna set identifier (Identification, ID) in FIG. 4).

Antenna set identifiers shown in FIG. 4 are antenna set IDs that are 0, 1, ..., and R. R may be a positive integer. PPDUs shown in FIG. 4 are respectively a PPDU (i₀), a PPDU (ii), ..., and a PPDU (i_{R}). As shown in FIG. 4, the first communication apparatus sends the PPDU (i₀) by using a transmit antenna set whose antenna set ID is 0. The second communication apparatus performs transmit antenna channel sounding based on the PPDU (i₀), to obtain a transmit antenna channel sounding result corresponding to the transmit antenna set whose antenna set ID is 0. Similarly, the first communication apparatus sends the PPDU (i₁) by using a transmit antenna set whose antenna set ID is 1, ..., and the first communication apparatus sends the PPDU (i_{R}) by using a transmit antenna set whose antenna set ID is R. The second communication apparatus obtains a transmit antenna channel sounding result corresponding to the transmit antenna set whose antenna set ID is 1, ..., and a transmit antenna channel sounding result corresponding to the transmit antenna set whose antenna set ID is R. Further, the second communication apparatus may select a transmit antenna set of the first communication apparatus based on the R transmit antenna channel sounding results, for example, select the first transmit antenna set, and then indicate the selected first transmit antenna set to the first communication apparatus, so that the first communication apparatus sends data to the second communication apparatus by using the first transmit antenna set.

An arrangement of antenna set identifiers in FIG. 4 is merely an example. During actual application, antenna set identifiers corresponding to consecutive PPDUs sent by the first communication apparatus may be randomly arranged, for example, arranged inconsecutively, or not arranged in ascending order. For example, the first communication apparatus may sequentially send the PPDU (ii) by using the transmit antenna set whose antenna set ID is 1, the PPDU (i_{R}) by using the transmit antenna set whose antenna set ID is R, the PPDU (i₀) by using the transmit antenna set whose antenna set ID is 0, and so on.

The following describes related content of the transmit antenna set identifiers mentioned in this embodiment of this application.

In a possible implementation, the first communication apparatus includes k₁ transmit antenna sets. k₁ is a positive integer. R in FIG. 4 may be a positive integer not greater than k₁. R may be equal to ki, or may be less than k₁. The k₁ transmit antenna sets are in a one-to-one correspondence with identifiers of the k₁ transmit antenna sets. In other words, one of the k₁ transmit antenna sets corresponds to one of the identifiers of the k₁ transmit antenna sets, and one of the identifiers of the k₁ transmit antenna sets corresponds to one of the k₁ transmit antenna sets. Identifiers of two transmit antenna sets corresponding to any two transmit antenna sets may be different. Two transmit antenna sets corresponding to identifiers of any two transmit antenna sets may be different. The first transmit antenna set is one of the k₁ transmit antenna sets. The following describes an example in which the first transmit antenna set is used.

There are a plurality of implementations of identifiers of transmit antenna sets. Descriptions are separately provided as follows.

### Implementation a1

In a possible implementation, the identifier of the first transmit antenna set may be a sequence number of the first PPDU corresponding to the first transmit antenna set.

In the implementation a1, the first identifier field may indicate a rank of the first PPDU in R PPDUs sent by the first communication apparatus. When the PPDU sent by the first communication apparatus in S402 is an NDP, it may also be understood that the first identifier field may indicate a rank of the current NDP in R NDPs sent by the first communication apparatus. In this way, the second communication apparatus can determine a correspondence between the first PPDU and an antenna selection feedback result of a transmit antenna based on the sequence number corresponding to the first PPDU indicated by the first identifier field, so that the second communication apparatus can indicate, to the first communication apparatus, a sequence number of a PPDU corresponding to a transmit antenna set selected by the second communication apparatus (for example, the second communication apparatus selects the first transmit antenna set). In this way, the first communication apparatus correctly determines, based on the sequence number of the PPDU fed back by the second communication apparatus, the transmit antenna set selected by the second communication apparatus, thereby implementing a solution for selecting an antenna based on an antenna channel sounding result in a large-scale antenna scenario.

### Implementation a2

In another possible implementation, the identifier of the first transmit antenna set may be a group identifier of the first transmit antenna set.

The first communication apparatus may obtain a correspondence between a transmit antenna set and a group identifier of the transmit antenna set. In this way, when the first communication apparatus sends the PPDU in S402, the indication information indicating the identifier of the transmit antenna set corresponding to the PPDU may be carried.

The second communication apparatus may obtain a correspondence between the transmit antenna set and a group identifier of the transmit antenna set, or may not obtain (or do not learn) the correspondence between the antenna set and the group identifier of the transmit antenna set. Because the PPDU received by the second communication apparatus carries the indication information indicating the identifier of the transmit antenna set corresponding to the PPDU, regardless of whether the second communication apparatus learns the correspondence between the antenna set and the group identifier of the transmit antenna set, the second communication apparatus can determine the correspondence between an antenna selection feedback result of the transmit antenna corresponding to the PPDU and the transmit antenna set, so that the second communication apparatus may indicate, to the first communication apparatus, an identifier of a transmit antenna set corresponding to a transmit antenna set selected by the second communication apparatus (for example, the second communication apparatus selects the first transmit antenna set). In this way, the first communication apparatus correctly determines, based on the identifier of the transmit antenna set fed back by the second communication apparatus, the transmit antenna set selected by the second communication apparatus, thereby selecting an antenna based on an antenna channel sounding result in a large-scale antenna scenario.

The identifier of the antenna set may further include the following possible implementations:

### Implementation a2-1

The first communication apparatus and the second communication apparatus may perform negotiation. The first communication apparatus may notify, through negotiation, the second communication apparatus of a total quantity of transmit antenna sets supported by the first communication apparatus. For example, the first communication apparatus sends a ninth frame to the second communication apparatus. The ninth frame includes seventh indication information. The seventh indication information indicates the total quantity of transmit antenna sets supported by the first communication apparatus. The ninth frame may be an MPDU. In this way, the second communication apparatus can estimate overheads and duration of the transmit antenna selection procedure based on the seventh indication information; and the second communication apparatus can further determine, based on the total quantity of transmit antenna sets supported by the first communication apparatus, whether to establish an association relationship with the first communication apparatus.

The first communication apparatus may set a group identifier of the transmit antenna set for the transmit antenna set supported by the first communication apparatus. The second communication apparatus may not obtain (or do not learn) the correspondence between the antenna set and the group identifier of the transmit antenna set.

Because the transmit antenna sets are in one-to-one correspondence with the identifiers of the transmit antenna sets, the second communication apparatus receives two PPDUs including a same antenna set identifier at different time points. If a detected channel changes, because antenna set identifiers included in the two PPDUs are the same, the second communication apparatus may determine that the channel itself changes.

### Implementation a2-2

In this embodiment of this application, a correspondence between a transmit antenna set and a group identifier at the first communication apparatus may be specified in advance (for example, may be specified in a standard). The correspondence may be preset at the first communication apparatus, or may be sent by another communication apparatus to the first communication apparatus. In this way, the first communication apparatus can learn a transmit antenna set identifier of each transmit antenna set, so that the transmit antenna set identifier is carried when a PPDU is sent.

The correspondence may not be preset at the second communication apparatus, may be preset at the second communication apparatus, or may be sent by another communication apparatus to the second communication apparatus. In this way, the second communication apparatus can determine, based on the identifier of the first transmit antenna set indicated by the first identifier field in the received first PPDU, antennas specifically included in the identifier of the first transmit antenna set. In addition, because the transmit antenna sets are in one-to-one correspondence with the identifiers of the transmit antenna sets, the second communication apparatus receives two PPDUs including a same antenna set identifier at different time points. If a detected channel changes, because antenna set identifiers included in the two PPDUs are the same, the second communication apparatus may determine that the channel itself changes. Further, the second communication apparatus may further determine a specific transmit antenna set corresponding to a transmit antenna set identifier, so as to obtain more link-related information, thereby providing assistance for another subsequent procedure.

### Implementation a2-3

The first communication apparatus and the second communication apparatus negotiate to determine the group identifier of the first transmit antenna set.

The first communication apparatus and the second communication apparatus may perform negotiation. The second communication apparatus learns, through negotiation, a transmit antenna set supported by the first communication apparatus; and after negotiation, the first communication apparatus and the second communication apparatus set a group identifier for the transmit antenna set supported by the first communication apparatus.

For example, the first communication apparatus sends a fourth frame to the second communication apparatus. The second communication apparatus receives the fourth frame. The fourth frame may be an MPDU. The fourth frame includes a fourth identifier field. The fourth identifier field indicates an identifier of at least one transmit antenna set supported by the first communication apparatus. The identifier of the at least one transmit antenna set includes the identifier of the first transmit antenna set.

In this way, the first communication apparatus can learn a transmit antenna set identifier of each transmit antenna set, so that the transmit antenna set identifier is carried when a PPDU is sent. In addition, the second communication apparatus can determine, based on the identifier of the first transmit antenna set indicated by the first identifier field in the received first PPDU, antennas specifically included in the identifier of the first transmit antenna set. It can be learned that, the second communication apparatus may obtain more antenna set-related information through negotiation, and may subsequently obtain more link-related information, thereby further providing assistance for another subsequent procedure.

It should be noted that the implementation a1 and the implementation a2 may be separately implemented, or may be implemented in combination. For example, the identifier of the first transmit antenna set may include a sequence number of the first PPDU corresponding to the first transmit antenna set, and the group identifier of the first transmit antenna set. In this way, the first transmit antenna set can be more accurately indicated, and flexibility of the solution can be improved.

In this embodiment of this application, the identifier of the first transmit antenna set may be indicated by one or more characters, or may be indicated by one or more bits, for example, may be indicated by one or more bits corresponding to binary. Information carried in the first identifier field may be all or some bits corresponding to the identifier of the first transmit antenna set. Descriptions are separately provided as follows.

### Implementation b1

The first identifier field includes all bits corresponding to the identifier of the first transmit antenna set. In other words, the first identifier field carries all bits corresponding to the identifier of the first transmit antenna set. In this way, the second communication apparatus may uniquely determine an identifier of a transmit antenna set based on a first identifier field carried in a PPDU.

### Implementation b2

It is considered that bits in a preamble of a PPDU are valuable, and to reduce used bits in the preamble of the PPDU, the first identifier field includes some bits corresponding to the identifier of the first transmit antenna set. In this way, a quantity of bits occupied by the first identifier field in the PPDU can be reduced. However, this implementation may have the following cases:

When there are a large quantity of transmit antenna sets, because the first identifier field carries only some bits corresponding to the identifier of the first transmit antenna set, there may be two PPDUs in a plurality of PPDUs sent by the first communication apparatus, and fields indicating identifiers of transmit antenna sets in the two PPDUs may carry same content.

In this case, there may be a plurality of implementations: For example, the first communication apparatus carries all bits of the identifier of the transmit antenna set corresponding to the PPDU in the first frame. In this way, the second communication apparatus may determine all bits of the identifier of the transmit antenna set corresponding to the PPDU based on a rank of the received PPDU and the field indicating the identifier of the transmit antenna set in the PPDU, so that the second communication apparatus may indicate all bits of the identifier of the selected first transmit antenna set to the first communication apparatus.

For another example, the second communication apparatus may feed back, to the first communication apparatus, a rank of the PPDU corresponding to the selected first transmit set antenna and some bits corresponding to the identifier of the first transmit antenna set carried in the PPDU, so that the first communication apparatus determines the first transmit antenna set based on the rank of the sent PPDU and the some bits corresponding to the identifier of the first transmit antenna set.

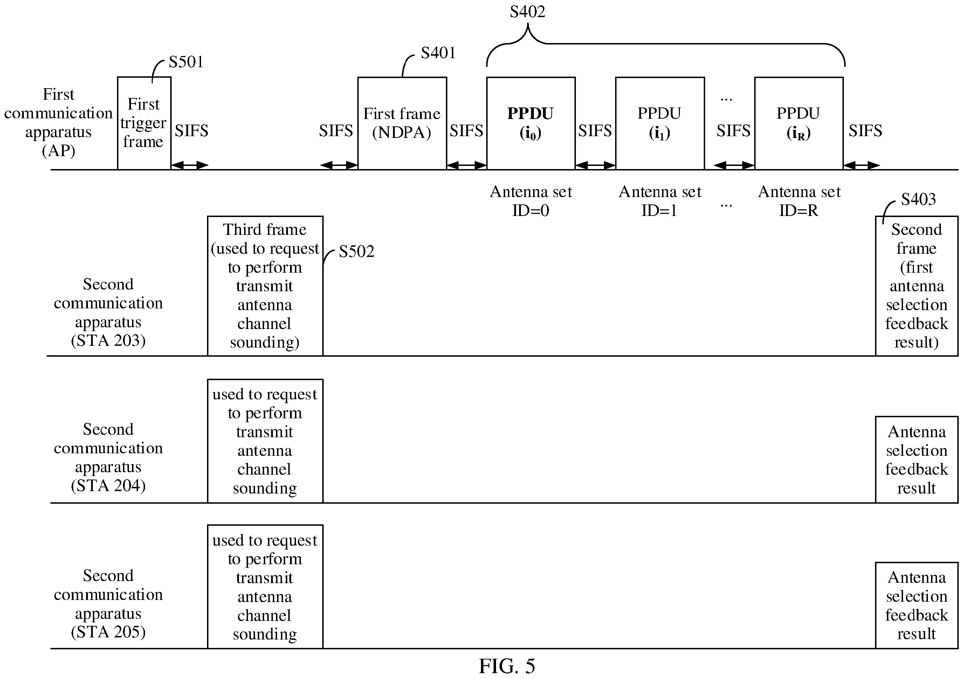

Based on the foregoing content, FIG. 5 is a schematic diagram of an example of signaling interaction of an antenna channel sounding method according to an embodiment of this application. In FIG. 5, S501 and S502 are added on the basis of FIG. 4. It should be noted that S501 and S502 are optional steps, and are not mandatory. After S502, a first communication apparatus may perform S401 and S402, and a second communication apparatus may perform S403. The following further describes a frame in this embodiment of this application with reference to the schematic diagram of signaling interaction shown in FIG. 5.

As shown in FIG. 5, the method includes the following steps.

**S501:** The first communication apparatus sends a first trigger frame.

The first trigger frame may be used to notify the second communication apparatus that receive antenna selection needs to be performed.

**S502:** The second communication apparatus sends a third frame. The third frame includes third indication information. The third indication information is used to request transmit antenna channel sounding.

Correspondingly, the first communication apparatus receives the third frame.

In this embodiment of this application, the second communication apparatus may send the third frame based on triggering of the first trigger frame in S501, or may send the third frame by itself. This is not limited in this embodiment of this application. For differentiation, in FIG. 5, a frame that is of a STA 203 (the second communication apparatus) and that is used to request the first communication apparatus to send information for performing transmit antenna channel sounding is referred to as a third frame. For another frame that is sent by the second communication apparatus and that is used to request the first communication apparatus to send information for performing transmit antenna channel sounding, refer to related description of the third frame.

The third frame may be referred to as a transmit antenna selection sounding request (transmit antenna selection sounding request). In another possible implementation, it may also be understood that the third indication information indicates the first communication apparatus to send information for performing transmit antenna channel sounding. The information for performing transmit antenna channel sounding may be understood as continuous sounding (Sounding) PPDU.

The third frame may further include a quantity of PPDUs that are requested to be sent by the first communication apparatus. In this way, the first communication apparatus may determine, based on the quantity of PPDUs carried in the third frame, a quantity of PPDUs to be sent, so that the first communication apparatus can determine, based on a requirement of the second communication apparatus, a quantity of subsequently sent PPDUs, so that the quantity of PPDUs to be subsequently sent by the first communication apparatus matches a requirement of the second communication apparatus as much as possible. A quantity of PPDUs sent by the first communication apparatus may be the same as or different from the quantity of PPDUs requested in the third frame to be sent by the first communication apparatus.

In a WLAN, an AP and a STA may transmit control signaling, management signaling, or data by using a media access control (Media Access Control, MAC) protocol data unit (MAC Protocol Data Unit, MPDU) (or a MAC frame for short). The third frame may be carried in an MPDU in which a MAC frame header carries a high throughput control (High Throughput Control, HTC) field.

FIG. 6 is a schematic diagram of an example of a structure of an MPDU that can carry a third frame according to an embodiment of this application. As shown in FIG. 6, the MPDU may include a frame header, a frame body (frame body), and a frame check sequence. The frame header may include frame control (frame control), corresponding address information, sequence control (sequence control) information, and the like. The frame body can carry data or management and control information transmitted from an upper layer. The frame check sequence (frame check sequence, FCS) may be used to check whether the MPDU is correctly transmitted.

As shown in FIG. 6, the MPDU includes a high throughput control (high throughput control, HT control) field. The HT control field is classified into three variants: a high throughput variant, a very high throughput variant, and a high-efficiency variant. A variant related to the third frame is a high-efficiency variant, or may be understood as that the third indication information is carried in the high-efficiency variant field of the third frame.

A high-efficiency variant of the HT control field includes an aggregated control (Aggregated Control, A-control) subfield, that is, an A-Control subfield in an HE variant HT control field, or referred to as "the format of the A-Control subfield of the HE variant HT Control field" in English.

The A-Control subfield may carry one to N₁ pieces of control information by using a structure of one or more control identifier fields and a control information field. N₁ may be a positive integer. In the example in FIG. 6, N₁ is an integer greater than 2. The control identifier field may indicate a type of control information, or may determine a length of corresponding control information. An antenna selection command field and an antenna selection data field may be obtained by dividing the control information field. The third indication information is carried in at least one of the control identifier field, the antenna selection command field, or the antenna selection data field in the A-control subfield.

In this embodiment of this application, a control ID value of the control identifier field that is not used in a standard may be used to indicate a transmit antenna selection procedure in this embodiment of this application. For example, the control ID value of the control identifier field may be one of 9 or 11 to 14. In this case, a length of the control information field may be a maximum of 26 bits.

A quantity of bits occupied by the antenna selection command field and the antenna selection data field may be greater than 7. A quantity of bits occupied by the antenna selection command field and the antenna selection data field is not greater than 26. A quantity of bits occupied by the antenna selection data field may be greater than 4.

In this embodiment of this application, the antenna selection command field and the antenna selection data field in FIG. 6 may be set based on an actual requirement. Table 1 shows an example of a possible antenna selection command field and antenna selection data field. Content in a second row in Table 1 is used as an example for description. As shown in Table 1, when the antenna selection command field is 0, it indicates that a current frame is used to perform transmit antenna channel sounding, and the antenna selection data field may indicate a quantity of remaining untransmitted PPDUs. Content of other rows is only an example and is not described herein.

**Table 1 Example of the possible antenna selection command field and antenna selection data field**

| Antenna selection command field | Meaning of an antenna selection command | Antenna selection data field (greater than 4 bits) |
|---|---|---|
| 0 | Transmit antenna selection sounding indication | Indicates a quantity of remaining untransmitted sounding PPDUs |
| 1 | Transmit antenna selection request or transmit antenna selection sounding resumption (resumption) | Indicates 0 when the antenna selection command is a transmit antenna selection request |
| 2 | Receive antenna selection sounding indication | Indicates a quantity of remaining to-be-received sounding PPDUs |
| 3 | Receive antenna selection sounding request | Indicates a quantity of required sounding PPDUs |
| 4 | Sounding label (Sounding Label) | Sequence number of a sounding PPDU corresponding to a channel state information frame during antenna selection feedback |
| 5 | No feedback due to an antenna selection failure or a feedback delay | A sequence number of a first sounding PPDU that is not correctly received. 0 indicates the first sounding PPDU in an antenna selection training sequence, that no sounding PPDU is correctly received, or that an entire retraining (Retraining) sequence is requested. |
| 6 | Transmit antenna selection sounding indication: requesting to explicit channel state information | Indicates the quantity of remaining untransmitted sounding PPDUs |
| 7 | Reserved (Reserved) | Reserved |

It can be seen that in a design of an antenna selection procedure based on a high throughput control (HTC) field in 802.11n, a maximum of four radio frequency chains, eight antennas, and 16 antenna sets are supported. In embodiments of this application, because a quantity of bits in the control information field is large, an MPDU shown in FIG. 6 may carry more types of antenna selection commands, and the antenna selection data field also has more than 4 bits. Therefore, more PPDUs can be supported (more than 16 PPDUs can be supported), and more antenna sets can be supported (more than 16 antenna sets can be supported). In addition, because the antenna selection command field and the antenna selection data field are obtained through division in the existing standard, the antenna selection command field and the antenna selection data field are also obtained by dividing the A-control subfield in the high-efficiency variant field, so that this application can be more compatible with a command form in the existing standard.

In S401, the first communication apparatus may send the first frame based on the third frame sent by the second communication apparatus, or may send the first frame by itself. This is not limited in this embodiment of this application. The first frame may be a frame including the first indication information indicating the second communication apparatus to perform transmit antenna channel sounding. For example, the first frame may be a null data packet announcement (null data Packet announcement, NDPA) frame.

The first frame includes the first indication information. The first frame may further include a quantity of NDPs and/or a second identifier field. The second identifier field indicates the identifier of the first transmit antenna set. In this way, the second communication apparatus may determine, based on the first frame, a quantity of NDPs that need to be subsequently received, so as to check whether an NDP is missed.

In a possible implementation, when the NDPA frame includes the second identifier field, the second identifier field may include all bits corresponding to the identifier of the first transmit antenna set. In this way, the first identifier field in the first PPDU subsequently sent by the first communication apparatus may carry some bits corresponding to the identifier of the first transmit antenna set, so that a quantity of bits occupied by the first identifier field in the first PPDU can be reduced, and the second communication apparatus may determine, based on the second identifier field and the first identifier field, all bits of the identifier of the first transmit antenna set corresponding to the first PPDU.

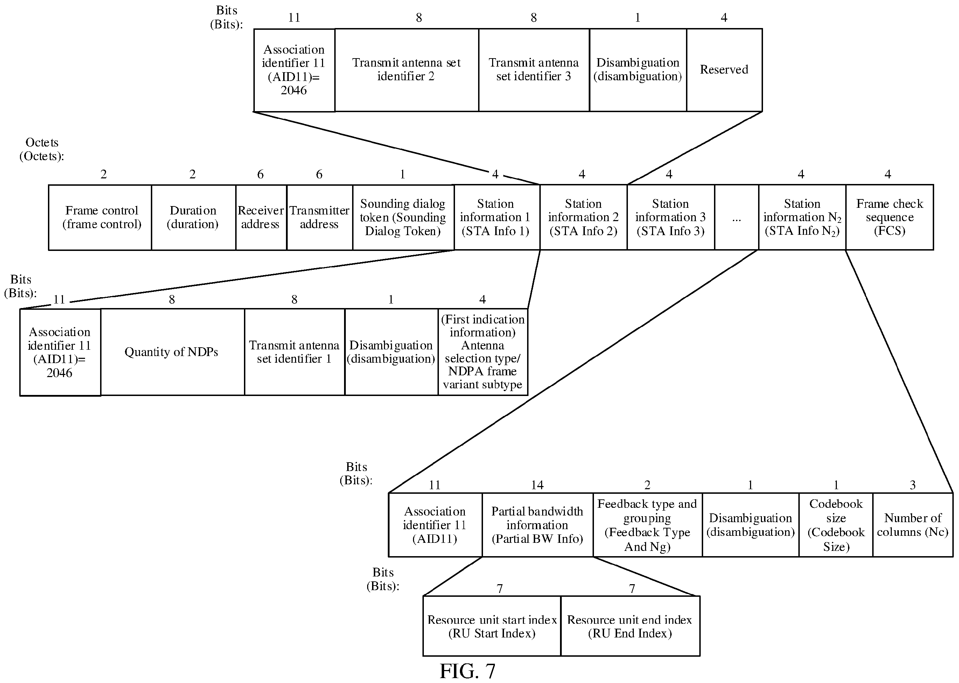

FIG. 7 is a schematic diagram of an example of a structure of a first frame when the first frame is an NDPA frame according to an embodiment of this application. A second identifier field and a quantity of NDPs are not necessarily included in the NDPA frame. In FIG. 7, an example in which the first frame includes the second identifier field, the quantity of NDPs, and first indication information is used for presentation.

As shown in FIG. 7, the NDPA frame may include frame control (Frame Control), duration (Duration), a receiver address, a transmitter address, a sounding dialog token (sounding dialog token), and one or more pieces of station information (for example, station information 1 (STA Info 1), station information 2 (STA Info 2), station information 3 (STA Info 3), ..., and station information N₂ (STA Info N₂) in FIG. 7), and may further include a frame check sequence.

In this embodiment of this application, a specific association identifier of a station information field may indicate that information in the station information field is antenna selection related information. For example, at least one of the first indication information, the quantity of NDPs, or the second identifier field may be carried in at least one station information field that is of the first frame and that includes the second indication information. The second indication information indicates that the station information field includes antenna selection related information. In this way, when the second indication information is identified, the second communication apparatus may determine that the station information field carrying the second indication information carries the antenna selection related information, and then obtain the antenna selection related information from the station information field. The second indication information may distinguish the station information field carrying the antenna selection related information from a station information field corresponding to another conventional station, so that in the solution in which the station information field carries the antenna selection related information, a station information field corresponding to a conventional station is not affected, and compatibility with the existing standard is achieved.

The second indication information may be carried in an association identifier field in the station information field. The second indication information includes one of 2008 to 2043 or 2046. For example, when the association identifier field is one of 2008 to 2043 or 2046, it indicates that the antenna selection related information is transmitted in the station information field. In this way, the second communication apparatus may determine, based on the association identifier field, whether the station information field carries the antenna selection related information or station information corresponding to another second communication apparatus. It can be learned that this solution can be better compatible with the conventional technology. In FIG. 7, an example in which the station information 1 field and the station information 2 field carry the antenna selection related information is used for presentation.

The first indication information may also be referred to as an antenna selection type, antenna selection NDPA variant indication information, or an NDPA frame variant subtype. The first indication information further indicates that a variant of the NDPA frame is an antenna selection variant. Generally, the NDPA frame indicating the second communication apparatus to perform antenna selection is followed by a plurality of (more than one) NDPs, and the NDPA frame indicating the second communication apparatus to perform channel sounding is followed by one NDP. A quantity of NDPs following the NDPA frame affects time for the second communication apparatus to receive the NDP and time for feedback of the second communication apparatus. Therefore, in this embodiment of this application, the first indication information may indicate, to the second communication apparatus, that the variant of the NDPA frame is the antenna selection variant. In addition, information (the second indication information) carried in a specific association identifier field may also have similar effect. In other words, after the second communication apparatus identifies a specific association identifier (the second indication information), because the second indication information indicates that the station information field includes the antenna selection related information, the second communication apparatus may also determine, based on the second indication information, that the variant of the NDPA frame is the antenna selection variant.

From the 802.11 ax standard to the 802.11be standard, an NDPA frame with an HT control field is no longer supported. In this embodiment of this application, the corresponding antenna selection related information is carried in the station information field of the NDPA frame, so that information required for antenna selection can be indicated. In addition, an association identifier in the association identifier field of the station information field is a special association identifier, and content of the station information field can be read by a plurality of second communication apparatuses.

FIG. 7 is further a schematic diagram of information carried in a regular station information field. In FIG. 7, an example in which a station information N₂ field carries information about a regular station is used for presentation. N₂ may be an integer greater than 1. As shown in FIG. 7, an association identifier field of the station information N₂ field carries an association identifier of a station. The station information N₂ field may further include a partial bandwidth information (Partial BW Info), to indicate a resource used by a STA to feed back channel state information. The resource may be a segment of consecutive RUs indicated by a start index (start index) of a resource unit (resource unit, RU) to an end index (end index) of another RU. In addition, a number of grouping (number of grouping, Ng) indicates that Ng subcarriers are grouped into one group. Channel state information may be fed back together for the group of subcarriers in a unified manner, to reduce a quantity of bits occupied for feedback. A codebook size (codebook size) subfield indicates quantization accuracy. Different accuracy corresponds to different overheads.

In this embodiment of this application, the first frame may further indicate which one or more second communication apparatuses perform transmit antenna channel sounding. For example, the association identifier field of the station information field in the NDPA frame may carry an association identifier of a second communication apparatus that needs to perform transmit antenna channel sounding. When a second communication apparatus determines that its own association identifier matches the association identifier carried in the association identifier field in the NDPA frame, the second communication apparatus may determine that it needs to perform transmit antenna channel sounding.

A quantity of bits of each field in FIG. 7 is used as an example, and a specific quantity of bits is not limited in the solutions of the present invention. An NDPA frame structure used in the current IEEE 802.11ac, IEEE 802.11ax, or IEEE 802.11be standards may be further used for the NDPA frame in this embodiment of this application. Alternatively, a new NDPA frame may be further redefined, and related information is carried in a newly defined common field.

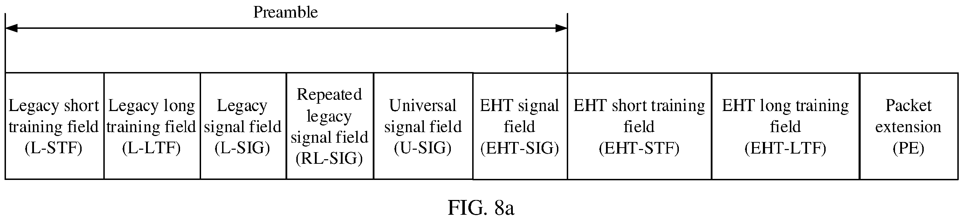

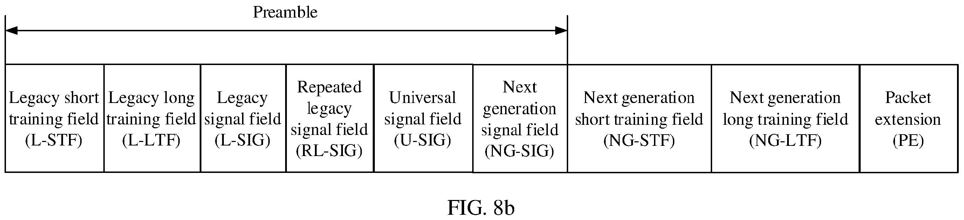

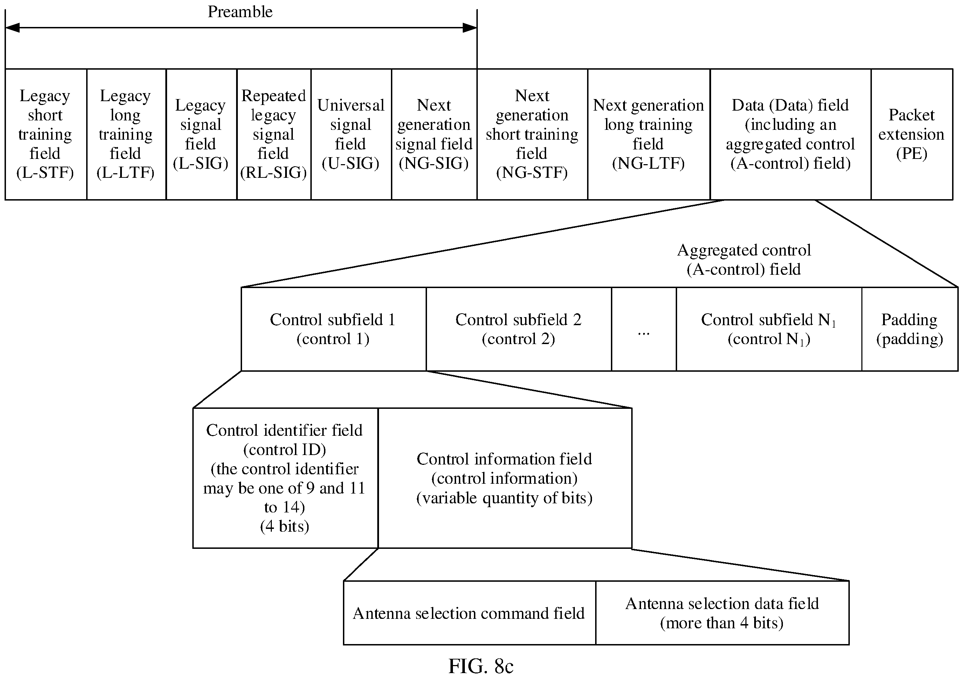

In S402, the first PPDU sent by the first communication apparatus may not include a data field, for example, an NDP, or may include a data field. FIG. 8a and FIG. 8b each show a schematic diagram of an example of a structure of a first PPDU when the first PPDU is an NDP. FIG. 8c shows a schematic diagram of an example of a structure of a first PPDU including a data field. Descriptions are separately provided below with reference to accompanying drawings.

The NDP shown in FIG. 8a may be a sounding PPDU in the 802.11be standard. The NDP shown in FIG. 8a may be an EHT sounding PPDU, which is also referred to as an EHT sounding NDP (EHT sounding NDP), or an EHT NDP. The EHT sounding NDP is a transmission mode of an EHT MU PPDU, and is used for channel sounding, to help a first communication apparatus obtain channel state information between a transmit end and a receive end, so as to perform beamforming and resource scheduling.

As shown in FIG. 8a, the EHT sounding NDP may include a preamble and a packet extension (Packet Extension, PE). A first identifier field is located in a preamble of the first PPDU.

The preamble may include a legacy preamble. The legacy preamble may include a legacy short training field (Legacy Short Training Field, L-STF), a legacy long training field (Legacy Long Training Field, L-LTF), and a legacy signal field (Legacy Signal Field, L-SIG). The legacy preamble is used to ensure coexistence of a new device and a legacy device. The L-SIG may include a length field, and may indirectly indicate duration after the L-SIG in the PPDU.

The preamble may further include a repeated legacy signal field (Repeated L-SIG, RL-SIG), to enhance reliability of the legacy signal field. In addition, an automatic detection method may be further provided to help the second communication apparatus identify that the data packet is an EHT PPDU by detecting, by the receive end, features such as whether two symbols are the same and a remainder of a length in the L-SIG.

The preamble may further include a universal signal field (Universal signal field, U-SIG), and the field may exist in a PPDU in the 802. 1 The standard and subsequent generations of standards. The U-SIG may indicate that the PPDU is an EHT PPDU and a PPDU in a subsequent generation of a standard.

The preamble may further include an extremely high throughput signal field (extremely high throughput signal field, EHT-SIG) after the U-SIG. Both the U-SIG and the EHT-SIG may carry signaling information required for demodulating a subsequent data field.

The first identifier field may include some or all bits in the U-SIG, and/or some or all bits in the EHT-SIG. In the EHT sounding NDP, the U-SIG field may include two symbols, and the EHT-SIG field may include one symbol. Currently, B20 to B24 of the first symbol in the U-SIG, and B14 and B15 of the EHT-SIG field are disregard (Disregard). B25 of the first symbol in the U-SIG field, and B2 and B8 of the second symbol in the U-SIG field are: validate (Validate). Disregard and validate are two types of reserved bits. In this embodiment of this application, these reserved bits in an existing standard may be used as bits in the first identifier field. In this embodiment of this application, one or more bits in B20 to B24 of the first symbol in the U-SIG, B14 and B15 of the EHT-SIG field, B25 of the first symbol in the U-SIG field, and B2 and B8 of the second symbol in the U-SIG field may be used as bits in the first identifier field. Therefore, the solution may be compatible with the conventional technology.

The EHT sounding NDP may further include an extremely high throughput short training field (Extremely High Throughput Short Training Field, EHT-STF) and an extremely high throughput long training field (Extremely High Throughput Long Training Field, EHT-LTF). The EHT-STF and the EHT-LTF may be respectively used for automatic gain control and channel estimation. The packet extension can provide more time for the second communication apparatus to process data.

In FIG. 8a, the EHT sounding NDP is used as an example to describe the first PPDU. This embodiment of this application is also applicable to a standard after the EHT, for example, may be applicable to a next generation (next generation, NG) sounding (sounding) NDP.

FIG. 8b is a schematic diagram of an example of a structure of a first PPDU when the first PPDU is an NG sounding NDP. As shown in FIG. 8b, the NG sounding NDP may include a preamble and a packet extension (Packet Extension, PE). A first identifier field is located in a preamble of the first PPDU.

The preamble may include a legacy preamble. The legacy preamble may include a legacy short training field (Legacy Short Training Field, L-STF), a legacy long training field (Legacy Long Training Field, L-LTF), a legacy signal field (Legacy Signal Field, L-SIG), a repeated legacy signal field (Repeated L-SIG, RL-SIG), a universal signal field (Universal signal field, U-SIG), and a next generation signal field (next generation signal field, NG-SIG). The first identifier field may be some or all bits in the U-SIG, and/or some or all bits in the NG-SIG. In other words, one or more bits in the U-SIG and the NG-SIG are used as the first identifier field.

The NG sounding NDP may further include an extremely high throughput short training field (next generation Short Training Field, NG-STF) and an extremely high throughput long training field (next generation Long Training Field, NG-LTF). The NG-STF and the NG-LTF may be respectively used for automatic gain control and channel estimation. The packet extension can provide more time for the second communication apparatus to process data.

FIG. 8c is a schematic diagram of an example of a structure in which a first PPDU includes a data field. FIG. 8c is presented by using an example in which a data field is added based on FIG. 8b. The first PPDU shown in FIG. 8c may also be referred to as an MPDU. Compared with FIG. 8b, in FIG. 8c, a data (data) field is added in the first PPDU. The data field may include an A-control subfield. For the A-control subfield in FIG. 8c, refer to related description of the A-control subfield in FIG. 6.

The first identifier field may be some or all bits of at least one of a U-SIG, an NG-SIG, or a data field. For example, the first identifier field may be bits in a control identifier field, an antenna selection command field, and an antenna selection data field in FIG. 8c.

For example, the control identifier field may be one of 9 and 11 to 14. The antenna selection command field may define a new identifier, to indicate that the antenna selection command field indicates that the current first PPDU is a first PPDU for transmit antenna channel sounding. The antenna selection data field may indicate an identifier of the first PPDU (for example, may indicate a sequence number of the first PPDU).

In another possible implementation, the first identifier field may further include some bits in the A-control subfield. For example, some bits in the A-control subfield may be marked as the first identifier field, to indicate the identifier of the first PPDU.

FIG. 8c is presented by using an example in which the first PPDU is a next generation PPDU. The first PPDU in this embodiment of this application may also be an EHT PPDU including a data field. For example, the first PPDU may be an EHT MPDU including a data field. In a specific structure form, a data field may be added to the structure shown in FIG. 8a, and the data field may include an A-control subfield. For the A-control subfield, refer to related description of the A-control subfield in FIG. 6. When the first PPDU is the EHT MPDU, the first identifier field may be some or all bits in at least one of the U-SIG, the EHT-SIG, or the data field. For related content, refer to the foregoing description. Details are not described again.

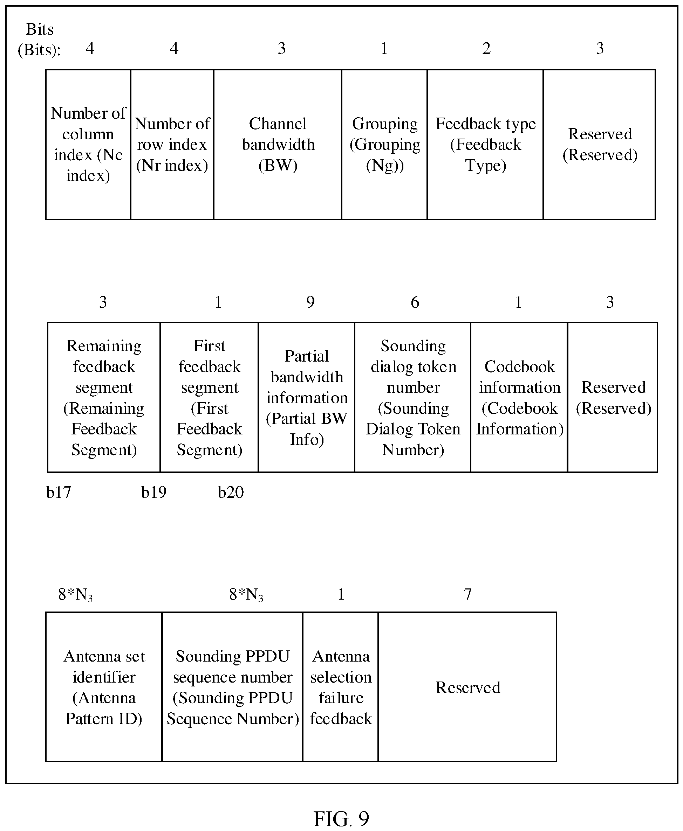

The second frame may include a MIMO control control field. The MIMO control field is located in a frame body, for example, may be carried in a frame body of an action (Action) frame or an action no ACK (Action No ACK) frame. FIG. 9 is a schematic diagram of an example of a structure of a MIMO control field in a second frame when the second frame is a beamforming report frame. It should be noted that, to reflect a frame structure more clearly, the frame structure is divided into three rows in FIG. 9 for presentation.

As shown in FIG. 9, a third identifier field may include some or all bits in the MIMO control field. The third identifier field includes all bits corresponding to the identifier of the first transmit antenna set. In this way, the first communication apparatus may determine, based on the third identifier field in the second frame, that the transmit antenna set selected by the second communication apparatus is the first transmit antenna set. In addition, the third identifier field may be added to the second frame by using bits in the existing multiple-input multiple-output control (MIMO Control) field. This solution does not additionally increase a length of the second frame, and can be better compatible with the conventional technology.

In a possible implementation, the third identifier field may include two parts: an antenna set identifier field and a sounding PPDU sequence number field. The antenna set identifier field may carry a group identifier of the first transmit antenna set, and the sounding PPDU sequence number field may carry the sequence number of the first PPDU corresponding to the first transmit antenna set. In FIG. 9, an example in which the third identifier field includes the antenna set identifier field and the sounding PPDU sequence number field is used for presentation. The third identifier field may alternatively include only one of the antenna set identifier field and the sounding PPDU sequence number field.

In another possible implementation, the second frame may further include an antenna selection failure feedback field. When a value of the field is set to 1, it indicates that current antenna selection fails. If the value of the field is set to 0, it indicates that current antenna selection succeeds. The antenna selection failure feedback field may also be carried in the MIMO control field.

In still another possible implementation, the second frame may further include at least one of a compressed beamforming report, a multi-user-specific beamforming report, and a channel quality state report. For example, the channel quality state report may include, for example, at least one of channel state information (channel state information, CSI) or channel quality information (channel quality information, CQI) corresponding to the PPDU.

One or more of the compressed beamforming report, the multi-user-specific beamforming report, and the channel quality state report may be carried in a field other than the MIMO control field in the second frame. Certainly, at least one of the antenna set identifier field and the sounding PPDU sequence number field that are included in the third identifier field may alternatively be set in another field. For example, the sounding PPDU sequence number field may be located in the A-control subfield.

It can be learned from the foregoing content that, in this embodiment of this application, for example, when an NDPA frame does not support a high throughput control field, a design of an antenna selection procedure based on an NDPA (a first frame)+an NDP (a PPDU)+feedback (a second frame) is designed. The antenna selection procedure may match a current channel sounding procedure, devices at a receive end and a transmit end are slightly modified, and implementation is simple.

In addition, it should be noted that in this embodiment of this application, the second communication apparatus may feed back one antenna selection feedback result, or may feed back a plurality of antenna selection feedback results.

For example, the second communication apparatus may select a group of transmit antennas based on an entire bandwidth. In this case, the first transmit antenna set selected by the second communication apparatus is selected based on the entire bandwidth. For another example, the second communication apparatus may select a group of transmit antennas based on sub-bandwidths. In this case, the first transmit antenna set corresponds to one sub-bandwidth, that is, the first transmit antenna set is selected based on one sub-bandwidth. Certainly, two transmit antenna sets selected by the second communication apparatus based on two sub-bandwidths may be the same or may be different. This is not limited in this embodiment of this application.

In addition, the second communication apparatus may further separately feed back selected transmit antenna sets based on different quantities of spatial streams, or may separately feed back selected transmit antenna sets based on at least one of a quantity of channel conditions, a signal-to-noise ratio, or the like. This is not limited in this embodiment of this application.

In addition, in further another possible implementation, when there are a plurality of second communication apparatuses, the first communication apparatus may send a first trigger frame, to trigger the plurality of second communication apparatuses to feed back their respective antenna selection feedback result. In addition, a quantity of bits in FIG. 9 is merely an example, and N₃ is a positive integer.

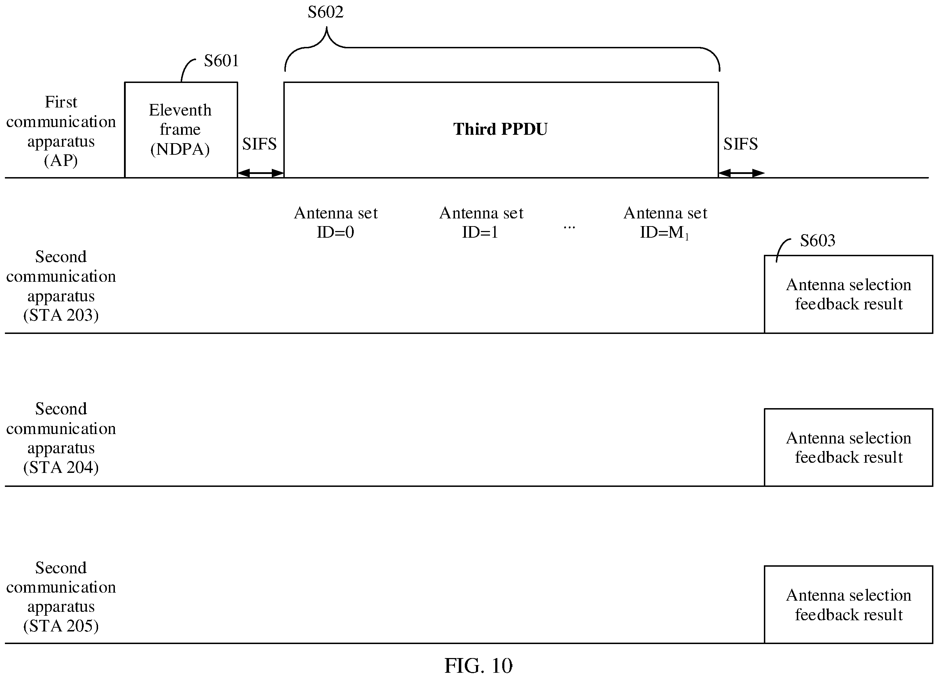

Based on the foregoing content, FIG. 10 is a schematic diagram of an example of signaling interaction of an antenna channel sounding method according to an embodiment of this application.

In FIG. 10, interaction between a first communication apparatus and a second communication apparatus is used as an example for presentation. In this embodiment of this application, the first communication apparatus may also be referred to as an antenna selection transmitter, and the second communication apparatus may also be referred to as an antenna selection responder.

The first communication apparatus in FIG. 10 may be the first communication apparatus in FIG. 1, may be the AP or the STA in FIG. 2, or may be the communication apparatus in FIG. 3. The second communication apparatus in FIG. 10 may be the second communication apparatus in FIG. 1, may be the AP or the STA in FIG. 2, or may be the communication apparatus in FIG. 3. The first communication apparatus and the second communication apparatus in FIG. 10 may be both APs, both STAs, or respectively an AP and a STA. In FIG. 10, an example in which the first communication apparatus is an AP and the second communication apparatus is a STA is used for presentation.

The solution provided in this embodiment of this application is applicable to a transmit antenna channel sounding procedure between an AP and a single STA, or applicable to a transmit antenna channel sounding procedure between an AP and a plurality of STAs. FIG. 10 is a schematic diagram of an example in which a transmit antenna channel sounding procedure is performed between an AP and a plurality of STAs (for example, a STA 203, a STA 204, and a STA 205 in FIG. 10).

As shown in FIG. 10, the method includes the following steps.

S601: The first communication apparatus sends an eleventh frame to the second communication apparatus, where the eleventh frame includes first indication information, and the first indication information indicates the second communication apparatus to perform transmit antenna channel sounding.

Correspondingly, the second communication apparatus receives the eleventh frame from the first communication apparatus.

S602: The first communication apparatus sends a third PPDU to the second communication apparatus. The third PPDU is used by the second communication apparatus to perform transmit antenna channel sounding.

Correspondingly, the second communication apparatus receives the third PPDU from the first communication apparatus.

The third PPDU may include M₁ first information fields corresponding to M₁ transmit antenna sets. M₁ is an integer greater than 1. The first information field is used to perform transmit antenna channel sounding.

S603: The second communication apparatus feeds back an antenna selection feedback result.

It can be learned from the solution that, in this embodiment of this application, the first communication apparatus may aggregate PPDUs corresponding to the M₁ transmit antenna sets that need to be sent in S602 into one PPDU, to reduce overheads, improve antenna selection efficiency, and improve a system throughput.

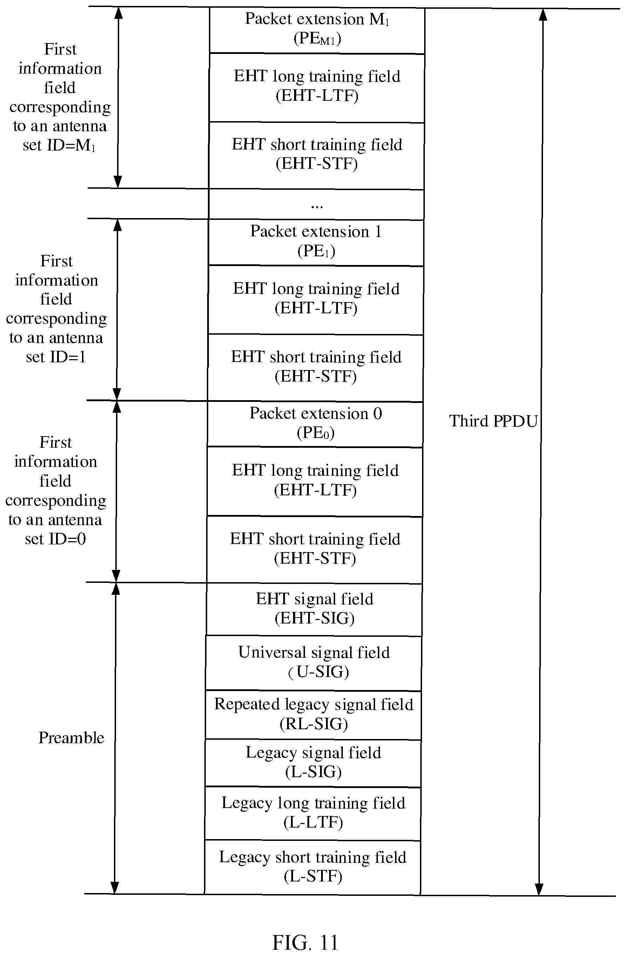

FIG. 11 is a schematic diagram of an example of a frame structure of a third PPDU. As shown in FIG. 11, the third PPDU may include M₁ first information fields corresponding to M₁ transmit antenna sets. M₁ may be an integer greater than 1. The first information field is used to perform transmit antenna channel sounding.

The first information field includes at least one of an EHT short training field, an EHT long training field, and a packet extension field. Any two first information fields use different transmit antenna sets. For example, three transmit antenna sets shown in FIG. 11 are respectively a first information field corresponding to a transmit antenna set whose antenna set ID is 0, a first information field corresponding to a transmit antenna set whose antenna set ID is 1, ..., and a first information field corresponding to a transmit antenna set whose antenna set ID is M₁.

As shown in FIG. 11, the third PPDU may further include a preamble. The preamble includes at least one of the following fields: an L-STF, an L-LTF, an L-SIG, an RL-SIG, a U-SIG, or an EHT-SIG. For related description of the preamble, refer to the related description in FIG. 8a. Details are not described herein again.

It can be seen from FIG. 11 that, in S602, the M₁ PPDUs corresponding to M₁ transmit antenna sets that originally need to be sent are aggregated into one third PPDU, so that (M₁-1) preambles can be reduced.

In addition, it can be seen from FIG. 11 that each first information field may include one packet extension field, for example, a packet extension 0 in the first information field corresponding to the antenna set ID=0, a packet extension 1 in the first information field corresponding to the antenna set ID=1, ..., and a packet extension M₁ in the first information field corresponding to the antenna set ID=M₁ shown in FIG. 11. Duration of any two data extensions in packet extensions (the packet extension 0 to the packet extension (M₁-1)) other than the last packet extension M₁ may be the same. Duration of these packet extension fields may be used to provide more processing time for the second communication apparatus. In addition, time may be provided for antenna switching by the first communication apparatus. Further, the duration may be set to a shorter value, and is sufficient for antenna switching by the first communication apparatus.

In a possible implementation, duration of packet extension fields in at least two first information fields of the M₁ first information fields may be different. For example, duration of the packet extension M₁ may be different from duration of the packet extension 1. The duration of the packet extension M₁ may be set to a slightly longer value. The duration of the packet extension 1 may be set to a slightly shorter value, and is sufficient for antenna switching by the first communication apparatus. In addition, in this implementation, duration of any two data extensions in packet extensions (the packet extension 0 to the packet extension (M₁-1)) other than the last packet extension M₁ may be the same or may be different.

In another possible implementation, duration of packet extension fields in any two of the M₁ first information fields is the same. In this way, consistency of a receiving procedure can be improved.

Compared with a solution in which the first communication apparatus transmits PPDUs corresponding to M₁ transmit antennas, in the solution shown in FIG. 11, only one third PPDU needs to be transmitted, to achieve an objective of transmitting M₁ groups of information used to perform transmit antenna channel sounding. In this solution, (M₁-1) groups of preambles (the L-STF to the EHT-SIG) and short inter-frame space SIFS can be reduced. When time of any two of the packet extension 0 to the packet extension (M₁-1) is equal, and the duration of the packet extension 0 is shorter than the duration of the packet extension M₁, a time difference between the packet extension M₁ and the packet extension 0 may be further reduced.

For example, the preamble (the L-STF to the EHT-SIG) in the third PPDU lasts a total of 36 microseconds, the duration of the packet extension M₁ is 16 microseconds, and SIFS lasts 16 microseconds. If time of any one of the packet extension 0 to the packet extension (M₁-1) is 4 microseconds, and M₁=64, compared with transmission of PPDUs corresponding to M₁ transmit antennas (the PPDU include a preamble and one first information field, and a data extension field included in the first information field is 16 microseconds), in this case, 36×(64-1)+16×(64-1)+(16-4)×(64-1)=4032 microseconds can be reduced by transmitting the third PPDU.

It should be noted that FIG. 11 is merely an example of a PPDU structure of a possible third PPDU. In this example, the EHT-SIG is transmitted once. In still another possible implementation, the EHT-SIG may appear in groups. For example, each first information field includes one EHT-SIG. In addition, in FIG. 10, an example in which the first communication apparatus transmits one third PPDU is used for presentation. During actual application, in S602, the first communication apparatus may send one or more third PPDUs, and quantities of first information fields included in third PPDUs may be the same or may be different.

In addition, it should be noted that FIG. 10 in this embodiment of this application provides an implementation in which PPDUs sent by the first communication apparatus may be aggregated. This implementation may be used in combination with the antenna selection solution provided in FIG. 4 or FIG. 5, or may be independently implemented. The eleventh frame in S601 in this embodiment of this application may be an NDPA frame.

When this implementation is used in combination, for related content of S601, refer to the related content of S401, and for related content of the eleventh frame, refer to the related description of the first frame. For related content of S603, refer to the related content of S403. For related content of the antenna selection feedback result, refer to the related description of the second frame. When this implementation is used in combination, the quantity of NDPs mentioned in FIG. 4 or FIG. 5 may be equivalent to the quantity of first information fields mentioned in FIG. 10. When this implementation is used in combination, for a structure of the first PPDU, refer to the structure of the third PPDU. In other words, the first PPDU may also include first information fields corresponding to a plurality of transmit antenna sets. For example, the first PPDU includes a first information field corresponding to a first transmit antenna, and further includes a first information field corresponding to a second transmit antenna. The first PPDU includes one preamble. In addition, the U-SIG in the preamble may be disposed in each first information field. The first identifier field may be carried in each first information field.

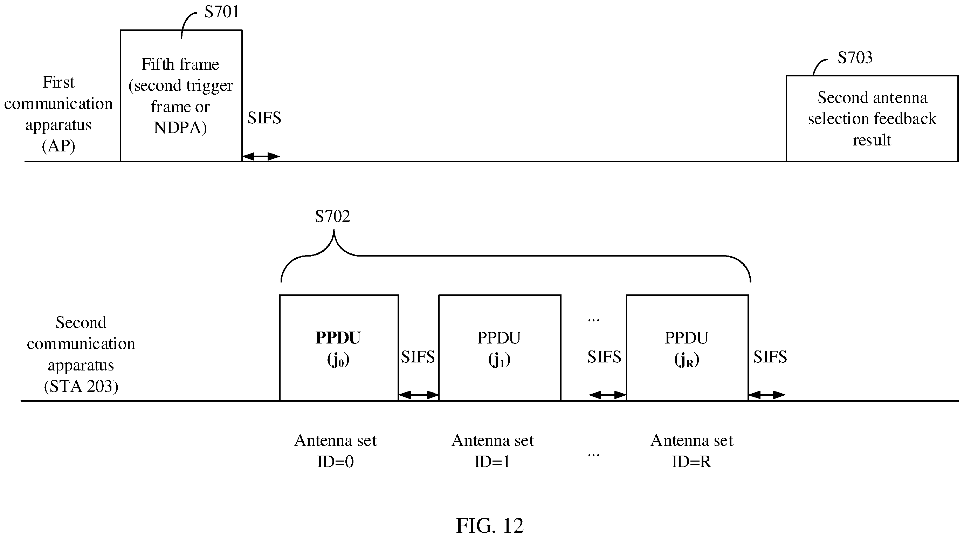

Based on the foregoing content, FIG. 12 is a schematic diagram of an example of signaling interaction of a receive antenna channel sounding method according to an embodiment of this application.

In FIG. 12, interaction between a first communication apparatus and a second communication apparatus is used as an example for presentation. In this embodiment of this application, the first communication apparatus may also be referred to as an antenna selection transmitter, and the second communication apparatus may also be referred to as an antenna selection responder.

The first communication apparatus in FIG. 12 may be the first communication apparatus in FIG. 1, may be the AP or the STA in FIG. 2, or may be the communication apparatus in FIG. 3. The second communication apparatus in FIG. 12 may be the second communication apparatus in FIG. 1, may be the AP or the STA in FIG. 2, or may be the communication apparatus in FIG. 3. The first communication apparatus and the second communication apparatus in FIG. 12 may be both APs, both STAs, or respectively an AP and a STA. In FIG. 12, an example in which the first communication apparatus is an AP and the second communication apparatus is a STA is used for presentation.

The solution provided in this embodiment of this application is applicable to a receive antenna channel sounding procedure between an AP and a single STA, or applicable to a receive antenna channel sounding procedure between an AP and a plurality of STAs. FIG. 12 is a schematic diagram of an example in which a receive antenna channel sounding procedure is performed between an AP and a STA (for example, a STA 203 in FIG. 12).

It should be noted that the solution provided in FIG. 12 is used to select a receive antenna at the first communication apparatus. The solutions provided in FIG. 4 and FIG. 10 are used to select a transmit antenna at the first communication apparatus. The solution in FIG. 12 may be used in combination with those in FIG. 4 or FIG. 10, or may be independently implemented. The solution in FIG. 4 or FIG. 10 may also be independently implemented, or may be used in combination with the solution in FIG. 12. When the solutions in FIG. 4 and FIG. 12 are used in combination, the first communication apparatus may select a transmit antenna according to the solution in FIG. 4, and select a receive antenna according to the solution in FIG. 12. When the solutions in FIG. 10 and FIG. 12 are used in combination, the first communication apparatus may select a transmit antenna according to the solution in FIG. 10, and select a receive antenna according to the solution in FIG. 12.

As shown in FIG. 12, the method includes the following steps.

S701: The first communication apparatus sends a fifth frame to the second communication apparatus, where the fifth frame includes fourth indication information, and the fourth indication information indicates the second communication apparatus to perform receive antenna channel sounding on the first communication apparatus.

Correspondingly, the second communication apparatus receives the fifth frame from the first communication apparatus.

In this embodiment of this application, the fifth frame may have a plurality of implementations. For example, the fifth frame may be a second trigger frame, or the fifth frame is an NDPA frame. Details are described in the following, and are not described herein.

S702: The second communication apparatus sends a second PPDU to the first communication apparatus. The second PPDU is used by the second communication apparatus to perform receive antenna channel sounding. The second PPDU includes a fifth identifier field, and the fifth identifier field indicates an identifier of a first receive antenna set.

Correspondingly, the first communication apparatus receives the second PPDU from the second communication apparatus.

In a possible implementation, in S702, the second communication apparatus may send one or more PPDUs after the first communication apparatus sends the fifth frame and after short inter-frame space (short inter-frame space, SIFS), and adjacent PPDUs may also be spaced by SIFS. The second PPDU is one of one or more PPDUs sent by the second communication apparatus in S702.

In a possible implementation, the second PPDU in S702 may be a PPDU including a data field.

In another possible implementation, the second PPDU in S702 may not include a data field. For example, the second PPDU is an NDP that does not include the data field. Because the NDP does not include the data field, using the NDP as the second PPDU can reduce overheads. Particularly, in a large-scale antenna scenario, because there are a large quantity of antenna sets, there are also a large quantity of second PPDUs for receive antenna channel sounding, and overheads for receive antenna selection increase accordingly. However, more overheads can be reduced in a large-scale antenna scenario in this solution in which the receive antenna channel sounding is performed based on the NDP.

In a possible implementation, the second communication apparatus may send one or more PPDUs to the first communication apparatus. The second PPDU is one of the one or more PPDUs. A PPDU in the one or more PPDUs may include a fifth identifier field, and the fifth identifier field of the PPDU in the one or more PPDUs indicates an identifier of a receive antenna set corresponding to the PPDU. For example, because the second PPDU is used to perform receive antenna channel sounding on the first receive antenna set, the fifth identifier field in the second PPDU indicates the identifier of the first receive antenna set. For another example, if another PPDU other than the second PPDU in the one or more PPDUs is a PPDU used to perform receive antenna channel sounding on a second receive antenna set, a fifth identifier field in the PPDU indicates an identifier of the second receive antenna set.

In this embodiment of this application, the PPDU sent by the second communication apparatus to the first communication apparatus may also be understood as a sounding PPDU used to perform antenna channel sounding. In a possible implementation, S703 is performed after S702.

S703: The first communication apparatus performs receive antenna channel sounding based on the second PPDU to obtain an second antenna selection feedback result.

In S703, the first communication apparatus may receive, based on different receive antenna sets, the plurality of PPDUs sent by the second communication apparatus, to perform receive antenna channel sounding on the different receive antenna sets to obtain the second antenna selection feedback result.

In this embodiment of this application, the first communication apparatus performing receive antenna channel sounding may be an apparatus having an antenna selection capability (Antenna Selection Capability, ASEL). An antenna selection capability transmit end (for example, the second communication apparatus) may perform ASEL channel sounding by using an NDP sounding PPDU.

In S703, the first communication apparatus may perform receive antenna channel sounding based on the received one or more PPDUs, to obtain one or more receive antenna channel sounding results. Further, the first communication apparatus may select a receive antenna set based on the obtained receive antenna channel sounding results.

Further, the first communication apparatus may indicate an identifier of the selected receive antenna set to the second communication apparatus. For example, in S703, the first communication apparatus may further add the second antenna selection feedback result in a sixth frame for sending. The first communication apparatus sends the sixth frame. The sixth frame includes the second antenna selection feedback result. The second antenna selection feedback result includes a seventh identifier field. The seventh identifier field indicates the identifier of the first receive antenna set.

It should be noted that the seventh identifier field may carry the identifier of the receive antenna set selected by the first communication apparatus. For example, if the receive antenna set selected by the first communication apparatus is the first receive antenna set, the seventh identifier field may indicate the identifier of the first receive antenna set. In this embodiment of this application, an example in which the receive antenna set selected by the first communication apparatus is the first receive antenna set is used for presentation. During actual application, the first communication apparatus may also select another receive antenna set (in this case, the seventh identifier field needs to indicate the another receive antenna set). This is not limited in this embodiment of this application.

In this embodiment of this application, the selected transmit antenna of the first communication apparatus may be the same as or different from the selected receive antenna of the first communication apparatus. In other words, the first transmit antenna set and the first receive antenna set may be a same antenna set, or may be different antenna sets. This is not limited in this embodiment of this application.

Correspondingly, the second communication apparatus receives the sixth frame from the first communication apparatus.

It should be noted that the first communication apparatus may send the sixth frame, or may not send the sixth frame. S403 is optional. The first communication apparatus performs receive antenna channel sounding based on the second PPDU to obtain the second antenna selection feedback result, and receives data from the second communication apparatus based on the selected first receive antenna set.

In a possible implementation, after S702, the first communication apparatus may perform receive antenna channel sounding based on the PPDUs from the one or more second communication apparatuses, to obtain the antenna selection feedback result. In S703, one second communication apparatus is used as an example for description, and a solution of another second communication apparatus is similar to the foregoing solution of the second communication apparatus. Details are not described again.

It should be noted that antenna selection feedback results corresponding to different second communication apparatuses may be different or may be the same. This is not limited in this embodiment of this application. Alternatively, it may be understood that receive antenna sets of the first communication apparatus corresponding to different second communication apparatuses may be different or may be the same. This is not limited in this embodiment of this application. For example, in FIG. 12, the STA 203 (the second communication apparatus) selects the first receive antenna set, and another second communication apparatus may select the first receive antenna set or another receive antenna set.

It can be learned from the foregoing content that, in this embodiment of this application, because the fifth identifier field is added to the second PPDU, the first communication apparatus may determine the identifier of the first receive antenna set corresponding to the received second PPDU, and the first communication apparatus may determine the receive antenna channel sounding result obtained based on the NDP to be the receive antenna channel sounding result corresponding to the identifier of the first receive antenna set. Therefore, the first communication apparatus may determine the identifier of the receive antenna set selected based on one or more receive antenna channel sounding results, and then receive data from the second communication apparatus based on a receive antenna set corresponding to the identifier of the selected receive antenna set, so that antenna selection can be performed based on the antenna channel sounding result in a large-scale antenna scenario.

With reference to FIG. 12, further description is provided. In S702, the second communication apparatus may send, to the first communication apparatus, one or more PPDUs used by the first communication apparatus to perform receive antenna channel sounding. Each PPDU may correspond to an antenna set of a group of receive antennas. An antenna set of each group of receive antennas corresponds to one antenna set identifier (marked as an antenna set identifier (Identification, ID) in FIG. 12).

Antenna set identifiers shown in FIG. 12 are antenna set IDs that are 0, 1, ..., and R. R may be a positive integer. It should be noted that there is no necessary relationship between a quantity of transmit antenna sets and a quantity of receive antenna sets of the first communication apparatus, and the quantity of transmit antenna sets and the quantity of receive antenna sets may be the same or may be different. (R+1) receive antenna sets shown in FIG. 12 are merely examples. PPDUs shown in FIG. 12 are respectively a PPDU (j₀), a PPDU (j₁), ..., and a PPDU (j_{R}). As shown in FIG. 12, the second communication apparatus sends the PPDU (j₀) by using a receive antenna set whose antenna set ID is 0. The first communication apparatus performs receive antenna channel sounding based on the PPDU (j₀), to obtain a receive antenna channel sounding result corresponding to the receive antenna set whose antenna set ID is 0. Similarly, the second communication apparatus sends the PPDU (j₁) by using a receive antenna set whose antenna set ID is 1, ..., and the second communication apparatus sends the PPDU (j_{R}) by using a receive antenna set whose antenna set ID is R. The first communication apparatus obtains the receive antenna channel sounding result corresponding to the receive antenna set whose antenna set ID is 1, ..., and the receive antenna channel sounding result corresponding to the receive antenna set whose antenna set ID is R. Further, the first communication apparatus may select a receive antenna set of the first communication apparatus based on the R receive antenna channel sounding results, for example, select the first receive antenna set, and then receive data from the second communication apparatus by using the first receive antenna set. Further, the first communication apparatus may further indicate the selected first receive antenna set to the second communication apparatus.

An arrangement of antenna set identifiers in FIG. 12 is merely an example. During actual application, antenna set identifiers of consecutive PPDUs received by the first communication apparatus may be randomly arranged, for example, inconsecutive, or not arranged in ascending order. For example, the second communication apparatus may sequentially receive the PPDU (j₁) from the second communication apparatus by using the transmit antenna set whose antenna set ID is 1, receive the PPDU (j_{R}) from the second communication apparatus by using the transmit antenna set whose antenna set ID is R, receive the PPDU (j₀) from the second communication apparatus by using the transmit antenna set whose antenna set ID is 0, and so on.

The following describes related content of the receive antenna set identifiers mentioned in this embodiment of this application.

In a possible implementation, the first communication apparatus includes k₂ receive antenna sets. k₂ is a positive integer. R in FIG. 12 may be a positive integer not greater than k₂. R may be equal to k₂, or may be less than k₂. The k₂ receive antenna sets are in a one-to-one correspondence with identifiers of the k₂ receive antenna sets. In other words, one of the k₂ receive antenna sets corresponds to one of the identifiers of the k₂ receive antenna sets, and one of the identifiers of the k₂ receive antenna sets corresponds to one of the k₂ receive antenna sets. Identifiers of two receive antenna sets corresponding to any two receive antenna sets may be different. Two receive antenna sets corresponding to identifiers of any two receive antenna sets may be different. The first receive antenna set is one of the k₂ receive antenna sets. The following describes an example in which the first receive antenna set is used.

There are a plurality of implementations of identifiers of receive antenna sets. Descriptions are separately provided as follows.

### Implementation c1

In a possible implementation, the identifier of the first receive antenna set may be a sequence number of the second PPDU corresponding to the first receive antenna set.

In the implementation c1, the fifth identifier field may indicate a rank of the second PPDU in R PPDUs sent by the second communication apparatus. When the PPDU sent by the first communication apparatus in S702 is an NDP, it may also be understood that the fifth identifier field may indicate a rank of the current NDP in R NDPs sent by the second communication apparatus. In this way, the first communication apparatus may determine a correspondence between the second PPDU and an antenna selection feedback result of a receive antenna based on the sequence number corresponding to the second PPDU indicated by the fifth identifier field. Therefore, the first communication apparatus may determine the identifier of the receive antenna set selected based on one or more receive antenna channel sounding results, and then receive data from the second communication apparatus based on a receive antenna set corresponding to the identifier of the selected receive antenna set, so that antenna selection can be performed based on the antenna channel sounding result in a large-scale antenna scenario.

### Implementation c2

In another possible implementation, the identifier of the first receive antenna set may be a group identifier of the first receive antenna set. For related content of the group identifier of the first receive antenna set, refer to the related content of the group identifier of the first transmit antenna set. For the implementation c2, refer to the implementation a2.

The identifier of the receive antenna set may further include the following possible implementations:

### Implementation c2-1

The first communication apparatus and the second communication apparatus may perform negotiation. The first communication apparatus may notify, through negotiation, the second communication apparatus of a total quantity of receive antenna sets supported by the first communication apparatus. For example, the first communication apparatus sends a tenth frame to the second communication apparatus. The tenth frame includes eighth indication information. The eighth indication information indicates the total quantity of receive antenna sets supported by the first communication apparatus. The tenth frame may be an MPDU. In this way, the second communication apparatus can estimate overheads and duration of the receive antenna selection procedure based on the eighth indication information; and the second communication apparatus may further determine, based on the total quantity of receive antenna sets supported by the first communication apparatus, whether to establish an association relationship with the first communication apparatus.

For the implementation c2-1, refer to the implementation a2-1, and details are not described herein again.

### Implementation c2-2

In this embodiment of this application, a correspondence between a receive antenna set and a group identifier at the first communication apparatus may be specified in advance (for example, may be specified in a standard). The correspondence may be preset at the first communication apparatus, or may be sent by another communication apparatus to the first communication apparatus. In this way, the first communication apparatus can learn a receive antenna set identifier of each receive antenna set, so that the receive antenna set identifier is carried when a PPDU is sent.

For the implementation c2-2, refer to the implementation a2-2, and details are not described herein again.

### Implementation c2-3

The first communication apparatus and the second communication apparatus negotiate to determine the group identifier of the first receive antenna set.

The first communication apparatus and the second communication apparatus may perform negotiation. The second communication apparatus learns, through negotiation, a receive antenna set supported by the first communication apparatus; and after negotiation, the first communication apparatus and the second communication apparatus set a group identifier for the receive antenna set supported by the first communication apparatus. For example, the first communication apparatus sends an eighth frame to the second communication apparatus. The eighth frame may be an MPDU. The second communication apparatus receives the eighth frame. The eighth frame includes an eighth identifier field. The eighth identifier field indicates an identifier of at least one receive antenna set supported by the first communication apparatus. The identifier of the at least one receive antenna set includes the identifier of the first receive antenna set.

In this way, the second communication apparatus can learn a receive antenna set identifier of each receive antenna set, so that the receive antenna set identifier is carried when a PPDU is sent. In addition, it can be learned that, the second communication apparatus may obtain more antenna set-related information through negotiation, and may subsequently obtain more link-related information, thereby further providing assistance for another subsequent procedure.

For the implementation c2-3, refer to the implementation a2-3, and details are not described herein again.

It should be noted that the implementation c1 and the implementation c2 may be separately implemented, or may be implemented in combination. For example, the identifier of the first receive antenna set may include a sequence number of the second PPDU corresponding to the first receive antenna set, and the group identifier of the first receive antenna set. In this way, the first receive antenna set can be more accurately indicated, and flexibility of the solution can be improved.

In this embodiment of this application, the identifier of the first receive antenna set may be indicated by one or more characters, or may be indicated by one or more bits, for example, may be indicated by one or more bits corresponding to binary. Information carried in the fifth identifier field may be all or some bits corresponding to the identifier of the first receive antenna set. This implementation is similar to the related content of the first transmit antenna set. For details, refer to the related content of the **implementation b1 and implementation b2** of the first transmit antenna set. Details are not described herein again.

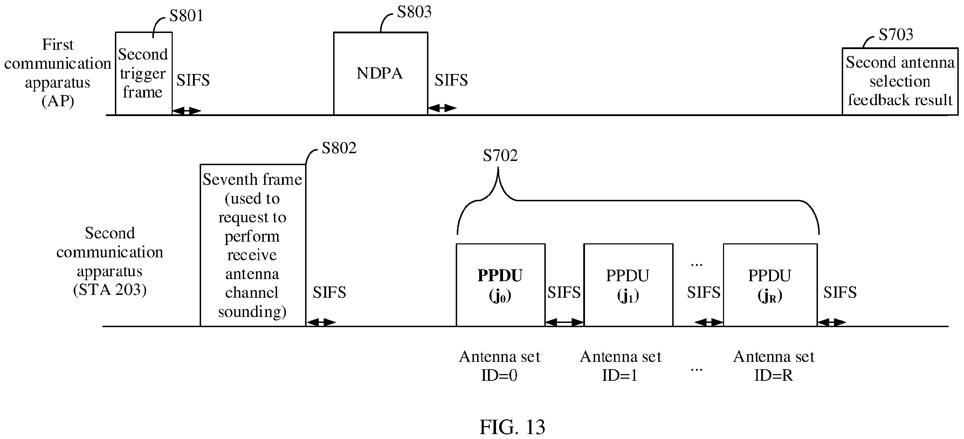

Based on the foregoing content, FIG. 13 is a schematic diagram of an example of signaling interaction of an antenna channel sounding method according to an embodiment of this application. In FIG. 13, S801, S802 and S803 are added on the basis of FIG. 12. Because the fifth frame in S701 in FIG. 12 may be the NDPA frame, or may be the second trigger frame, S701 may include two implementations: S801 and S803. After S801 or S803, a second communication apparatus may perform S702, and a first communication apparatus may perform S703. The following further describes a frame in this embodiment of this application with reference to the schematic diagram of signaling interaction shown in FIG. 13.

As shown in FIG. 13, the method includes the following steps.

**S801:** The first communication apparatus sends a second trigger frame.

The second trigger frame may be used to notify the second communication apparatus that receive antenna selection needs to be performed.

**S802:** The second communication apparatus sends a seventh frame. The seventh frame includes sixth indication information. The sixth indication information is used to request receive antenna channel sounding.

Correspondingly, the first communication apparatus receives the seventh frame.

In this embodiment of this application, the second communication apparatus may send the seventh frame based on triggering of the second trigger frame in S801, or may send the seventh frame by itself. This is not limited in this embodiment of this application.

The following describes related frame structures based on FIG. 13 and FIG. 12.

In a possible implementation, in this embodiment of this application, the fifth frame in S701 is the second trigger frame in S801. The second trigger frame may further include the fourth indication information. The fourth indication information may be used to notify the second communication apparatus that transmit antenna selection needs to be performed. Alternatively, the fourth indication information indicates that the second trigger frame is a receive antenna selection variant. The fifth frame may further include a quantity of NDPs and/or a sixth identifier field. The sixth identifier field indicates the identifier of the first receive antenna set.

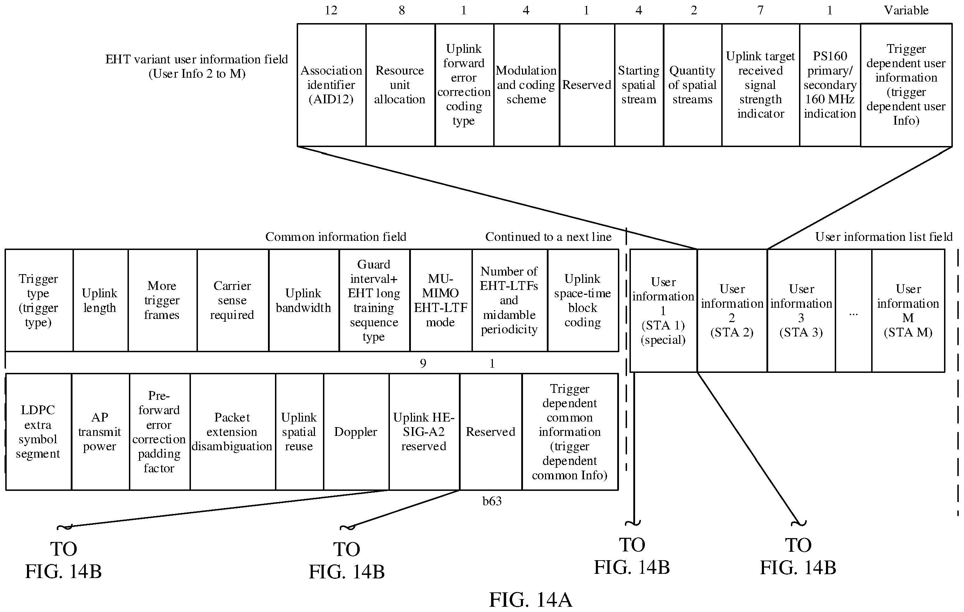

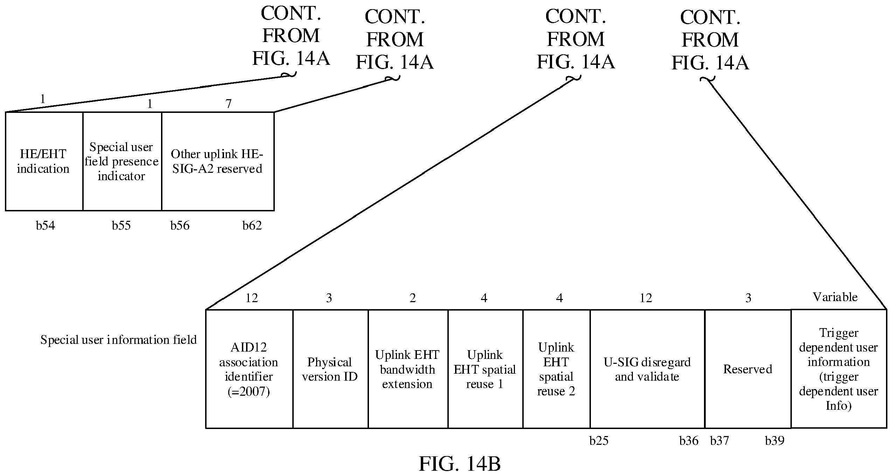

FIG. 14A and FIG. 14B are a schematic diagram of an example of a structure of a second trigger frame. In still another possible implementation, related information about receive antenna selection, such as a quantity of NDPs and/or a sixth identifier field, may be carried in some or all bits of at least one of the following content: a reserved bit of a common information field, a reserved bit of a user information list field, trigger dependent common information, or trigger dependent user information.

It can be seen from FIG. 14A and FIG. 14B that an existing trigger structure may be used for the second trigger frame, and an existing field of the second trigger frame carries content related to receive antenna selection in this embodiment of this application. As shown in FIG. 14A and FIG. 14B, the second trigger frame may include a common information field and a user and information list field.

The common information field may include at least one of the following content: a trigger type (trigger type), an uplink (uplink, UL) length (UL length), more trigger frames (more trigger frames), carrier sense required (carrier sense required), an uplink bandwidth (uplink (HE) bandwidth), a guard interval (guard interval, GI)+EHT long training sequence type (EHT-LTF Type), a multi-user multiple-input multiple-output (Multi-User Multiple-Input Multiple-Output, MU-MIMO) EHT-LTF mode, a number of EHT-LTF symbols and midamble periodicity (Number of EHT-LTF Symbols And Midamble Periodicity), uplink space-time block coding (uplink space-time block coding, UL STBC), a low-density parity-check code (Low-Density Parity-Check Code, LDPC) extra symbol segment (LDPC Extra Symbol Segment), AP transmit power (AP TX Power), pre-forward error correction padding factor (Pre-FEC Padding Factor), packet extension disambiguity (PE Disambiguity), uplink spatial reuse (UL Spatial Reuse), Doppler (Doppler), uplink HE-SIG-A2 reserved (UL HE-SIG-A2 Reserved), reserved (Reserved), and trigger dependent common information (trigger dependent common Info).

The uplink HE-SIG-A2 reserved (UL HE-SIG-A2 Reserved) may include an HE/EHT indication, a special user field presence indicator, and other uplink HE-SIG-A2 reserved (other UL HE-SIG-A2 Reserved).

The user information list field may include one or more pieces of user information, for example, user information 1, user information 2, ..., and user information M in the figure. The one or more pieces of user information may be a special user information field, or the one or more pieces of user information may be an EHT variant user information field.

The special user information field may include: an association identifier (AID12) (=2007), physical layer version identifier (physical version ID), an uplink EHT bandwidth extension (UL EHT BW Extension), uplink EHT spatial reuse 1 (UL EHT Spatial Reuse 1), uplink EHT spatial reuse 2 (UL EHT Spatial Reuse 2), universal signal field disregard and validate (U-SIG Disregard And Validate), reserved, and trigger dependent user information (trigger dependent user Info). In this embodiment of this application, information may also be abbreviated as Info, and indicates information.

The EHT variant user information field (User Info 2 to M) may include the following content: an association identifier (AID12), a resource unit allocation (RU Allocation), an uplink forward error correction coding type (UL forward error correction coding Type), a modulation and coding scheme (UL EHT-modulation and coding scheme), reserved (reserved), a start value of a spatial stream, a quantity of spatial streams, an uplink target received signal strength indicator (UL target received signal strength indicator), a PS160 primary/secondary 160 MHz indication, and trigger dependent user information (trigger dependent user Info).

Table 2 is a schematic diagram of an example of meanings of values of a trigger type of a second trigger frame shown in FIG. 14A and FIG. 14B. It can be seen from Table 2 that, in a current standard, 8 to 15 of the trigger type of the second trigger frame are reserved values. When the second trigger frame is selected as a fifth frame, a value of the trigger type of the second trigger frame may be selected from 8 to 15, so that the value of the trigger type of the second trigger frame can indicate that the second trigger frame is used for receive antenna selection. The value of the trigger type of the second trigger frame may be used as a possible implementation of the fourth indication information.

**Table 2 Schematic diagram of meanings of values of the trigger type of the second trigger frame**

| Value of the trigger type (trigger type subfield value) | Meaning of the value of the trigger type (trigger frame variant) |
|---|---|
| 0 | Basic (basic) |
| 1 | Beamforming report poll (beamforming report poll (BFRP)) |
| 2 | Multi-user block acknowledge request (multi-user block acknowledge request, MU-BAR) |
| 3 | Multi-user request to send (multi-user request to send, MU-RTS) |
| 4 | Buffer status report poll (buffer status report poll (BSRP)) |
| 5 | Groupcast with retries (groupcast with Retries, GCR) MU-BAR) |
| 6 | Bandwidth query report poll (bandwidth query report poll (BQRP)) |
| 7 | NDP feedback report poll (NDP feedback report poll (NFRP)) |
| 8 to 15 | Reserved (reserved) |

In S802, the seventh frame may be referred to as a receive antenna selection sounding request (receiver antenna selection sounding request). The seventh frame may further include a quantity of PPDUs that are requested to be sent by the second communication apparatus. In this way, the first communication apparatus may determine, based on the quantity of PPDUs carried in the seventh frame, a quantity of PPDUs that need to be subsequently sent by the second communication apparatus, so that the quantity of PPDUs that need to be subsequently sent by the second communication apparatus and that are determined by the first communication apparatus matches a requirement of the second communication apparatus as much as possible. A quantity of PPDUs sent by the second communication apparatus may be the same as or different from the quantity of PPDUs requested in the seventh frame.

The seventh frame may be carried in an MPDU in which a MAC frame header carries a high throughput control (High Throughput Control, HTC) field. The frame structure shown in FIG. 6 may be used as a frame structure of the seventh frame. A variant related to the seventh frame is a high-efficiency variant, or may be understood as that the sixth indication information is carried in the high-efficiency variant field of the seventh frame. The sixth indication information is carried in at least one of the control identifier field, the antenna selection command field, or the antenna selection data field in the A-control subfield. In this embodiment of this application, a control ID value of the control identifier field that is not used in a standard may be used to indicate a receive antenna selection procedure in this embodiment of this application. For example, the control ID value of the control identifier field may be one of 9 or 11 to 14. In this case, a length of the control information field may be a maximum of 26 bits. When the seventh frame is an MPDU, for related description and beneficial effect, refer to the related descriptions in FIG. 6. Details are not described herein again.

In S803, the first communication apparatus may send the NDPA frame based on the seventh frame sent by the second communication apparatus, or may send the NDPA frame by itself. This is not limited in this embodiment of this application. In another possible implementation, the fifth frame in S701 may be an NDPA frame. In this case, the NDPA frame may be a frame including the fourth indication information indicating the second communication apparatus to perform receive antenna channel sounding.

The fifth frame (for example, the NDPA frame) may further include a quantity of NDPs and/or a sixth identifier field. The sixth identifier field indicates the identifier of the first receive antenna set.

In a possible implementation, when the NDPA frame includes the sixth identifier field, the sixth identifier field may include all bits corresponding to the identifier of the first receive antenna set. In this way, the fifth identifier field in the second PPDU subsequently sent by the second communication apparatus may carry some bits corresponding to the identifier of the first receive antenna set, so that a quantity of bits occupied by the fifth identifier field in the second PPDU can be reduced, and the first communication apparatus may determine, based on the sixth identifier field and the fifth identifier field, all bits of the identifier of the first receive antenna set corresponding to the second PPDU.

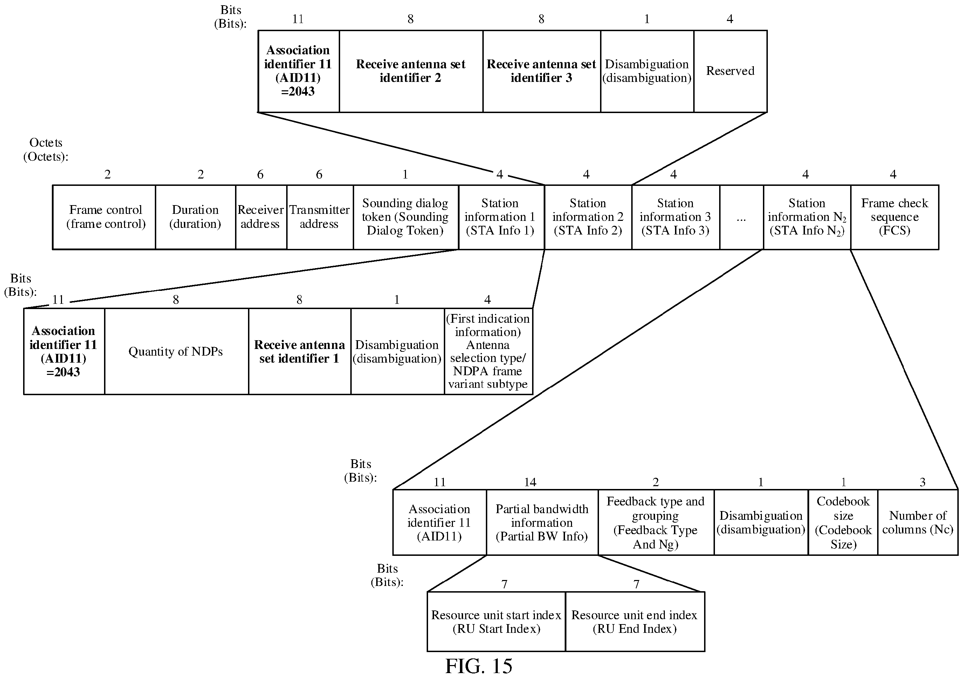

FIG. 15 is a schematic diagram of an example of a structure of a fifth frame when the fifth frame is an NDPA frame. A sixth identifier field and a quantity of NDPs are not necessarily included in the NDPA frame. In FIG. 15, an example in which the fifth frame includes the sixth identifier field, the quantity of NDPs, and fourth indication information is used for presentation. A difference between the structure of the NDPA frame shown in FIG. 15 and the structure of the NDPA frame shown in FIG. 7 lies in that in FIG. 15, an example in which an identifier of a receive antenna set is included is used for presentation, and an example in which an association identifier field is 2043 is used for presentation. For other content and beneficial effect, refer to the descriptions in FIG. 7.

Similarly, in this embodiment of this application, a specific association identifier of a station information field may indicate that information in the station information field is antenna selection related information. For example, at least one of the fourth indication information, the quantity of NDPs, or the sixth identifier field may be carried in at least one station information field that is of the fifth frame and that includes fifth indication information. The fifth indication information indicates that the station information field includes antenna selection related information. In this way, when the fifth indication information is identified, the second communication apparatus may determine that the station information field carrying the fifth indication information carries the antenna selection related information, and then obtain the antenna selection related information from the station information field. The fifth indication information may distinguish the station information field carrying the antenna selection related information from a station information field corresponding to another conventional station, so that in the solution in which the station information field carries the antenna selection related information, a station information field corresponding to a conventional station is not affected, and compatibility with the existing standard is achieved.

Similar to FIG. 7, the fifth indication information may be carried in an association identifier field in the station information field. The fifth indication information includes one of 2008 to 2043 or 2046. In this way, the second communication apparatus may determine, based on the association identifier field, whether the station information field carries the antenna selection related information or station information corresponding to another second communication apparatus. It can be learned that this solution can be better compatible with the conventional technology. The fourth indication information may also be referred to as an antenna selection type, antenna selection NDPA variant indication information, or an NDPA frame variant subtype. The fourth indication information further indicates that a variant of the NDPA frame is an antenna selection variant.

From the 802.11 ax standard to the 802.11be standard, an NDPA frame with an HT control field is no longer supported. In this embodiment of this application, the corresponding antenna selection related information is carried in the station information field, so that information required for antenna selection can be indicated. In addition, an association identifier in the association identifier field of the station information field is a special association identifier, and content of the station information field can be read by a plurality of second communication apparatuses.

In S702, the second PPDU sent by the second communication apparatus may not include a data field, for example, an NDP, or may include a data field. Descriptions are separately provided as follows.

When the second PPDU does not include the data field, a structure of the second PPDU may be the NDP structure shown in FIG. 8a or FIG. 8b. When the second PPDU is the NDP shown in FIG. 8a or FIG. 8b, the fifth identifier field is located in a preamble of the second PPDU. For example, the fifth identifier field may include some or all bits in the U-SIG, and/or some or all bits in the EHT-SIG. For related content, refer to the descriptions of FIG. 8a and FIG. 8b. Details are not described again.

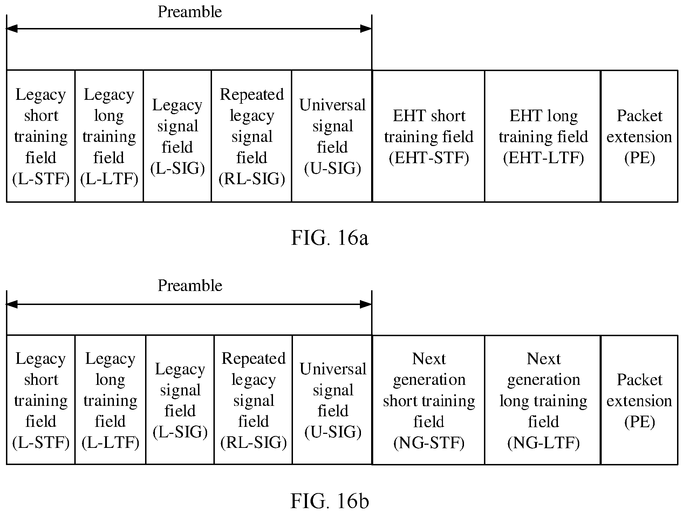

In another possible implementation, when the second PPDU does not include the data field, a structure of the second PPDU may be shown in a schematic diagram of an NDP structure shown in FIG. 16a or FIG. 16b. FIG. 16a and FIG. 16b are schematic diagrams of structures of two types of second PPDUs in which the second PPDUs are NDPs. Compared with FIG. 8a, there is no EHT-SIG field in FIG. 16a. For other fields, refer to the related descriptions in FIG. 8a. Compared with FIG. 8b, there is no NG-SIG field in FIG. 16b. For other fields, refer to the related descriptions in FIG. 8b. When the second PPDU is the NDP shown in FIG. 16a or FIG. 16b, the fifth identifier field is located in a preamble of the second PPDU. For example, the fifth identifier field may include some or all bits in the U-SIG. For example, one or more bits in B20 to B24 of a first symbol of the U-SIG and B25 of the first symbol of the U-SIG field may be used as the fifth identifier field.

When the second PPDU includes the data field, a structure of the second PPDU may be shown in the schematic diagram of the frame structure shown in FIG. 8c. When the second PPDU is the frame shown in FIG. 8c, the fifth identifier field is located in a preamble of the second PPDU. For example, the fifth identifier field may include some or all bits of at least one of the U-SIG, the EHT-SIG, or the data field. For related content, refer to the descriptions of FIG. 8a and FIG. 8b. Details are not described again.

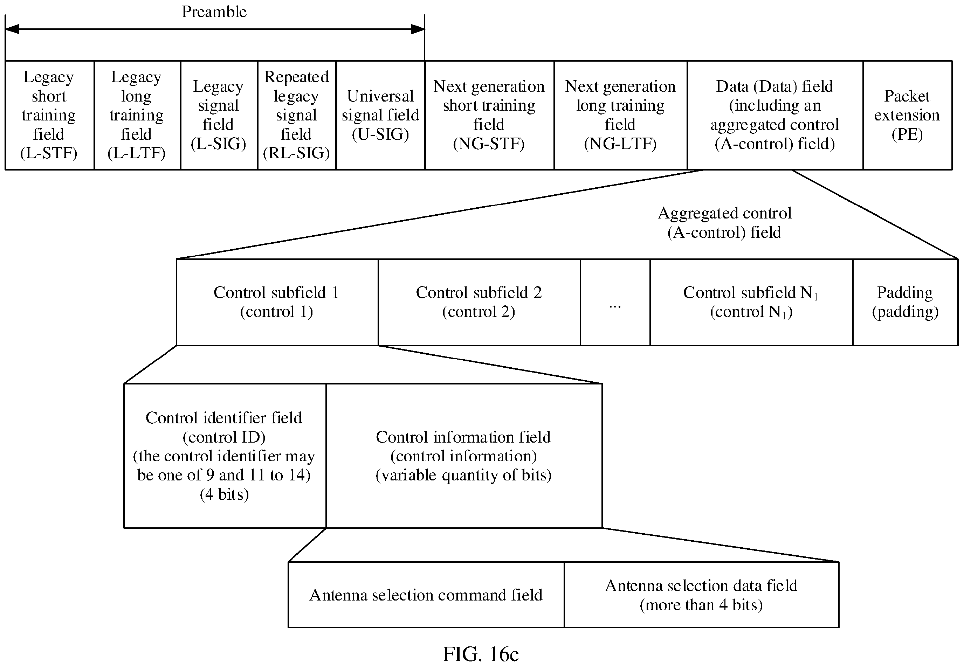

In another possible implementation, when the second PPDU includes the data field, a structure of the second PPDU may be shown in a schematic diagram of a frame structure shown in FIG. 16c. FIG. 16c is a schematic diagram of an example of a structure of a second PPDU including a data field. Compared with FIG. 8c, there is no NG-SIG field in FIG. 16c. For other fields, refer to the related descriptions in FIG. 8c. When the second PPDU is the frame structure shown in FIG. 16c, the fifth identifier field is located in a preamble of the second PPDU. For example, the fifth identifier field may include some or all bits in at least one of the U-SIG or the data field. For related content, refer to the foregoing description. Details are not described again.

In S703, the sixth frame may be a beamforming report frame, and a frame structure may be the frame structure shown in FIG. 9. For related descriptions, refer to the related descriptions in FIG. 9. The following describes the sixth frame with reference to FIG. 9.

The sixth frame may include a MIMO control control field. A seventh identifier field may include some or all bits in the MIMO control field. The seventh identifier field includes all bits corresponding to the identifier of the first receive antenna set. In this way, the second communication apparatus may determine, based on the seventh identifier field in the sixth frame, that the receive antenna set selected by the first communication apparatus is the first receive antenna set.

In a possible implementation, the seventh identifier field may include two parts: an antenna set identifier field and a sounding PPDU sequence number field. The antenna set identifier field may carry a group identifier of the first receive antenna set, and the sounding PPDU sequence number field may carry the sequence number of the second PPDU corresponding to the first receive antenna set.

In another possible implementation, the sixth frame may further include an antenna selection failure feedback field. In still another possible implementation, the sixth frame may further include at least one of a compressed beamforming report, a multi-user-specific beamforming report, and a channel quality state report. For example, the channel quality state report may include, for example, at least one of channel state information (channel state information, CSI) or channel quality information (channel quality information, CQI) corresponding to the PPDU.

One or more of the compressed beamforming report, the multi-user-specific beamforming report, and the channel quality state report may be carried in a field other than the MIMO control field in the sixth frame. Certainly, at least one of the antenna set identifier field and the sounding PPDU sequence number field that are included in the seventh identifier field may alternatively be set in another field. For example, the sounding PPDU sequence number field may be located in the A-control subfield. For other content of the sixth frame, refer to the related description in FIG. 9. Details are not described herein again.

It can be learned from the foregoing content that, in this embodiment of this application, for example, when an NDPA frame does not support a high throughput control field, a design of an antenna selection procedure for a receive antenna based on an NDPA (a fifth frame)+an NDP (a PPDU)+feedback (a sixth frame) is designed. The antenna selection procedure may match a current channel sounding procedure, devices at a receive end and a transmit end are slightly modified, and implementation is simple.

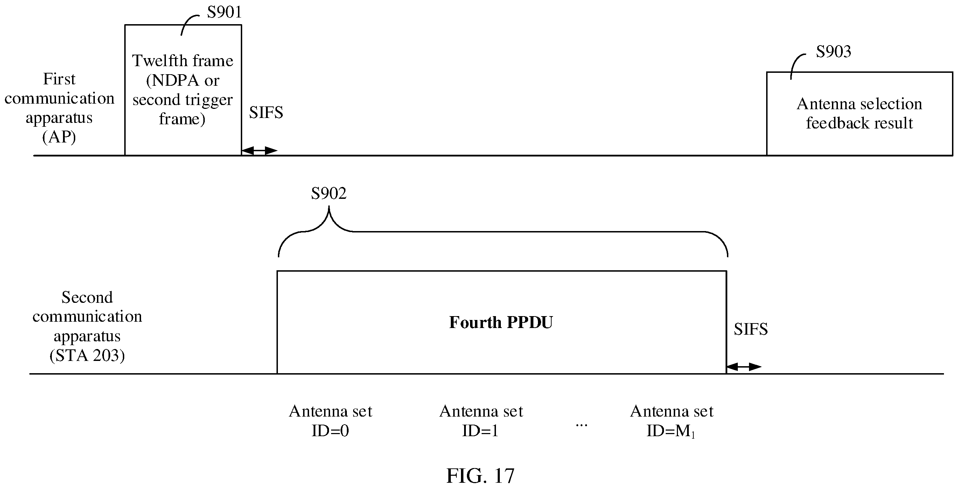

Based on the foregoing content, FIG. 17 is a schematic diagram of an example of signaling interaction of an antenna channel sounding method according to an embodiment of this application.

In FIG. 17, interaction between a first communication apparatus and a second communication apparatus is used as an example for presentation. In this embodiment of this application, the first communication apparatus may also be referred to as an antenna selection transmitter, and the second communication apparatus may also be referred to as an antenna selection responder.

The first communication apparatus in FIG. 17 may be the first communication apparatus in FIG. 1, may be the AP or the STA in FIG. 2, or may be the communication apparatus in FIG. 3. The second communication apparatus in FIG. 17 may be the second communication apparatus in FIG. 1, may be the AP or the STA in FIG. 2, or may be the communication apparatus in FIG. 3. The first communication apparatus and the second communication apparatus in FIG. 17 may be both APs, both STAs, or respectively an AP and a STA. In FIG. 17, an example in which the first communication apparatus is an AP and the second communication apparatus is a STA is used for presentation.

The solution provided in this embodiment of this application is applicable to a receive antenna channel sounding procedure between an AP and a single STA, or applicable to a receive antenna channel sounding procedure between an AP and a plurality of STAs. FIG. 17 is a schematic diagram of an example in which a receive antenna channel sounding procedure is performed between an AP and a plurality of STAs (for example, a STA 203, a STA 204, and a STA 205 in FIG. 17).

It should be noted that the solution provided in FIG. 17 is used to select a receive antenna at the first communication apparatus. The solutions provided in FIG. 4 and FIG. 10 are used to select a transmit antenna at the first communication apparatus. The solution in FIG. 17 may be used in combination with those in FIG. 4 or FIG. 10, or may be independently implemented. The solution in FIG. 4 or FIG. 10 may also be independently implemented, or may be used in combination with the solution in FIG. 17. When the solutions in FIG. 4 and FIG. 17 are used in combination, the first communication apparatus may select a transmit antenna according to the solution in FIG. 4, and select a receive antenna according to the solution in FIG. 17. When the solutions in FIG. 10 and FIG. 17 are used in combination, the first communication apparatus may select a transmit antenna according to the solution in FIG. 10, and select a receive antenna according to the solution in FIG. 17.

As shown in FIG. 17, the method includes the following steps:
**S901:** The first communication apparatus sends a twelfth frame to the second communication apparatus, where the twelfth frame includes fourth indication information, and the fourth indication information indicates the second communication apparatus to perform receive antenna channel sounding.

Correspondingly, the second communication apparatus receives the twelfth frame from the first communication apparatus.

**S902:** The second communication apparatus sends a fourth PPDU to the first communication apparatus. The fourth PPDU is used to perform receive antenna channel sounding.

Correspondingly, the first communication apparatus receives the fourth PPDU from the second communication apparatus.

The fourth PPDU may include M₂ second information fields corresponding to M₂ receive antenna sets. M₂ is an integer greater than 1. The second information field is used to perform receive antenna channel sounding.

**S903:** The first communication apparatus performs receive antenna channel sounding based on the second PPDU to obtain an second antenna selection feedback result.

Further, in S903, the first communication apparatus may further feed back a second antenna selection feedback result to the second communication apparatus.

It can be learned from the solution that, in this embodiment of this application, the second communication apparatus may aggregate PPDUs corresponding to the M₂ receive antenna sets that need to be sent in S902 into one PPDU, to reduce overheads, improve antenna selection efficiency, and improve a system throughput.

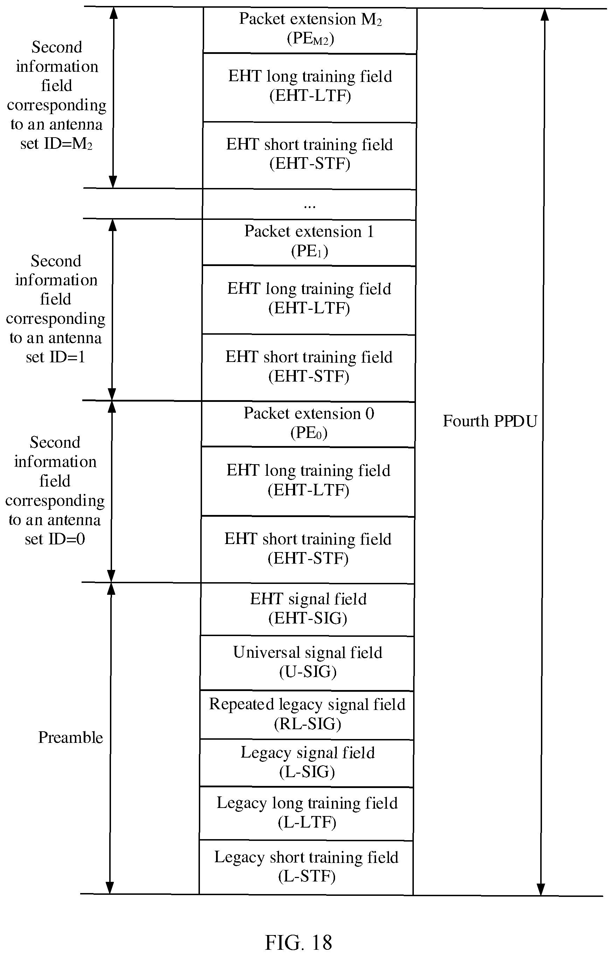

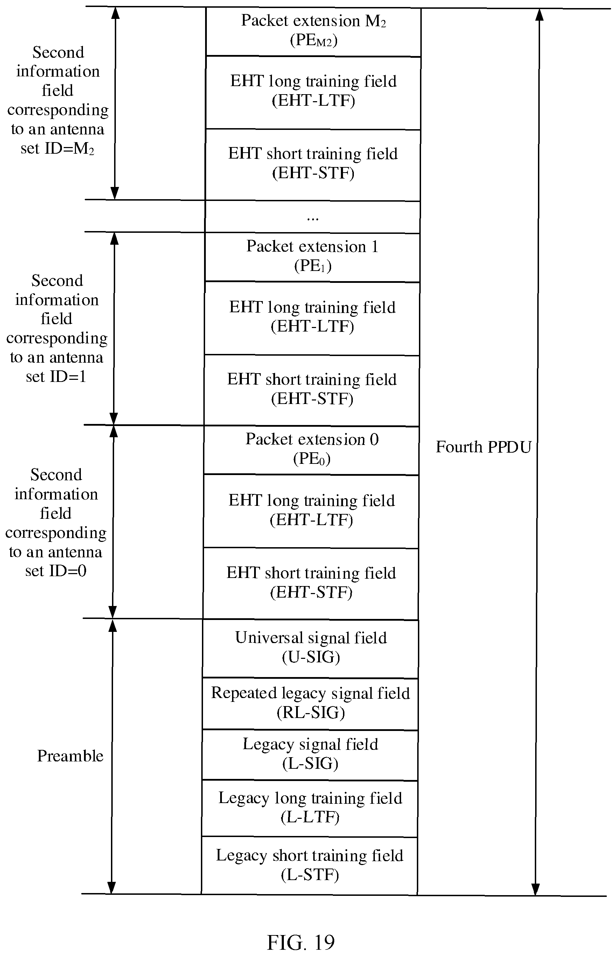

FIG. 18 and FIG. 19 are respectively schematic diagrams of examples of frame structures of two types of fourth PPDUs. Compared with FIG. 18, FIG. 19 does not include an EHT-SIG field.

As shown in FIG. 18 and FIG. 19, the fourth PPDU may include M₂ second information fields corresponding to M₂ receive antenna sets. M₂ may be an integer greater than 1. The second information field is used to perform receive antenna channel sounding.

The second information field includes at least one of an EHT short training field, an EHT long training field, and a packet extension field. Any two second information fields use different receive antenna sets. For example, three receive antenna sets shown in FIG. 18 are respectively a second information field corresponding to a receive antenna set whose antenna set ID is 0, a second information field corresponding to a receive antenna set whose antenna set ID is 1, ..., and a second information field corresponding to a receive antenna set whose antenna set ID is M₂.

As shown in FIG. 18, the fourth PPDU may further include a preamble. The preamble includes at least one of the following fields: an L-STF, an L-LTF, an L-SIG, an RL-SIG, a U-SIG, or an EHT-SIG. As shown in FIG. 19, the fourth PPDU may further include a preamble. The preamble includes at least one of the following fields: an L-STF, an L-LTF, an L-SIG, an RL-SIG, or a U-SIG. For related description of the preamble, refer to the related description in FIG. 16a. Details are not described herein again.

It can be seen from FIG. 18 and FIG. 19 that, in S902, the M₂ PPDUs corresponding to the M₂ receive antenna sets that originally need to be sent are aggregated into one fourth PPDU, so that (M₂-1) preambles can be reduced.

In addition, it can be seen from FIG. 18 that each second information field may include one packet extension field, for example, a packet extension 0 in the second information field corresponding to the antenna set ID=0 shown in FIG. 18, a packet extension 1 in the second information field corresponding to the antenna set ID=1 shown in FIG. 18, ..., and a packet extension M₂ in the second information field corresponding to the antenna set ID=M₂ shown in FIG. 18. Duration of any two data extensions in packet extensions (the packet extension 0 to the packet extension (M₂-1)) other than the last packet extension M₂ may be the same. Duration of these packet extension fields may be used to provide more processing time for the second communication apparatus. In addition, time may be provided for antenna switching by the first communication apparatus. Further, the duration may be set to a shorter value, and is sufficient for antenna switching by the first communication apparatus.

In a possible implementation, duration of packet extension fields in at least two second information fields of the M₂ second information fields may be different. For example, duration of the packet extension M₂ may be different from duration of the packet extension 1. The duration of the packet extension M₂ may be set to a slightly longer value. The duration of the packet extension 1 may be set to a slightly shorter value, and is sufficient for antenna switching by the first communication apparatus. In addition, in this implementation, duration of any two data extensions in packet extensions (the packet extension 0 to the packet extension (M₂-1)) other than the last packet extension M₂ may be the same or may be different.

In another possible implementation, duration of packet extension fields in any two of the M₂ second information fields is the same. In this way, consistency of a receiving procedure can be improved.

Compared with a solution in which the second communication apparatus transmits PPDUs corresponding to M₂ receive antennas, in the solution shown in FIG. 18, only one fourth PPDU needs to be transmitted, to achieve an objective of transmitting M₂ groups of information used to perform receive antenna channel sounding. In this solution, (M₂-1) groups of preambles (the L-STF to the EHT-SIG) and short inter-frame space SIFS can be reduced. When time of any two of the packet extension 0 to the packet extension (M₂-1) is equal, and the duration of the packet extension 0 is shorter than the duration of the packet extension M₂, a time difference between the packet extension M₂ and the packet extension 0 may be further reduced.

For example, the preamble (the L-STF to the EHT-SIG) in the fourth PPDU lasts a total of 36 microseconds, the duration of the packet extension M₂ is 16 microseconds, and SIFS lasts 16 microseconds. If time of any one of the packet extension 0 to the packet extension (M₂-1) is 4 microseconds, and M₂=64, compared with transmission of PPDUs corresponding to M₂ receive antennas (the PPDU include a preamble and one second information field, and a data extension field included in the second information field is 16 microseconds), in this case, 36×(64-1)+16×(64-1)+(16-4)×(64-1)=4032 microseconds can be reduced by transmitting the fourth PPDU.

It should be noted that FIG. 18 is merely an example of a frame structure of a possible fourth PPDU. In this example, the EHT-SIG is transmitted once. In still another possible implementation, the EHT-SIG may appear in groups. For example, each second information field includes one EHT-SIG. In addition, in FIG. 17, an example in which the second communication apparatus transmits one fourth PPDU is used for presentation. During actual application, in S902, the second communication apparatus may send one or more fourth PPDUs, and quantities of second information fields included in fourth PPDUs may be the same or may be different.

In addition, it should be noted that FIG. 17 in this embodiment of this application provides an implementation in which PPDUs sent by the second communication apparatus may be aggregated. This implementation may be used in combination with the antenna selection solution provided in FIG. 12 or FIG. 13, or may be independently implemented. The twelfth frame in S901 in this embodiment of this application may be an NDPA frame.

When this implementation is used in combination, for related content of S901, refer to the related content of S701, and for related content of the twelfth frame, refer to the related description of the fifth frame. For related content of S903, refer to the related content of S703. For related content of the antenna selection feedback result, refer to the related description of the sixth frame. When this implementation is used in combination, the quantity of NDPs mentioned in FIG. 12 or FIG. 13 may be equivalent to the quantity of second information fields mentioned in FIG. 17. When this implementation is used in combination, for a structure of the second PPDU, refer to the structure of the fourth PPDU. In other words, the second PPDU may also include second information fields corresponding to a plurality of receive antenna sets. For example, the second PPDU includes a second information field corresponding to a first receive antenna, and further includes a second information field corresponding to a second receive antenna. The first PPDU includes one preamble. In addition, the U-SIG in the preamble may be disposed in each second information field. The fifth identifier field may be carried in each second information field.

It can be understood that, to implement functions in the foregoing embodiments, the communication apparatus includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

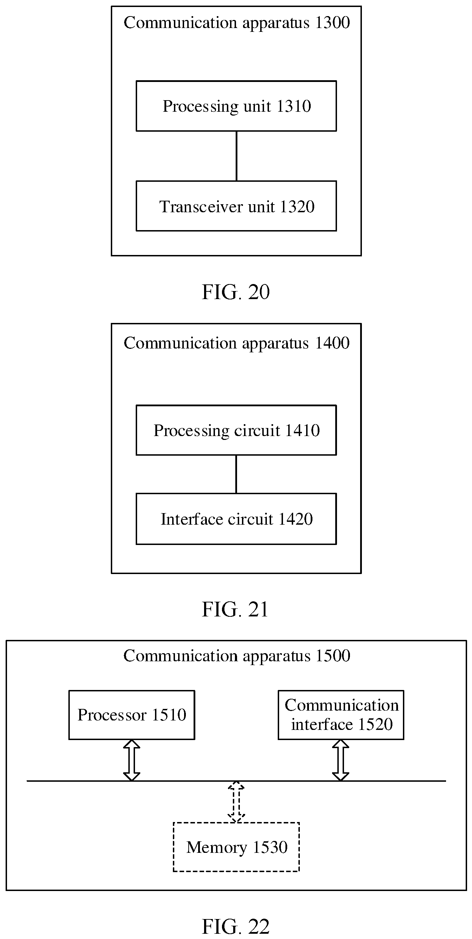

FIG. 20, FIG. 21, and FIG. 22 each are a schematic diagram of a structure of a possible communication apparatus according to an embodiment of this application. The communication apparatuses may be configured to implement the functions of the first communication apparatus in the foregoing method embodiments, and therefore can also implement beneficial effect of the foregoing method embodiments. These communication apparatuses may alternatively be configured to implement the functions of the second communication apparatus in the foregoing method embodiments, and therefore can also implement beneficial effect of the foregoing method embodiments. In these embodiments of this application, the communication apparatuses may be the transmit device or the first communication apparatus in FIG. 1, FIG. 2, FIG. 3, FIG. 4, FIG. 5, FIG. 10, FIG. 12, FIG. 13, or FIG. 17, or may be a module (for example, a chip) applied to the transmit device or the first communication apparatus. In these embodiments of this application, the communication apparatuses may be the receive device or the second communication apparatus in FIG. 1, FIG. 2, FIG. 3, FIG. 4, FIG. 5, FIG. 10, FIG. 12, FIG. 13, or FIG. 17, or may be a module (for example, a chip) applied to the receive device or the second communication apparatus.

As shown in FIG. 20, the communication apparatus 1300 includes a processing unit 1310 and a transceiver unit 1320. The communication apparatus 1300 is configured to implement a function of the first communication apparatus in the method embodiment shown in FIG. 4, FIG. 5, FIG. 10, FIG. 12, FIG. 13, or FIG. 17.

When the communication apparatus 1300 is configured to implement the function of the first communication apparatus in the method embodiment shown in FIG. 4 or FIG. 5, the processing unit 1310 is configured to: send a first frame to a second communication apparatus and send a first PPDU to the second communication apparatus by using the transceiver unit 1320. The first frame includes first indication information. The first indication information indicates the second communication apparatus to perform transmit antenna channel sounding. The first PPDU is an NDP. The first PPDU is used by the second communication apparatus to perform transmit antenna channel sounding. The first PPDU includes a first identifier field. The first identifier field indicates an identifier of a first transmit antenna set.

When the communication apparatus 1300 is configured to implement the function of the first communication apparatus in the method embodiment shown in FIG. 4 or FIG. 5, the processing unit 1310 is further configured to receive a second frame from the second communication apparatus by using the transceiver unit 1320. The second frame includes the first antenna selection feedback result. The first antenna selection feedback result includes a third identifier field. The third identifier field indicates the identifier of the first transmit antenna set.

When the communication apparatus 1300 is configured to implement the function of the first communication apparatus in the method embodiment shown in FIG. 4 or FIG. 5, the processing unit 1310 is configured to send a fourth frame to the second communication apparatus by using the transceiver unit 1320. The fourth frame includes a fourth identifier field. The fourth identifier field indicates an identifier of at least one transmit antenna set supported by the first communication apparatus. The identifier of the at least one transmit antenna set includes the identifier of the first transmit antenna set.

When the communication apparatus 1300 is configured to implement the function of the first communication apparatus in the method embodiment shown in FIG. 4 or FIG. 5, the processing unit 1310 is configured to send a ninth frame to the second communication apparatus by using the transceiver unit 1320. The ninth frame includes seventh indication information. The seventh indication information indicates the total quantity of transmit antenna sets supported by the first communication apparatus.

When the communication apparatus 1300 is configured to implement the function of the first communication apparatus in the method embodiment shown in FIG. 10, the processing unit 1310 is configured to send an eleventh frame to the second communication apparatus by using the transceiver unit 1320. The eleventh frame includes first indication information. The first indication information indicates the second communication apparatus to perform transmit antenna channel sounding. The first communication apparatus sends a third PPDU to the second communication apparatus. The third PPDU is used by the second communication apparatus to perform transmit antenna channel sounding. The third PPDU includes M₁ first information fields corresponding to M₁ transmit antenna sets. M₁ is an integer greater than 1. The first information field is used to perform transmit antenna channel sounding. The first information field includes at least one of an EHT short training field, an EHT long training field, and a packet extension field.

When the communication apparatus 1300 is configured to implement the function of the first communication apparatus in the method embodiment shown in FIG. 12 or FIG. 13, the processing unit 1310 is configured to: send a fifth frame to the second communication apparatus and receive a second PPDU from the second communication apparatus by using the transceiver unit 1320. The fifth frame includes fourth indication information. The fourth indication information indicates to perform receive antenna channel sounding on the first communication apparatus. The second PPDU to the first communication apparatus is an NDP. The second PPDU is used by the first communication apparatus to perform receive antenna channel sounding. The second PPDU includes a fifth identifier field. The fifth identifier field indicates an identifier of a first receive antenna set.

When the communication apparatus 1300 is configured to implement the function of the first communication apparatus in the method embodiment shown in FIG. 17, the processing unit 1310 is configured to: send a twelfth frame to the second communication apparatus and receive a fourth PPDU from the second communication apparatus by using the transceiver unit 1320. The twelfth frame includes the fourth indication information. The fourth indication information indicates to perform receive antenna channel sounding on the first communication apparatus. The fourth PPDU is used by the second communication apparatus to perform receive antenna channel sounding. The fourth PPPDU includes M₂ second information fields corresponding to M₂ receive antenna sets. M₂ is an integer greater than 1. The second information field is used to perform receive antenna channel sounding. The second information field includes at least one of an EHT short training field, an EHT long training field, and a packet extension field.

As shown in FIG. 20, the communication apparatus 1300 includes a processing unit 1310 and a transceiver unit 1320. The communication apparatus 1300 is configured to implement a function of the second communication apparatus in the method embodiment shown in FIG. 4, FIG. 5, FIG. 10, FIG. 12, FIG. 13, or FIG. 17.

When the communication apparatus 1300 is configured to implement the function of the second communication apparatus in the method embodiment shown in FIG. 4 or FIG. 5, the processing unit 1310 is configured to: receive a first frame from a first communication apparatus and receive a first PPDU from the first communication apparatus by using the transceiver unit 1320. The first frame includes first indication information. The first indication information indicates the second communication apparatus to perform transmit antenna channel sounding. The first PPDU is an NDP. The first PPDU is used by the second communication apparatus to perform transmit antenna channel sounding. The first PPDU includes a first identifier field. The first identifier field indicates an identifier of a first transmit antenna set.

When the communication apparatus 1300 is configured to implement the function of the second communication apparatus in the method embodiment shown in FIG. 4 or FIG. 5, the processing unit 1310 is further configured to: perform transmit antenna channel sounding based on the first PPDU by using the transceiver unit 1320, to obtain a first antenna selection feedback result; and send a second frame by using the transceiver unit 1320. The second frame includes the first antenna selection feedback result. The first antenna selection feedback result includes a third identifier field. The third identifier field indicates the identifier of the first transmit antenna set.

When the communication apparatus 1300 is configured to implement the function of the second communication apparatus in the method embodiment shown in FIG. 4 or FIG. 5, the processing unit 1310 is specifically configured to receive a fourth frame from the first communication apparatus by using the transceiver unit 1320. The fourth frame includes a fourth identifier field. The fourth identifier field indicates an identifier of at least one transmit antenna set supported by the first communication apparatus. The identifier of the at least one transmit antenna set includes the identifier of the first transmit antenna set.

When the communication apparatus 1300 is configured to implement the function of the second communication apparatus in the method embodiment shown in FIG. 4 or FIG. 5, the processing unit 1310 is specifically configured to receive a ninth frame from the first communication apparatus by using the transceiver unit 1320. The ninth frame includes seventh indication information. The seventh indication information indicates the total quantity of transmit antenna sets supported by the first communication apparatus.

When the communication apparatus 1300 is configured to implement the function of the second communication apparatus in the method embodiment shown in FIG. 10, the processing unit 1310 is configured to: receive an eleventh frame from the first communication apparatus and receive a third PPDU from the first communication apparatus by using the transceiver unit 1320. The eleventh frame includes first indication information. The first indication information indicates the second communication apparatus to perform transmit antenna channel sounding. The third PPDU is used by the second communication apparatus to perform transmit antenna channel sounding. The third PPDU includes M₁ first information fields corresponding to M₁ transmit antenna sets. M₁ is an integer greater than 1. The first information field is used to perform transmit antenna channel sounding. The first information field includes at least one of an EHT short training field, an EHT long training field, and a packet extension field.

When the communication apparatus 1300 is configured to implement the function of the second communication apparatus in the method embodiment shown in FIG. 12 or FIG. 13, the processing unit 1310 is configured to: receive a fifth frame from the first communication apparatus by using the transceiver unit 1320, where the fifth frame includes fourth indication information, and the fourth indication information indicates to perform receive antenna channel sounding on the first communication apparatus; and sends a second PPDU to the first communication apparatus by using the transceiver unit 1320. The second PPDU is a null data packet NDP. The second PPDU is used by the first communication apparatus to perform receive antenna channel sounding. The second PPDU includes a fifth identifier field. The fifth identifier field indicates an identifier of a first receive antenna set.

When the communication apparatus 1300 is configured to implement the function of the second communication apparatus in the method embodiment shown in FIG. 17, the processing unit 1310 is configured to: receive a twelfth frame from the first communication apparatus by using the transceiver unit 1320, where the twelfth frame includes the fourth indication information, and the fourth indication information indicates to perform receive antenna channel sounding on the first communication apparatus; and send a fourth PPDU to the first communication apparatus by using the transceiver unit 1320. The fourth PPDU is used by the second communication apparatus to perform receive antenna channel sounding. The fourth PPDU includes M₂ second information fields corresponding to M₂ receive antenna sets. M₂ is an integer greater than 1. The second information field is used to perform receive antenna channel sounding. The second information field includes at least one of an EHT short training field, an EHT long training field, and a packet extension field.

For more detailed descriptions of the processing unit 1310 and the transceiver unit 1320, directly refer to related descriptions in the method embodiment shown in FIG. 4, FIG. 5, FIG. 10, FIG. 12, FIG. 13, or FIG. 17. Details are not described herein again.

As shown in FIG. 21, the communication apparatus 1400 includes a processing circuit 1410 and an interface circuit 1420. The processing circuit 1410 and the interface circuit 1420 are coupled to each other. It can be understood that the interface circuit 1420 may be a transceiver or an input/output interface. Optionally, the communication apparatus 1400 may further include a memory, configured to store instructions executed by the processing circuit, or store input data required by the processing circuit 1410 to run instructions, or store data generated after the processing circuit 1410 runs instructions.

When the communication apparatus 1400 is configured to implement the method shown in FIG. 4, FIG. 5, FIG. 10, FIG. 12, FIG. 13, or FIG. 17, the processing circuit 1410 is configured to implement a function of the processing unit 1310, and the interface circuit 1420 is configured to implement a function of the transceiver unit 1320.

As shown in FIG. 22, the communication apparatus 1500 includes a processor 1510 and a communication interface 1520. The processor 1510 and the communication interface 1520 are coupled to each other. It can be understood that the communication interface 1520 may be a transceiver or an input/output interface. Optionally, the communication apparatus 1500 may further include a memory 1530, configured to store instructions executed by the processor 1510, or store input data required by the processor 1510 to run instructions, or store data generated after the processor 1510 runs instructions.

When the communication apparatus 1500 is configured to implement the method shown in FIG. 4, FIG. 5, FIG. 10, FIG. 12, FIG. 13, or FIG. 17, the processor 1510 is configured to implement a function of the processing unit 1310, and the communication interface 1520 is configured to implement a function of the transceiver unit 1320.

When the communication apparatus 1500 is configured to implement the function of the first communication apparatus in the method embodiment shown in FIG. 4 or FIG. 5, the processor 1510 is configured to: send a first frame to the second communication apparatus by using the communication interface 1520, where the first frame includes first indication information, and the first indication information indicates the second communication apparatus to perform transmit antenna channel sounding; and send a first PPDU to the second communication apparatus by using the communication interface 1520. The first PPDU is a null data packet NDP. The first PPDU is used by the second communication apparatus to perform transmit antenna channel sounding. The first PPDU includes a first identifier field. The first identifier field indicates an identifier of a first transmit antenna set.

When the communication apparatus 1500 is configured to implement the function of the first communication apparatus in the method embodiment shown in FIG. 10, the processor 1510 is configured to: send an eleventh frame to the second communication apparatus by using the communication interface 1520, where the eleventh frame includes first indication information, and the first indication information indicates the second communication apparatus to perform transmit antenna channel sounding; and send a third PPDU to the second communication apparatus by using the communication interface 1520. The third PPDU is used by the second communication apparatus to perform transmit antenna channel sounding. The third PPDU includes M₁ first information fields corresponding to M₁ transmit antenna sets. M₁ is an integer greater than 1. The first information field is used to perform transmit antenna channel sounding. The first information field includes at least one of an EHT short training field, an EHT long training field, and a packet extension field.

When the communication apparatus 1500 is configured to implement the function of the first communication apparatus in the method embodiment shown in FIG. 12 or FIG. 13, the processor 1510 is configured to: send a fifth frame to the second communication apparatus by using the communication interface 1520, where the fifth frame includes fourth indication information, and the fourth indication information indicates to perform receive antenna channel sounding on the first communication apparatus; and receive a second physical layer protocol data unit PPDU from the second communication apparatus by using the communication interface 1520. The second PPDU is a null data packet NDP. The second PPDU is used by the first communication apparatus to perform receive antenna channel sounding. The second PPDU includes a fifth identifier field. The fifth identifier field indicates an identifier of a first receive antenna set.

When the communication apparatus 1500 is configured to implement the function of the first communication apparatus in the method embodiment shown in FIG. 17, the processor 1510 is configured to: send a twelfth frame to the second communication apparatus by using the communication interface 1520, where the twelfth frame includes the fourth indication information, and the fourth indication information indicates to perform receive antenna channel sounding on the first communication apparatus; and receive a fourth physical layer protocol data unit PPDU from the second communication apparatus by using the communication interface 1520. The fourth PPDU is used by the second communication apparatus to perform receive antenna channel sounding. The fourth PPPDU includes M₂ second information fields corresponding to M₂ receive antenna sets. M₂ is an integer greater than 1. The second information field is used to perform receive antenna channel sounding. The second information field includes at least one of an EHT short training field, an EHT long training field, and a packet extension field.

When the communication apparatus 1500 is configured to implement the function of the second communication apparatus in the method embodiment shown in FIG. 4 or FIG. 5, the processor 1510 is configured to: receive a first frame from the first communication apparatus by using the communication interface 1520, where the first frame includes first indication information, and the first indication information indicates the second communication apparatus to perform transmit antenna channel sounding; and receive a first physical layer protocol data unit PPDU from the first communication apparatus by using the communication interface 1520. The first PPDU is a null data packet NDP. The first PPDU is used by the second communication apparatus to perform transmit antenna channel sounding. The first PPDU includes a first identifier field. The first identifier field indicates an identifier of a first transmit antenna set.

When the communication apparatus 1500 is configured to implement the function of the first communication apparatus in the method embodiment shown in FIG. 10, the processor 1510 is configured to: receive an eleventh frame from the first communication apparatus by using the communication interface 1520, where the eleventh frame includes first indication information, and the first indication information indicates the second communication apparatus to perform transmit antenna channel sounding; and receive a third physical layer protocol data unit PPDU from the first communication apparatus by using the communication interface 1520. The third PPDU is used by the second communication apparatus to perform transmit antenna channel sounding. The third PPDU includes M₁ first information fields corresponding to M₁ transmit antenna sets. M₁ is an integer greater than 1. The first information field is used to perform transmit antenna channel sounding. The first information field includes at least one of an EHT short training field, an EHT long training field, and a packet extension field.

When the communication apparatus 1500 is configured to implement the function of the second communication apparatus in the method embodiment shown in FIG. 12 or FIG. 13, the processor 1510 is configured to: receive a fifth frame from the first communication apparatus by using the communication interface 1520, where the fifth frame includes fourth indication information, and the fourth indication information indicates to perform receive antenna channel sounding on the first communication apparatus; and send a second physical layer protocol data unit PPDU to the first communication apparatus by using the communication interface 1520. The second PPDU is a null data packet NDP. The second PPDU is used by the first communication apparatus to perform receive antenna channel sounding. The second PPDU includes a fifth identifier field. The fifth identifier field indicates the identifier of the first receive antenna set.

When the communication apparatus 1500 is configured to implement the function of the second communication apparatus in the method embodiment shown in FIG. 17, the processor 1510 is configured to: receive a twelfth frame from the first communication apparatus by using the communication interface 1520, where the twelfth frame includes the fourth indication information, and the fourth indication information indicates to perform receive antenna channel sounding on the first communication apparatus; and send a fourth physical layer protocol data unit PPDU to the first communication apparatus by using the communication interface 1520. The fourth PPDU is used by the second communication apparatus to perform receive antenna channel sounding. The fourth PPDU includes M₂ second information fields corresponding to M₂ receive antenna sets. M₂ is an integer greater than 1. The second information field is used to perform receive antenna channel sounding. The second information field includes at least one of an EHT short training field, an EHT long training field, and a packet extension field.

When the communication apparatus is a chip used in the communication apparatus, the chip in the communication apparatus implements the functions of the communication apparatus in the foregoing method embodiments. The chip in the communication apparatus receives information from another module (for example, a radio frequency module or an antenna) in the communication apparatus, where the information is sent by a network device to the communication apparatus; or the chip in the communication apparatus sends information to another module (for example, a radio frequency module or an antenna) in the communication apparatus, where the information is sent by the communication apparatus to a network device.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, any regular processor, or the like.

According to the method provided in this application, an embodiment of this application further provides a computer program product. The computer program product includes a computer program or instructions. When the computer program or the instructions are run on a computer, the computer is enabled to perform the method in any one of embodiments shown in FIG. 4, FIG. 5, FIG. 10, FIG. 12, FIG. 13, or FIG. 17.

According to the method provided in embodiments of this application, this application further provides a computer-readable storage medium. The computer-readable medium stores a program or instructions. When the program or the instructions are run on a computer, the computer is enabled to perform the method in any one of embodiments shown in FIG. 4, FIG. 5, FIG. 10, FIG. 12, FIG. 13, or FIG. 17.

According to the method provided in embodiments of this application, this application further provides a chip system. The chip system may include a processing circuit and an interface circuit. The processing circuit may perform, by using the interface circuit, the method in any one of the embodiments shown in FIG. 4, FIG. 5, FIG. 10, FIG. 12, FIG. 13, or FIG. 17. Optionally, the chip system further includes the memory. The memory is configured to store a computer program (which may also be referred to as code or instructions). The processing circuit may be configured to invoke a computer program from a memory and run the computer program, so that a device in which a chip system is installed performs the method in any one of the embodiments shown in FIG. 4, FIG. 5, FIG. 10, FIG. 12, FIG. 13, or FIG. 17.

According to the method provided in embodiments of this application, this application further provides a system, including the foregoing first communication apparatus and the foregoing second communication apparatus.

The method steps in embodiments of this application may be implemented in a hardware manner, or may be implemented in a manner of executing software instructions by the processor. The software instructions may include a corresponding software module. The software module may be stored in a random access memory (Random Access Memory, RAM), a flash (flash) memory, a read-only memory (Read-Only Memory, ROM), a programmable read-only memory, an erasable programmable read-only memory (Erasable Programmable ROM, EPROM), an electrically erasable programmable read-only memory, a register, a hard disk, a solid-state drive (solid-state drive, SSD), a removable hard disk, a portable read-only memory (Compact Disc Read-Only Memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a communication apparatus. Certainly, the processor and the storage medium may exist in the communication apparatus as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, a user device, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

"A plurality of" in this application refers to two or more than two. The term "and/or" describes an association relationship between associated objects, and represents that three relationships may exist. For example, A and/or B may represent the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, or C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. An antenna channel sounding method, comprising:
sending, by a first communication apparatus, a first frame to a second communication apparatus, wherein the first frame comprises first indication information, and the first indication information indicates the second communication apparatus to perform transmit antenna channel sounding; and
sending, by the first communication apparatus, a first physical layer protocol data unit PPDU to the second communication apparatus, wherein the first PPDU is a null data packet NDP, the first PPDU is used by the second communication apparatus to perform transmit antenna channel sounding, the first PPDU comprises a first identifier field, and the first identifier field indicates an identifier of a first transmit antenna set.

2. The method according to claim 1, wherein after the sending, by the first communication apparatus, a first PPDU to the second communication apparatus, the method further comprises:
receiving, by the first communication apparatus, a second frame from the second communication apparatus, wherein the second frame comprises a first antenna selection feedback result, the first antenna selection feedback result comprises a third identifier field, and the third identifier field indicates the identifier of the first transmit antenna set.

3. The method according to claim 1 or 2, wherein before the sending, by a first communication apparatus, a first frame to a second communication apparatus, the method further comprises:
sending, by the first communication apparatus, a fourth frame to the second communication apparatus, wherein the fourth frame comprises a fourth identifier field, the fourth identifier field indicates an identifier of at least one transmit antenna set supported by the first communication apparatus, and the identifier of the at least one transmit antenna set comprises the identifier of the first transmit antenna set.

4. The method according to any one of claims 1 to 3, wherein before the sending, by a first communication apparatus, a first frame to a second communication apparatus, the method further comprises:
sending, by the first communication apparatus, a ninth frame to the second communication apparatus, wherein the ninth frame comprises seventh indication information, and the seventh indication information indicates a total quantity of transmit antenna sets supported by the first communication apparatus.

5. An antenna channel sounding method, comprising:
receiving, by a second communication apparatus, a first frame from a first communication apparatus, wherein the first frame comprises first indication information, and the first indication information indicates the second communication apparatus to perform transmit antenna channel sounding; and
receiving, by the second communication apparatus, a first physical layer protocol data unit PPDU from the first communication apparatus, wherein the first PPDU is a null data packet NDP, the first PPDU is used by the second communication apparatus to perform transmit antenna channel sounding, the first PPDU comprises a first identifier field, and the first identifier field indicates an identifier of a first transmit antenna set.

6. The method according to claim 5, wherein after the receiving, by the second communication apparatus, a first PPDU, the method further comprises:
performing, by the second communication apparatus, transmit antenna channel sounding based on the first PPDU to obtain a first antenna selection feedback result; and
sending, by the second communication apparatus, a second frame, wherein the second frame comprises the first antenna selection feedback result, the first antenna selection feedback result comprises a third identifier field, and the third identifier field indicates the identifier of the first transmit antenna set.

7. The method according to claim 5 or 6, wherein before the receiving, by a second communication apparatus, a first frame, the method further comprises:
receiving, by the second communication apparatus, a fourth frame from the first communication apparatus, wherein the fourth frame comprises a fourth identifier field, the fourth identifier field indicates an identifier of at least one transmit antenna set supported by the first communication apparatus, and the identifier of the at least one transmit antenna set comprises the identifier of the first transmit antenna set.

8. The method according to any one of claims 5 to 7, wherein before the receiving, by a second communication apparatus, a first frame, the method further comprises:
receiving, by the second communication apparatus, a ninth frame from the first communication apparatus, wherein the ninth frame comprises seventh indication information, and the seventh indication information indicates a total quantity of transmit antenna sets supported by the first communication apparatus.

9. The method according to any one of claims 1 to 8, wherein the first identifier field is located in a preamble of the first PPDU.

10. The method according to any one of claims 1 to 9, wherein the first frame further comprises a quantity of NDPs; and/or
the first frame further comprises a second identifier field, and the second identifier field indicates the identifier of the first transmit antenna set.

11. The method according to claim 10, wherein the first indication information and/or the quantity of NDPs are/is carried in at least one station information field that is of the first frame and that comprises second indication information, and the second indication information indicates that the station information field comprises antenna selection related information; and/or
the second identifier field comprises some or all bits in the at least one station information field that is of the first frame and that comprises the second indication information.

12. The method according to claim 11, wherein the second indication information is carried in an association identifier field in the station information field.

13. The method according to any one of claims 1 to 12, wherein the first transmit antenna set is one of k₁ transmit antenna sets of the first communication apparatus, and k₁ is a positive integer; and
the k₁ transmit antenna sets are in a one-to-one correspondence with identifiers of the k₁ transmit antenna sets.

14. A communication apparatus, comprising:
a transceiver unit, configured to send a first frame to a second communication apparatus, wherein the first frame comprises first indication information, and the first indication information indicates the second communication apparatus to perform transmit antenna channel sounding; and
the transceiver unit is further configured to send a first physical layer protocol data unit PPDU to the second communication apparatus, wherein the first PPDU is a null data packet NDP, the first PPDU is used by the second communication apparatus to perform transmit antenna channel sounding, the first PPDU comprises a first identifier field, and the first identifier field indicates an identifier of a first transmit antenna set.

15. The communication apparatus according to claim 14, wherein after the communication apparatus sends the first PPDU to the second communication apparatus, the method further comprises:
receiving a second frame from the second communication apparatus, wherein the second frame comprises a first antenna selection feedback result, the first antenna selection feedback result comprises a third identifier field, and the third identifier field indicates the identifier of the first transmit antenna set.

16. The communication apparatus according to claim 14 or 15, wherein before the communication apparatus sends the first frame to the second communication apparatus, the method further comprises:
sending a fourth frame to the second communication apparatus, wherein the fourth frame comprises a fourth identifier field, the fourth identifier field indicates an identifier of at least one transmit antenna set supported by the communication apparatus, and the identifier of the at least one transmit antenna set comprises the identifier of the first transmit antenna set.

17. The communication apparatus according to any one of claims 14 to 16, wherein before the communication apparatus sends the first frame to the second communication apparatus, the method further comprises:
sending a ninth frame to the second communication apparatus, wherein the ninth frame comprises seventh indication information, and the seventh indication information indicates a total quantity of transmit antenna sets supported by the communication apparatus.

18. A communication apparatus, comprising:
a transceiver unit, configured to receive a first frame from a first communication apparatus, wherein the first frame comprises first indication information, and the first indication information indicates the communication apparatus to perform transmit antenna channel sounding; and
the transceiver unit is further configured to receive a first physical layer protocol data unit PPDU from the first communication apparatus, wherein the first PPDU is a null data packet NDP, the first PPDU is used by the communication apparatus to perform transmit antenna channel sounding, the first PPDU comprises a first identifier field, and the first identifier field indicates an identifier of a first transmit antenna set.

19. The communication apparatus according to claim 18, wherein after the communication apparatus receives the first PPDU, the method further comprises:
performing, by the communication apparatus, transmit antenna channel sounding based on the first PPDU to obtain a first antenna selection feedback result; and
sending a second frame, wherein the second frame comprises the first antenna selection feedback result, the first antenna selection feedback result comprises a third identifier field, and the third identifier field indicates the identifier of the first transmit antenna set.

20. The communication apparatus according to claim 18 or 19, wherein before the communication apparatus receives the first frame, the method further comprises:
receiving a fourth frame from the first communication apparatus, wherein the fourth frame comprises a fourth identifier field, the fourth identifier field indicates an identifier of at least one transmit antenna set supported by the first communication apparatus, and the identifier of the at least one transmit antenna set comprises the identifier of the first transmit antenna set.

21. The communication apparatus according to any one of claims 18 to 20, wherein before the communication apparatus receives the first frame, the method further comprises:
receiving a ninth frame from the first communication apparatus, wherein the ninth frame comprises seventh indication information, and the seventh indication information indicates a total quantity of transmit antenna sets supported by the first communication apparatus.

22. The communication apparatus according to any one of claims 14 to 21, wherein the first identifier field is located in a preamble of the first PPDU.

23. The communication apparatus according to any one of claims 14 to 22, wherein the first frame further comprises a quantity of NDPs; and/or
the first frame further comprises a second identifier field, and the second identifier field indicates the identifier of the first transmit antenna set.

24. The communication apparatus according to claim 23, wherein the first indication information and/or the quantity of NDPs are/is carried in at least one station information field that is of the first frame and that comprises second indication information, and the second indication information indicates that the station information field comprises antenna selection related information; and/or
the second identifier field comprises some or all bits in the at least one station information field that is of the first frame and that comprises the second indication information.

25. The communication apparatus according to claim 24, wherein the second indication information is carried in an association identifier field in the station information field.

26. The communication apparatus according to any one of claims 14 to 25, wherein the first transmit antenna set is one of k₁ transmit antenna sets of the first communication apparatus, and k₁ is a positive integer; and
the k₁ transmit antenna sets are in a one-to-one correspondence with identifiers of the k₁ transmit antenna sets.

27. A communication apparatus, comprising a processor and a communication interface, wherein the processor is configured to perform the method according to any one of claims 1 to 13 through the communication interface.

28. A communication apparatus, wherein the apparatus comprises a processing unit and a transceiver unit; and
the processing unit is configured to perform the method according to any one of claims 1 to 13 by using the transceiver unit.

29. A computer-readable storage medium, wherein the computer-readable storage medium stores computer-executable instructions; and when the computer-executable instructions are invoked by a computer, the method according to any one of claims 1 to 13 is performed.

30. A chip system, comprising a processing circuit and an interface circuit, wherein
the interface circuit is configured to input and/or output signaling or data; and
the processing circuit is configured to execute a computer-executable program, so that a device on which the chip system is installed performs the method according to any one of claims 1 to 13.

31. A computer program product comprising program instructions, wherein when the program instructions are run on a computer, the computer is enabled to perform the method according to any one of claims 1 to 13.
